(19) Europäisches Patentamt
European Patent Office
Office européen des brevets

(11) EP 4 317 201 A1

(12) # EUROPEAN PATENT APPLICATION
published in accordance with Art. 153(4) EPC

(43) Date of publication:
**07.02.2024 Bulletin 2024/06**

(21) Application number: **22781300.3**

(22) Date of filing: **31.03.2022**

(51) International Patent Classification (IPC):
***C08F 4/70*** *(2006.01)* ***C08F 4/80*** *(2006.01)*
***C08F 210/02*** *(2006.01)*

(52) Cooperative Patent Classification (CPC):
**C07F 15/04; C08F 4/70; C08F 4/80; C08F 210/00; C08F 210/02**

(86) International application number:
**PCT/JP2022/016854**

(87) International publication number:
**WO 2022/211091 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2021 JP 2021060496**

(71) Applicant: **Japan Polychem Corporation**
**Tokyo 100-8251 (JP)**

(72) Inventor: **MITSUSHIGE, Yusuke**
**Yokkaichi-shi, Mie 510-0848 (JP)**

(74) Representative: **Müller-Boré & Partner Patentanwälte PartG mbB**
**Friedenheimer Brücke 21**
**80639 München (DE)**

(54) **POLYMERIZATION CATALYST FOR OLEFIN-BASED POLYMER**

(57) A method for producing an olefin polymer includes polymerizing an olefin in the presence of a catalyst composition including a compound represented by the general formula (A) or (B) and a transition metal compound represented by the general formula (C), or in the presence of a metal complex represented by the general formula (D) (the general formulas are defined in the specification). The olefin polymerization catalyst is capable of catalyzing copolymerization of an olefin and a vinyl monomer with high activity and high comonomer incorporation efficiency to achieve a high molecular weight. The olefin polymer production method uses the catalyst.

EP 4 317 201 A1

## Description

### Technical Field

The present invention relates to a polymerization catalyst for the production of olefin polymers. In particular, the present invention relates to a polymerization catalyst containing a specific ligand. Furthermore, the present invention also relates to a method for producing an olefin polymer using the catalyst.

### Background Art

Copolymers of an olefin that is a nonpolar monomer, such as ethylene or propylene, and a vinyl monomer having a polar group have functions and characteristics that are not shared by nonpolar polyethylenes and polypropylenes. From this point of view, extensive studies are underway that impart functionality to polyethylenes and polypropylenes by copolymerization of ethylene or propylene with a polar vinyl monomer.
A catalyst that includes a palladium complex having an α-diimine ligand has been reported as a transition metal catalyst capable of catalyzing copolymerization of ethylene or propylene with a polar group-containing vinyl monomer (Non Patent Literature 1). For example, so-called SHOP catalysts that include a nickel complex in which a ligand has a phosphorus atom and an oxygen atom as coordinating atoms (Patent Literature 1, Patent Literature 2, Non Patent Literature 2, and Non Patent Literature 3), and catalysts that include a palladium complex having a phosphinosulfonic acid ligand (Non Patent Literature 4 and Non Patent Literature 5) have been reported as transition metal catalysts for catalyzing copolymerization of ethylene and an acrylic acid ester.
Patent Literature 4 and Non Patent Literature 6 report that a linear ethylene-(meth)acrylic acid ester copolymer having less branches is obtained by using a nickel catalyst obtained by reacting a ligand having a phosphorus atom and an oxygen atom as coordinating atoms with bis-1,5-cyclooctadiene nickel ($Ni(cod)_2$) as a transition metal compound. Furthermore, Patent Literature 5 reports copolymerization of ethylene with a polar group-containing monomer in the presence of a catalyst that includes a nickel complex obtained by reacting allylnickel chloride dimer with a monovalent anionic bidentate ligand having an alkylene ligand skeleton as a non-aromatic skeleton and having a phosphorus atom and an oxygen atom as coordinating atoms.
Non Patent Literature 7 reports oligomerization of ethylene catalyzed by a nickel catalyst obtained by reacting bis-1,5-cyclooctadiene nickel with a monovalent anionic bidentate ligand having an alkylene ligand skeleton as a non-aromatic skeleton and having a phosphorus atom and an oxygen atom as coordinating atoms.
Non Patent Literature 8 reports oligomerization of ethylene catalyzed by a nickel catalyst obtained by reacting a nickel complex with a monovalent anionic bidentate ligand having a non-aromatic skeleton and having a phosphorus atom and a sulfur atom as coordinating atoms.

### Citation List

#### Patent Literature

Patent Literature 1: U.S. Patent No. 4,698,403
Patent Literature 2: Japanese Patent Application Kokai Publication No. S64-14217
Patent Literature 3: U.S. Patent Application Publication No. 2007/0049712
Patent Literature 4: WO 2010/050256
Patent Literature 5: WO 2001/092342


#### Non Patent Literature

Non Patent Literature 1: Mecking, S.; Johnson, L. K.; Wang, L.; Brookhart, M. J., Am. Chem. Soc. 1998, 120, 888-899.
Non Patent Literature 2: Ittel, S. D.; Johnson, L. K.; Brookhart, M., Chem. Rev. 2000, 100, 1169-1203.
Non Patent Literature 3: Gibson, V. C.; Tomov, A.; White, A. J. P.; Williams, D. J., Chem. Commun. 2001, 719-720.
Non Patent Literature 4: Drent, E.; van Dijk, R.; van Ginkel, R.; van Oort, B.; Pugh, R. I., Chem. Commun. 2002, 744-745.
Non Patent Literature 5: Kochi, T.; Yoshimura, K.; Nozaki, K., DaltonTrans. 2006, 25-27.
Non Patent Literature 6: Xin. B. S.; Sato, N.; Tanna, A.; Oishi, Y.; Konishi, Y.; Shimizu, F. J., Am. Chem. Soc. 2017,

139, 3611-3614.
Non Patent Literature 7: Mueller, U.; Keim, W.; Krueger, C.; Betz, P. Angew. Chem. Int. Ed. Engl. 1989, 28, 1011-1013.
Non Patent Literature 8: H.-F. Klein et al., Inorganica Chimica Acta 358 (2005) 4394-4402

## Summary of Invention

### Technical Problem

As described above, numerous olefinic polymerization catalysts are known. However, the skeletons of the ligands used in Patent Literature 4 and Non Patent Literature 6 are aromatic, and there is room for improvement in the molecular weight of copolymers obtained by copolymerization with an acrylic acid ester. Furthermore, the catalyst of Patent Literature 5 is low in the levels of catalytic performances, such as activity and molecular weight, and also entails an expensive activator, such as triphenylborane or tris(pentafluorophenyl)borane. Non Patent Literature 7 only describes that oligomers are obtained and is silent about polymerization activity. While the complex is isolated in the disclosure, the complex isolated does not exhibit polymerization performance. Non Patent Literature 8 only teaches that the catalyst may afford a low-density polyethylene, and does not give much information about the performance of the catalyst.

Under such circumstances, objects of the present invention are to provide an olefin polymerization catalyst capable of catalyzing copolymerization of an olefin and a (polar group-containing) vinyl monomer with high activity and high comonomer incorporation efficiency to achieve a high molecular weight, and to provide an olefin polymer production method using the catalyst.

### Solution to Problem

The present inventors have found that a monovalent anionic bidentate ligand which has an alkylene with a specific structure as a ligand skeleton and has Group 15 and Group 16 elements, in particular, a nitrogen atom or a phosphorus atom, and an oxygen atom as coordinating atoms may be combined with a specific nickel compound and/or a specific palladium compound to form an olefin polymerization catalyst having high levels of activity, molecular weight, and polar monomer incorporation efficiency. The present inventors have completed the present invention based on the finding.

Specifically, the first aspect of the present invention provides an olefin polymerization catalyst composition comprising a compound represented by the general formula (A) below and a transition metal compound represented by the general formula (B) or (C) below,

[Chem. 1]

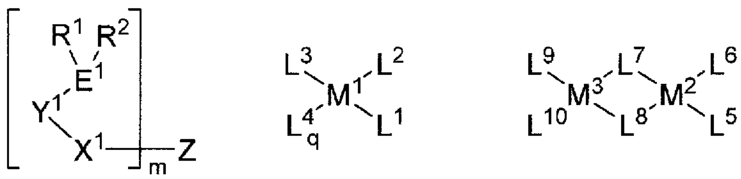

General formula (A) General formula (B) General formula (C)

[in the formula (A),

$X^1$ represents an oxygen atom or a sulfur atom,
$E^1$ represents a nitrogen atom, a phosphorus atom, an arsenic atom, or an antimony atom,
$R^1$ and $R^2$ each independently represent a hydrogen atom or a substituted or unsubstituted C1-C20 hydrocarbon group (except a methyl group) optionally containing at least one heteroatom,
$Y^1$ is a substituted or unsubstituted C1-C5 divalent saturated hydrocarbon group optionally containing at least one heteroatom,
m is an integer greater than or equal to 1 and less than or equal to the valence of Z, and Z is a hydrogen atom, a leaving group, or a cation having a valence of 1 or more and 4 or less],
[in the formula (B),
$M^1$ represents a nickel atom or a palladium atom,
$L^1$, $L^2$, $L^3$, and $L^4$ each represent a ligand coordinated to $M^1$,

q is 0, 1, or 2, and
$L^1$ and $L^2$, or $L^3$ and $L^4$ are optionally bonded to each other to form a ring including $M^1$, and the minimum number of ring members of the ring is 5 to 10 including $M^1$], and [in the formula (C),
$M^2$ and $M^3$ each independently represent a nickel atom or a palladium atom,
$L^5$, $L^6$, $L^7$, $L^8$, $L^9$, and $L^{10}$ each represent a ligand coordinated to $M^2$ or $M^3$,
$L^5$ and $L^6$ are optionally bonded to each other to form a ring including $M^2$, the minimum number of ring members of the ring is 5 to 10 including $M^2$, $L^9$ and $L^{10}$ are optionally bonded to each other to form a ring including $M^3$, and the minimum number of ring members of the ring is 5 to 10 including $M^3$].

The second aspect of the present invention provides a metal complex represented by the general formula (D) below:

[Chem. 2]

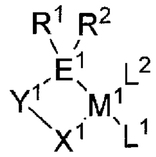

General formula (D)

[in the formula (D), $R^1$, $R^2$, $X^1$, $Y^1$, $E^1$, $M^1$, $L^1$, and $L^2$ are the same as defined hereinabove] .

According to the third aspect of the present invention, the olefin polymerization catalyst composition described in the first aspect of the present invention is such that the general formula (A) is represented by the general formula (E) below:

[Chem. 3]

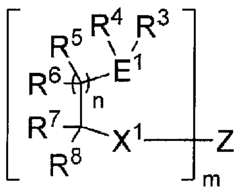

General formula (E)

[in the formula (E),

$R^3$ and $R^4$ each independently represent a hydrogen atom or a substituted or unsubstituted C1-C20 hydrocarbon group optionally containing at least one heteroatom,
$R^5$, $R^6$, $R^7$, and $R^8$ each independently represent an atom or a group selected from the group consisting of (i) to (iv) below:

(i) hydrogen atom,
(ii) halogen atom,
(iii) C1-C30 hydrocarbon group optionally containing at least one heteroatom, and
(iv) $OR^b$, $CO_2R^b$, $CO_2M'$, $C(O)N(R^a)_2$, $C(O)R^b$, $SR^b$, $SO_2R^b$, SORb, $OSO_2R^b$, $P(O)(OR^b)_{2-y}(R^a)_y$, CN, $NHR^a$, $N(R^b)_2$, $Si(OR^a)_{3-x}(R^a)_x$, $OSi(OR^a)_{3-x}(R^a)_x$, $NO_2$, $SO_3M'$, $PO_3M'_2$, $P(O)(OR^b)_2M'$, and epoxy-containing groups (wherein $R^a$ represents hydrogen or a C1-C20 hydrocarbon group, $R^b$ represents a C1-C20 hydrocarbon group, M' represents an alkali metal, an alkaline earth metal, ammonium, quaternary ammonium, or phosphonium, x represents an integer of 0 to 3, and y represents an integer of 0 to 2), and adjacent groups of $R^5$, $R^6$, $R^7$, and $R^8$ are optionally bonded to one another to form a 5- to 8-membered alicyclic or aromatic ring, or a 5- to 8-membered heterocyclic ring containing at least one heteroatom selected from oxygen atom, nitrogen atom, and sulfur atom,

n is an integer of 0 to 4, and
$X^1$, $E^1$, m, and Z are the same as defined hereinabove].

According to the fourth aspect of the present invention, the metal complex described in the second aspect of the present invention is such that the general formula (D) is represented by the general formula (F) below:

[Chem. 4]

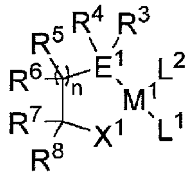

General formula (F)

[in the formula (F), $R^3$, $R^4$, $R^5$, $R^6$, $R^7$, $R^8$, n, $X^1$, $E^1$, $M^1$, $L^1$, and $L^2$ are the same as defined hereinabove].

According to the fifth aspect of the present invention, the olefin polymerization catalyst composition described in the third aspect of the present invention is such that at least one of $R^7$ or $R^8$ is an atom or a group selected from the group consisting of (i), (iii), and (iv) described above.

According to the sixth aspect of the present invention, the metal complex described in the fourth aspect of the present invention is such that at least one of $R^7$ or $R^8$ is an atom or a group selected from the group consisting of (i), (iii), and (iv) described above.

According to the seventh aspect of the present invention, the olefin polymerization catalyst composition described in the third or the fifth aspect is such that $R^7$ is an atom or a group selected from the group consisting of (i) and (iii) described above, and $R^8$ is an atom or a group selected from the group consisting of (i), (iii), $CO_2R^b$, $C(O)N(R^a)_2$, $C(O)R^b$, $SO_2R^b$, and $P(O)(OR^b)_{2-y}(R^a)_y$ (wherein $R^a$, $R^b$, and y are the same as defined hereinabove).

According to the eighth aspect of the present invention, the metal complex described in the fourth or the sixth aspect is such that $R^7$ is an atom or a group selected from the group consisting of (i) and (iii) described above, and $R^8$ is an atom or a group selected from the group consisting of (i), (iii), $CO_2R^b$, $C(O)N(R^a)_2$, $C(O)R^b$, $SO_2R^b$, and $P(O)(OR^b)_{2-y}(R^a)_y$ (wherein $R^a$, $R^b$, and y are the same as defined hereinabove).

According to the ninth aspect of the present invention, the olefin polymerization catalyst composition described in any of the third, the fifth, and the seventh aspects of the present invention is such that at least one of $R^5$ or $R^6$ is an atom or a group selected from the group consisting of (i), (iii), and (iv) described above.

According to the tenth aspect of the present invention, the metal complex described in any of the fourth, the sixth, and the eighth aspects of the present invention is such that at least one of $R^5$ or $R^6$ is an atom or a group selected from the group consisting of (i), (iii), and (iv) described above.

According to the eleventh aspect of the present invention, the olefin polymerization catalyst composition described in any of the third, the fifth, the seventh, and the ninth aspects of the present invention is such that at least one of $R^5$ or $R^6$ is a hydrogen atom.

According to the twelfth aspect of the present invention, the metal complex described in any of the fourth, the sixth, the eighth, and the tenth aspects of the present invention is such that at least one of $R^5$ or $R^6$ is a hydrogen atom.

According to the thirteenth aspect of the present invention, the olefin polymerization catalyst composition described in any of the first, the third, the fifth, the seventh, the ninth, and the eleventh aspects of the present invention is such that $X^1$ is an oxygen atom.

According to the fourteenth aspect of the present invention, the metal complex described in any of the second, the fourth, the sixth, the eighth, the tenth, and the twelfth aspects of the present invention is such that $X^1$ is an oxygen atom.

According to the fifteenth aspect of the present invention, the olefin polymerization catalyst composition described in any of the first, the third, the fifth, the seventh, the ninth, the eleventh, and the thirteenth aspects of the present invention is such that $E^1$ is a nitrogen atom or a phosphorus atom.

According to the sixteenth aspects of the present invention, the metal complex described in any of the second, the fourth, the sixth, the eighth, the tenth, the twelfth, and the fourteenth aspects of the present invention is such that $E^1$ is a nitrogen atom or a phosphorus atom.

According to the seventeenth aspect of the present invention, the olefin polymerization catalyst composition described in any of the third, the fifth, the seventh, the ninth, the eleventh, the thirteenth, and the fifteenth aspects of the present invention is such that n is an integer of 0 to 2.

According to the eighteenth aspect of the present invention, the metal complex described in any of the fourth,

the sixth, the eighth, the tenth, the twelfth, the fourteenth, and the sixteenth aspects is such that n is an integer of 0 to 2.

According to the nineteenth aspect of the present invention, the olefin polymerization catalyst composition described in any of the third, the fifth, the seventh, the ninth, the eleventh, the thirteenth, the fifteenth, and the seventeenth aspects of the present invention is such that n is 1.

According to the twentieth aspect of the present invention, the metal complex described in any of the fourth, the sixth, the eighth, the tenth, the twelfth, the fourteenth, the sixteenth, and the eighteenth aspects of the present invention is such that n is 1.

According to the twenty-first aspect of the present invention, the olefin polymerization catalyst composition described in any of the first, the third, the fifth, the seventh, the ninth, the eleventh, the thirteenth, the fifteenth, the seventeenth, and the nineteenth aspects of the present invention is such that $M^1$, $M^2$, and $M^3$ are nickel atoms.

According to the twenty-second aspect of the present invention, the metal complex described in any of the second, the fourth, the sixth, the eighth, the tenth, the twelfth, the fourteenth, the sixteenth, the eighteenth, and the twentieth aspects of the present invention is such that $M^1$ is a nickel atom.

Furthermore, the twenty-third aspect of the present invention provides an olefin polymerization catalyst comprising the olefin polymerization catalyst composition described in any of the first, the third, the fifth, the seventh, the ninth, the eleventh, the thirteenth, the fifteenth, the seventeenth, the nineteenth, and the twenty-first aspects of the present invention.

Furthermore, the twenty-fourth aspect of the present invention provides an olefin polymerization catalyst comprising the metal complex described in any of the second, the fourth, the sixth, the eighth, the tenth, the twelfth, the fourteenth, the sixteenth, the eighteenth, the twentieth, and the twenty-second aspects of the present inventions.

The twenty-fifth aspect of the present invention provides a method for producing an olefin polymer comprising polymerizing an olefin in the presence of the olefin polymerization catalyst described in the twenty-third or the twenty-fourth aspect of the present invention.

According to the twenty-sixth aspect of the present invention, the method for producing an olefin polymer described in the twenty-fifth aspect of the present invention is such that the olefin is copolymerized with at least one monomer selected from polar group-containing monomers and nonpolar cyclic olefins.

Advantageous Effects of Invention

The olefin polymerization catalyst according to the present invention can catalyze copolymerization of an olefin and a (polar group-containing) vinyl monomer with high activity and high comonomer incorporation efficiency to achieve a high molecular weight. The method for producing an olefin polymer involves the catalyst.

Description of Embodiments

An aspect of the present invention resides in a composition for olefin polymerization including a compound represented by the general formula (A) below and a transition metal compound represented by the general formula (B) or (C) below:

[Chem. 5]

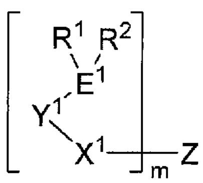

General formula (A)

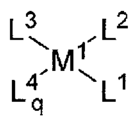

General formula (B)

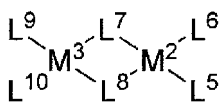

General formula (C)

the substituents, the subscripts, and other symbols in the above formulas are the same as defined hereinabove].

Monomers for constituting polymers, catalyst components, production methods, and other features will be described in detail hereinbelow.

In the following description, the term "polymerization" means a reaction in which a monomer forms an eicosamer or higher polymer. The term "polymerization" is a general term indicating homopolymerization of a single monomer and copolymerization of a plurality of monomers. In the present specification, copolymerization is sometimes written simply as "polymerization". While an aspect of the present invention pertains to a polymer production method, the structure of a polymer itself cannot in general be uniquely specified by a chemical formula or the like. Thus, where necessary, the present specification describes a polymer using the description of the production method.

1. Metal catalysts

A first olefin polymerization catalyst used in the present invention is a composition that includes a compound represented by the general formula (A) below and a transition metal compound represented by the general formula (B) or (C) below:

[Chem. 6]

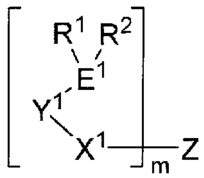

General formula (A)

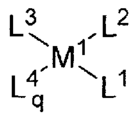

General formula (B)

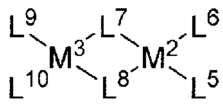

General formula (C)

[the substituents, the subscripts, and other symbols in the above formulas are the same as defined hereinabove].

In the general formula (A), $X^1$ represents an oxygen atom or a sulfur atom. That is, the ligand used in the method of the present invention has one Group 16 element as a monovalent anionic coordinating atom. $X^1$ is preferably an oxygen atom for the reason that a wide variety of compounds may be used as the ligands.

In the general formula (A), $E^1$ represents a nitrogen atom, a phosphorus atom, an arsenic atom, or an antimony atom. That is, the ligand used in the present invention has one Group 15 element as a neutral coordinating atom. $E^1$ is preferably a nitrogen atom or a phosphorus atom for the reasons that a wide variety of compounds may be used as the ligands, and that the compound exhibits good coordination with a late transition metal element, such as nickel or palladium.

In the general formula (A), $R^1$ and $R^2$ each independently represent a hydrogen atom or a substituted or unsubstituted C1-C20 hydrocarbon group (except a methyl group) optionally containing at least one heteroatom. The hydrocarbon group optionally containing at least one heteroatom indicates a hydrocarbon group that is substituted by an appropriate substituent in place of one or more hydrogen atoms and in which part of the carbon skeleton is substituted by a heteroatom. Examples of the C1-C20 hydrocarbon groups containing at least one heteroatom include hydrocarbon groups containing at least one oxygen atom, sulfur atom, or nitrogen atom. In the present specification, a "substituted or unsubstituted" group indicates that the group may be substituted by an appropriate substituent in place of one or more hydrogen atoms in the group. Examples of the substituents include halogens, alkyl groups (preferably C1-C12 alkyl groups, more preferably ethyl, isopropyl, t-butyl, 3-pentyl, and 2,6-dimethyl-4-heptyl groups), haloalkyl groups (preferably having 2 to 10 carbon atoms), alkenyl groups (preferably having 2 to 10 carbon atoms), alkynyl groups (preferably having 2 to 10 carbon atoms), cycloalkyl groups (preferably C3-C10 cycloalkyl groups, more preferably cyclopentyl, cyclohexyl, cycloheptyl, 1-adamantyl, and (1R,2S,SR)-2-isopropyl-5-methylcyclohexan-1-yl groups), alkoxy groups (preferably having 2 to 9 carbon atoms), aryl groups (preferably C6-C14 aryl groups, more preferably phenyl, 2-methoxyphenyl, and 2,6-dimethoxyphenyl groups), aryloxy groups (preferably having 6 to 14 carbon atoms), ether groups (preferably having 1 to 14 carbon atoms), thiol groups (preferably having 1 to 14 carbon atoms), sulfide groups (preferably having 1 to 14 carbon atoms), halogenated aryl groups (preferably having 6 to 14 carbon atoms), heterocyclic rings (preferably having 5 to 14 carbon atoms), amino groups (preferably having 1 to 14 carbon atoms), amide groups (preferably having 1 to 14 carbon atoms), alkylcarbonyl groups (preferably having 1 to 14 carbon atoms), arylcarbonyl groups (preferably having 6 to 14 carbon atoms), ketocarbonyl groups (preferably having 2 to 14 carbon atoms), alkoxycarbonyl groups (preferably having 2 to 14 carbon atoms), carboxyl groups, sulfonyl groups (preferably having 1 to 14 carbon atoms), and sulfonic acid groups. The substitution may occur at any position without limitation. Any number of substitutions may occur at any positions.

Specific examples of $R^1$ and $R^2$ include hydride group (hydrogen atom), ethyl group, n-propyl group, isopropyl group, n-butyl group, isobutyl group, t-butyl group, 3-pentyl group, n-hexyl group, n-octyl group, n-decyl group, n-dodecyl group, 2,6-dimethyl-4-heptyl group, trifluoromethyl group, cyclopentyl group, cyclohexyl group, cycloheptyl group, norbornyl group, adamantyl group, (1R,2S,SR)-2-isopropyl-5-methylcyclohexan-1-yl group (menthyl group), methoxy group, ethoxy group, t-butoxy group, cyclohexyloxy group, phenyl group, p-methylphenyl group, benzyl group, phenoxy group, pyridinyl group, pyrrolyl group, 2-methoxyphenyl group, 2,6-diethylphenyl group (DEP), 2,6-dimethoxyphenyl group (DMP), 2',6'-dimethoxy[1,1'-biphenyl]-2-yl group, dimethylamino group, diethylamino group, diisopropylamino group, diphenylamino group, trimethylsilyl group, triethylsilyl group, and triphenylsilyl group.

Preferred examples of $R^1$ and $R^2$ include n-propyl group, isopropyl group, isobutyl group, t-butyl group, 3-pentyl group, 2,6-dimethyl-4-heptyl group, cyclopentyl group, cyclohexyl group, cycloheptyl group, norbornyl group, adamantyl group, (1R,2S,SR)-2-isopropyl-5-methylcyclohexan-1-yl group (menthyl group), phenyl group, 2-methoxyphenyl group,

2,6-diethylphenyl group (DEP), 2,6-dimethoxyphenyl group (DMP), and 2',6'-dimethoxy[1,1'-biphenyl]-2-yl group. More preferred examples include t-butyl group, 3-pentyl group, 2,6-dimethyl-4-heptyl group, cyclopentyl group, cyclohexyl group, adamantyl group, menthyl group, phenyl group, 2-methoxyphenyl group, 2,6-diethylphenyl group (DEP), 2,6-dimethoxyphenyl group (DMP), and 2',6'-dimethoxy[1,1'-biphenyl]-2-yl group. Still more preferred examples include phenyl group, isopropyl group, t-butyl group, adamantyl group, menthyl group, 2,6-diethylphenyl group (DEP), and 2,6-dimethoxyphenyl group (DMP). When $R^1$ and $R^2$ are phenyl groups and $Y^1$ is an ethylene group, the carbon atom directly bonded to $E^1$ may not have two groups $-CF_3$.

In the general formula (A), $Y^1$ is a substituted or unsubstituted C1-C5 divalent saturated hydrocarbon group optionally containing at least one heteroatom. Examples of $Y^1$ include linear hydrocarbon groups, such as methylene group ($-CH_2-$), ethylene group ($-CH_2CH_2-$), n-propylene group ($-CH_2CH_2CH_2-$), n-butylene group ($-CH_2CH_2CH_2CH_2-$), and n-pentene group ($-CH_2CH_2CH_2CH_2CH_2-$), and derivatives thereof resulting from substitution by an appropriate substituent in place of one or more hydrogen atoms, such as difluoromethylene group ($-CF_2-$), tetrafluoroethylene group ($-CF_2CF_2-$), and hexafluoro-n-propylene group ($-CF_2CF_2CF_2-$). Examples of the substituents are the same as described hereinabove. Substituents at two or more positions are optionally linked to one another to form a ring, such as an alicyclic structure, a heterocyclic structure, or an aromatic ring. It is preferable that $Y^1$ have at least one substituent. It is more preferable that the substituent be an electron-withdrawing substituent. It is still more preferable that the carbon atom adjacent to $X^1$ have an electron-withdrawing substituent. The introduction of an electron-withdrawing substituent offers steric control through the bulkiness of the substituent itself, and also allows for control of the electronic state of $X^1$ toward electron deficiency. As a result of the introduction, the composition used as a polymerization catalyst tends to exhibit higher performance. To ensure that the compound constitutes a stable ring structure when formed into a nickel or palladium complex, the number of carbon atoms in the moiety ($Y^1$) connecting $E^1$ to $X^1$ is preferably 2 (ethylene group) or 3 (n-propylene group).

In the general formula (A), Z is a hydrogen atom, a leaving group, or a cation having a valence of 1 or more and 4 or less, and m is an integer greater than or equal to 1 and less than or equal to the valence of Z. When m is 1, Z may be, for example, a hydrogen atom, a lithium ion, a sodium ion, or a potassium ion. When m is 2, Z may be, for example, a magnesium ion, a calcium ion, or a zinc ion. Examples of the leaving groups include hydrogen atom, $R^bSO_2$ groups (where $R^b$ represents a C1-C20 hydrocarbon group), $CF_3SO_2$ group, and $TiOR^b$ groups. Specific examples of the cations include ammonium, quaternary ammonium, phosphonium, and ions of Group 1 to Group 14 metals in the periodic table. Among those described above, hydrogen atom, $NH^{4+}$, $(R^9)_4N^+$ (Here, $R^9$ is the same as described hereinabove, and the four $R^9$s may be the same as or different from one another. The same applies hereinafter.), $(R^9)_4P^+$, $Li^+$, $Na^+$, $K^+$, $Cu^+$, $Ag^+$, $Au^+$, $Mg^{2+}$, $Ca^{2+}$, and $Al^{3+}$ are preferable, and hydrogen atom, $(R^9)_4N^+$, $Li^+$, $Na^+$, $K^+$, and $Ag^+$ are more preferable.

$M^1$, $M^2$, and $M^3$ in the general formula (B) or (C) are each independently a nickel atom or a palladium atom belonging to Group 10 in the periodic table. Here, the valence of the metal M means the formal oxidation number used in organometallic chemistry. Specifically, the valence indicates the number of charges that remain on an atom of the element when an electron pair in a bond between elements is assigned to the element having higher electronegativity. A nickel atom is preferable for the reason that nickel is available at low cost.

$L^1$ to $L^6$, $L^9$, and $L^{10}$ in the general formula (B) or (C) represent -1 valent electron-donating ligands or neutral electron-donating ligands that are coordinated to any of the metal atoms $M^1$ to $M^3$. The -1 valent electron-donating ligand is a ligand that is electrically negative and is $\sigma$-bonded to the central metal M, or donates $\pi$-electrons delocalized on 3 or more carbon atoms. As an example, the neutral electron-donating ligand is a ligand that is electrically neutral and is capable of forming a coordinate bond of its unpaired electron to the central metal M; this ligand is a molecule having an atom with an unpaired electron, such as nitrogen atom, phosphorus atom, arsenic atom, oxygen atom, sulfur atom, or selenium atom. As another example, the neutral electron-donating ligand may be a molecule that donates $\pi$ electrons to form a $\pi$-dative bond, such as ethylene or cyclooctadiene (cod), or may be a molecule that has an olefin and a heteroatom both coordinating to a metal, such as dibenzylideneacetone (dba). Examples of the materials usable as $L^1$ to $L^6$, $L^9$, and $L^{10}$ include those known as neutral ligands in metal complexes, such as acetonitrile, isonitrile, carbon monoxide, ethylene, and tetrahydrofuran, and ligands that donate $\pi$ electrons, such as allyl and cyclopentadienyl. Furthermore, molecules represented by $E^2R'R''R'''$ or $X^2R'R''$ may also be used as the ligands. Here, $E^2$ represents N, P, or As; $X^2$ represents O, S, or Se; R', R'', and R''' each independently represent a hydrogen atom, an optionally substituted C1-C30 alkyl, alicyclic, alkoxy, aryl, or aryloxy group, or each independently an amino or silyl group substituted by a C1-C30 hydrocarbon in place of one or more hydrogen atoms; R' and R'' are optionally linked to each other to form a heterocyclic structure; and R', R'', and R''' are optionally bonded to one another to form an aromatic heterocyclic structure including $E^2$. Furthermore, $L^1$ and $L^2$, $L^3$ and $L^4$, $L^5$ and $L^6$, and $L^9$ and $L^{10}$ are each optionally bonded to each other to form a ring including $M^2$ or $M^3$; when these groups form rings, the minimum number of ring members of the ring is 5 to 10 including M.

$L^1$ to $L^6$, $L^9$, and $L^{10}$ may have -1 valent electron-donating ligands. In order to facilitate the reaction for forming the metal complex, these ligands are preferably selected so that the valence of the metal complex will be 1 or 2.

Specifically, the number of the -1 valent electron-donating ligands in $L^1$ to $L^6$, $L^9$, and $L^{10}$ is preferably 0 or 1.

Examples of $L^1$ to $L^6$, $L^9$, and $L^{10}$ include hydrogen atoms, halogen atoms, and C1-C20 hydrocarbon groups optionally containing one or more heteroatoms. The structure of the hydrocarbon moiety may be linear, branched, or cyclic, and may form a ring containing a heteroatom. The number of carbon atoms is preferably 1 to 16, and more preferably 1 to 10.

Specific examples of $L^1$ to $L^6$, $L^9$, and $L^{10}$ each independently include hydride group, methyl group, ethyl group, n-propyl group, isopropyl group, n-butyl group, isobutyl group, neopentyl group, n-hexyl group, n-octyl group, n-decyl group, n-dodecyl group, cyclopentyl group, cyclohexyl group, benzyl group, trimethylsilylmethyl group, phenyl group, p-methylphenyl group, p-fluorophenyl group, trimethylsilyl group, triethylsilyl group, triphenylsilyl group, fluoride group, chloride group, bromide group, and iodo group. Preferred examples include hydride group, methyl group, neopentyl group, benzyl group, trimethylsilylmethyl group, phenyl group, p-fluorophenyl group, chloride group, bromide group, and iodo group.

Preferred examples further include phosphines, pyridines, piperidines, alkyl ethers, aryl ethers, alkyl aryl ethers, cyclic ethers, alkyl nitrile derivatives, aryl nitrile derivatives, alcohols, amides, aliphatic esters, aromatic esters, amines, and cyclic unsaturated hydrocarbons. More preferred examples include phosphines, pyridines, cyclic ethers, aliphatic esters, aromatic esters, and cyclic olefins. Particularly preferred examples include trialkylphosphines, triarylphosphines, pyridine, lutidine (dimethylpyridine), picoline (methylpyridine), and $R^bCO_2^-$ (where $R^b$ is the same as defined hereinabove). $L^1$ and $L^2$, $L^3$ and $L^4$, $L^5$ and $L^6$, and $L^9$ and $L^{10}$ are each optionally bonded to each other to form a ring including $M^2$ or $M^3$. Preferred examples of such rings include cyclooct-1-enyl group, acetylacetonate group, tetramethylethylenediamine group, and 1,2-dimethoxyethane group.

$L^7$ and $L^8$ represent ligands coordinated to the metal atoms $M^2$ and $M^3$, and are each bonded to $M^2$ and $M^3$ in a manner called three-center four-electron bonding. Examples of the ligands $L^7$ and $L^8$ include hydrogen atoms, halogen atoms, C1-C4 hydrocarbon groups, C1-C6 alkoxy groups, C1-C6 thioalkoxy groups, C1-C6 hydrocarbon-substituted amino groups, and acetyl groups. Preferred examples include fluoride group, chloride group, bromide group, iodo group, methyl group, ethyl group, propyl group, methoxy group, phenoxy group, dimethylamide group, hydride group, thiomethoxy group, thiophenoxy group, and acetyl group. More preferred examples include fluoride group, chloride group, bromide group, iodo group, methyl group, methoxy group, phenoxy group, hydride group, thiomethoxy group, thiophenoxy group, and acetyl group. Still more preferred examples include chloride group, bromide group, iodo group, methoxy group, phenoxy group, and acetyl group.

In the general formula (B), q is a value of 0, 1, or 2.

Here, the minimum number of ring members in the general formulas (B), (C), (D), and (F) in the present invention is defined as follows. The number of ring members is defined as the sum of the hapticity of the coordinated moiety and the number of other atoms constituting the ring. Here, the minimum number of ring members is defined as follows.

(i) When the ring is monocyclic, the minimum number of ring members is the number of ring members of the monocyclic ring containing the transition metal atom M, and the ligands $L^a$ and $L^b$ coordinated to the transition metal atom.

[Chem. 7]

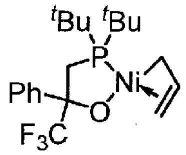

For example, in the above compound, the hapticity of the allyl group is 3, and one nickel atom constitutes the ring in combination with the allyl group. Thus, the number of ring members is 4.

(ii) When the ring is polycyclic, the numbers of ring members are calculated for all the rings containing the transition metal atom M, and the ligands $L^a$ and $L^b$ coordinated to the transition metal atom, and the smallest number is taken as the minimum number of ring members.

[Chem. 8]

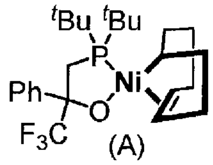
(A)

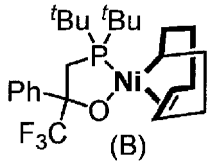
(B)

For example, the above compound includes two Ni-containing rings (A) and (B) indicated by thick lines. In the ring (A), coordination to the nickel atom is made by a carbon atom of the monovalent anion having a hapticity of 1 and an alkene having a hapticity of 2, and other atoms constituting the ring are two carbon atoms and one nickel atom. Thus, the number of ring members in (A) is 6. On the other hand, coordination to nickel in the ring (B) is made by a carbon atom of the monovalent anion having a hapticity of 1 and an alkene having a hapticity of 2, and other atoms constituting the ring are three carbon atoms and one nickel atom. Thus, the number of ring members in (B) is 7. The number of ring members in (A) is smaller, and therefore the minimum number of ring members in the above compound is 6.

Specific examples of the compounds represented by the formula (B) or the formula (C) include, but are not limited to, the following compounds. These compounds probably form complexes with the compounds represented by the general formula (A).

[Chem. 9]

Specific examples of general formula (B)

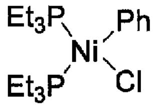
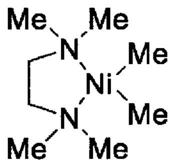
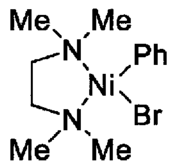
Pd(dba)$_2$
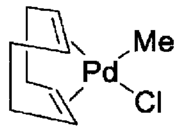

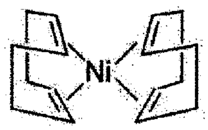
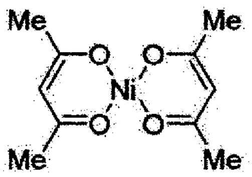

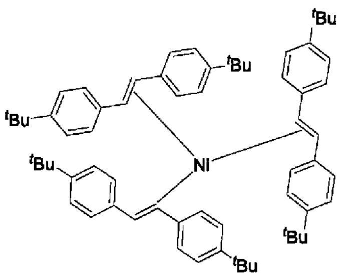

[Chem. 10]

Specific examples of general formula (C)

$Pd_2(dba)_3$ 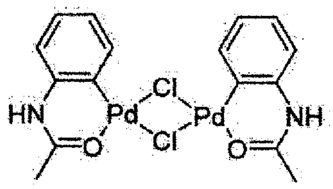

In a preferred embodiment, the compound represented by the general formula (A) is represented by the general formula (E) below:

[Chem. 11]

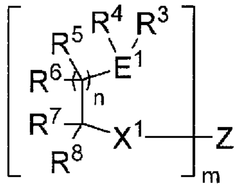

General formula (E)

[in the formula (E),

$R^3$ and $R^4$ each independently represent a hydrogen atom or a substituted or unsubstituted C1-C20 hydrocarbon group optionally containing at least one heteroatom,
$R^5$, $R^6$, $R^7$, and $R^8$ each independently represent an atom or a group selected from the group consisting of (i) to (iv) below:

(i) hydrogen atom,
(ii) halogen atom,
(iii) C1-C30 hydrocarbon group optionally containing at least one heteroatom, and
(iv) $OR^b$, $CO_2R^b$, $CO_2M'$, $C(O)N(R^a)_2$, $C(O)R^b$, $SR^b$, $SO_2R^b$, $SOR^b$, $OSO_2R^b$, $P(O)(OR^b)_{2-y}(R^a)_y$, CN, $NHR^a$, $N(R^b)_2$, $Si(OR^a)_{3-x}(R^a)_x$, $OSi(OR^a)_{3-x}(R^a)_x$, $NO_2$, $SO_3M'$, $PO_3M'_2$, $P(O)(OR^b)_2M'$, and epoxy-containing groups (wherein $R^a$ independently at each occurrence represents hydrogen or a C1-C20 hydrocarbon group, $R^b$ independently at each occurrence represents a C1-C20 hydrocarbon group, M' represents an alkali metal, alkaline earth metal, ammonium, quaternary ammonium, or phosphonium, x represents an integer of 0 to 3, and y represents an integer of 0 to 2), and adjacent groups of $R^5$, $R^6$, $R^7$, and $R^8$ are optionally bonded to one another to form a 5- to 8-membered alicyclic or aromatic ring, or a 5- to 8-membered heterocyclic ring containing at least one heteroatom selected from oxygen atom, nitrogen atom, and sulfur atom,

n is an integer of 0 to 4,
$X^1$ represents an oxygen atom or a sulfur atom,
$E^1$ represents a phosphorus atom, an arsenic atom, or an antimony atom,
m is an integer greater than or equal to 1 and less than or equal to the valence of Z, and Z is a hydrogen atom, a leaving group, or a cation having a valence of 1 or more and 4 or less].

$R^5$ to $R^8$ correspond to substituents bonded to the carbon chain. At least one of $R^7$ or $R^8$ is preferably an atom or a group selected from the group consisting of (i), (iii), and (iv) described above. In this case, the direction in which the olefin reaction proceeds is advantageously controlled by stereocontrol, and chain transfer is advantageously prevented. In particular, $R^7$ or $R^8$ is preferably an electron-withdrawing group, in which case the performance as an olefin polymerization catalyst is further enhanced.
Examples of (ii) the halogen atom for $R^5$ to $R^8$ include fluorine, chlorine, bromine, and iodine.
Examples of (iii) the C1-C30 hydrocarbon group optionally containing at least one heteroatom include those

described for $R^1$ and $R^2$ hereinabove, and further include trifluoromethyl, trichloromethyl, tribromomethyl, triiodomethyl, 2,4,6-triphenylphenyl group, 2,6-diisopropylphenyl, 9-anthracenyl, and pentafluoroethyl. Examples of the rings formed by bonding of adjacent groups, specifically, the 5- to 8-membered alicyclic or aromatic rings, and the 5- to 8-membered heterocyclic rings containing at least one heteroatom selected from oxygen atom, nitrogen atom, and sulfur atom include 1,2-cyclopentylene, 1,2-cyclohexylene, 1-oxo-2,3-cyclopentylene, 1-oxo-2,3-cyclohexylene, 1,2-dihydroacenaphthylene, and 9,10-dihydroanthracenylene.

Examples of (iv) include methoxy, ethoxy, isopropoxy, tert-butoxy, methoxycarbonyl, trifluoromethoxycarbonyl, mesyl, and tosyl.

The value of n is related to the number of carbon atoms of the carbon chain connecting $E^1$ to $X^1$. The letter n is preferably 1 because the structure of the complex is a 5-membered ring and is stable.

Specific examples of the compounds represented by the general formula (A) include, but are not limited to, the following compounds. These compounds form complexes with the compounds represented by the general formula (B) or (C) and function as ligands to the nickel atom or the palladium atom. In particular, those compounds represented by the general formula (A) in which $X^1$ is an oxygen atom and $E^1$ is a phosphorus atom have a structure in which phosphorus and oxygen are linked via an alkylene group. Hereinafter, such compounds are sometimes referred to as alkylene linked phosphine alkoxide (ALPHA) ligands. In some of the compounds illustrated below, a bond is drawn with a wavy line instead of a straight line. Such compounds with a wavy-lined bond (compounds marked with *) include two types of diastereomers.

[Chem. 12-1]

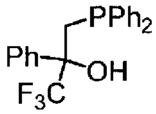 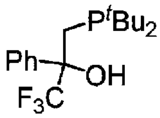 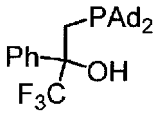 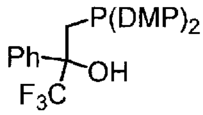

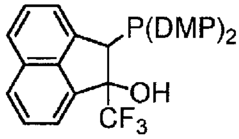 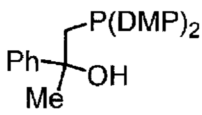 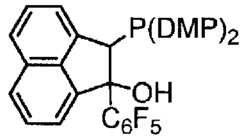 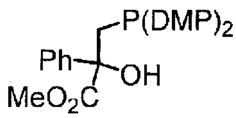

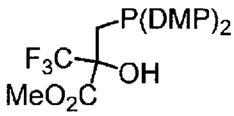 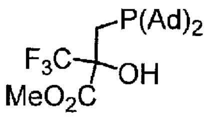 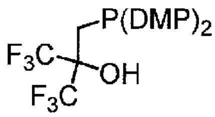 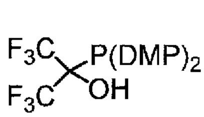

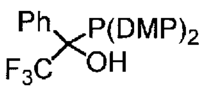 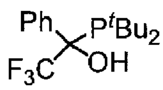 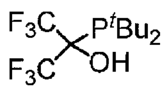 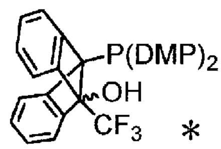 *

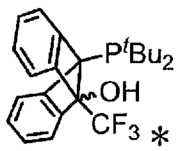 * 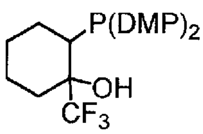 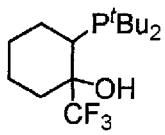

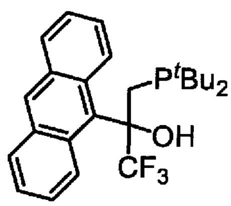 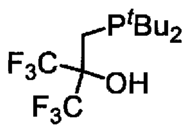 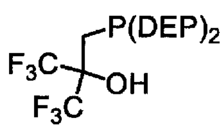 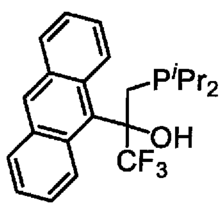 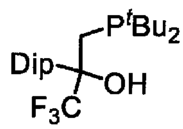

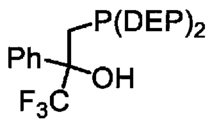 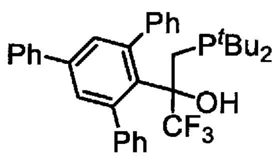 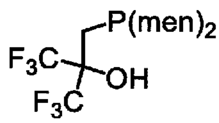 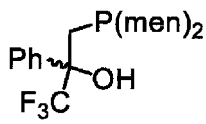 *

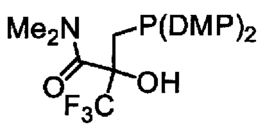 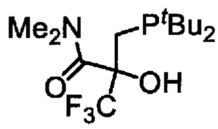 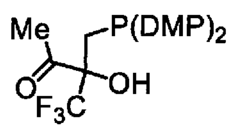 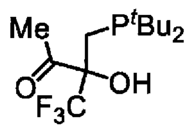

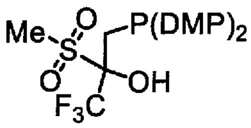 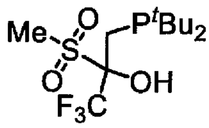 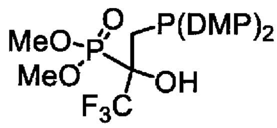 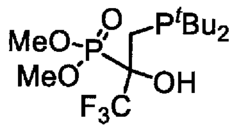

[Chem. 12-2]

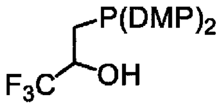 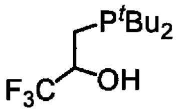 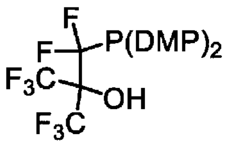 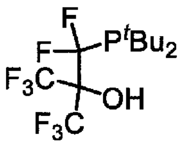 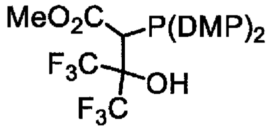

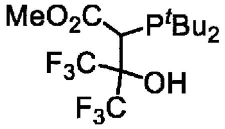 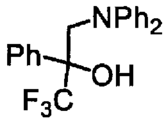 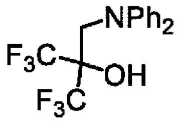 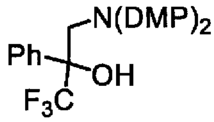 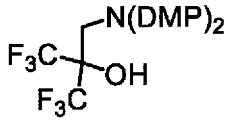

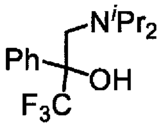 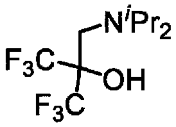

The compound represented by the general formula (A) may be used as a catalyst in an olefin polymerization reaction in the form of a composition with the transition metal compound represented by the general formula (B) or (C) or in the form of a metal complex that is a product from the reaction with the transition metal compound. The product from the reaction of the compound represented by the general formula (A) with the transition metal compound represented by the general formula (B) or (C) may be isolated and used as a catalyst in an olefin polymerization reaction. Alternatively, the product may be used directly in a polymerization reaction without being isolated from the reaction system or being washed. The above compounds may be reacted by a method known in the synthesis of metal complexes. The operations are preferably all carried out under an inert gas. The reaction is performed in a uniform solvent. The solvent used here may be a general hydrocarbon reaction solvent, with toluene being preferable. The concentration of the transition metal compound in the reaction solvent may be freely set up to the saturated concentration as the upper limit, and is preferably in the range of 10 mM to 40 mM. The ligand and the transition metal compound may be mixed in any order without limitation. A solvent may be added to a mixture of a solid ligand and a solid transition metal compound, or a solution of a transition metal compound may be added to a solid ligand. The mixing ratio of the ligand to the transition metal compound is preferably in the range of ligand:metal = 1:1 to 1:10. The mixing temperature may be appropriately set at from 20°C up to the boiling point of the solvent as the upper limit. The mixing temperature is preferably in the range of 35°C to 45°C. The amount of mixing time may be preferably in the range of 1 minute to 24 hours, and preferably 10 to 30 minutes. An aspect of the present invention resides in a method for producing an olefin polymerization catalyst including a step of reacting a compound represented by the general formula (A) with a transition metal compound represented by the general formula (B) or (C).

In another aspect, the catalyst used in the method of the present invention is a metal complex represented by the general formula (D) below:

[Chem. 13]

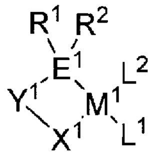

General formula (D)

[in the formula (D),

$R^1$ and $R^2$ each independently represent a hydrogen atom or a substituted or unsubstituted C1-C20 hydrocarbon group optionally containing at least one heteroatom,

$X^1$ represents an oxygen atom or a sulfur atom,

$Y^1$ represents a substituted or unsubstituted C1-C5 saturated hydrocarbon group optionally containing at least one heteroatom,

$E^1$ represents a nitrogen atom, a phosphorus atom, an arsenic atom, or an antimony atom,

$M^1$ represents a nickel atom or a palladium atom, and

$L^1$ and $L^2$ represent ligands coordinated to $M^1$ and are optionally bonded to each other to form a ring including $M^1$,

and the minimum number of ring members of the ring is 5 to 10 including $M^1$].

Specific examples and embodiments, such as preferred embodiments, of $R^1$, $R^2$, $X^1$, $Y^1$, $E^1$, M, and L' are the same as described for the general formula (A), (B), or (C). Thus, in a preferred embodiment, the compound represented by the general formula (D) is represented by the general formula (F) below:

[Chem. 14]

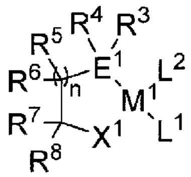

General formula (F)

[in the formula (F),

$R^3$ and $R^4$ each independently represent a hydrogen atom or a C1-C20 hydrocarbon group optionally containing at least one heteroatom,
$R^5$, $R^6$, $R^7$, and $R^8$ each independently represent an atom or a group selected from the group consisting of (i) to (iv) below:

(i) hydrogen atom,
(ii) halogen atom,
(iii) C1-C30 hydrocarbon group optionally containing at least one heteroatom, and
(iv) $OR^b$, $CO_2R^b$, $CO_2M'$, $C(O)N(R^a)_2$, $C(O)R^b$, $SR^b$, $SO_2R^b$, $SOR^b$, $OSO_2R^b$, $P(O)(OR^b)_{2-y}(R^a)_y$, CN, $NHR^a$, $N(R^b)_2$, $Si(OR^a)_{3-x}(R^a)_x$, $OSi(OR^a)_{3-x}(R^a)_x$, $NO_2$, $SO_3M'$, $PO_3M'_2$, $P(O)(OR^b)_2M'$, and epoxy-containing groups (wherein $R^a$ independently at each occurrence represents hydrogen or a C1-C20 hydrocarbon group, $R^b$ independently at each occurrence represents a C1-C20 hydrocarbon group, M' represents an alkali metal, an alkaline earth metal, ammonium, quaternary ammonium, or phosphonium, x represents an integer of 0 to 3, and y represents an integer of 0 to 2), and adjacent groups of $R^5$, $R^6$, $R^7$, and $R^8$ are optionally bonded to one another to form a 5- to 8-membered alicyclic or aromatic ring, or a 5- to 8-membered heterocyclic ring containing at least one heteroatom selected from oxygen atom, nitrogen atom, and sulfur atom,

n is an integer of 0 to 4,
M represents a nickel atom or a palladium atom,
$L^1$ and $L^2$ represent ligands coordinated to M, $R^3$ and $L^1$ are optionally bonded to each other to form a ring including M, the number of ring members of the ring is 5 to 10 including M,
$X^1$ represents an oxygen atom or a sulfur atom, and
$E^1$ represents a phosphorus atom, an arsenic atom, or an antimony atom].

Specific examples of the metal complexes represented by the general formula (D) include the following complexes. The complexes shown below are only illustrative, and the complexes in the method of the present invention are not limited to those specific examples.

[Chem. 15]

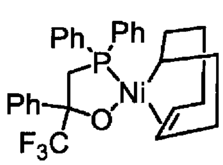 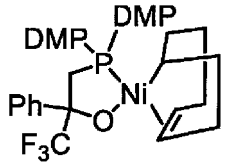 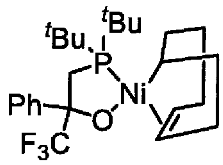 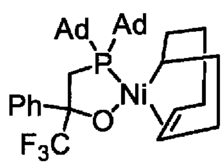

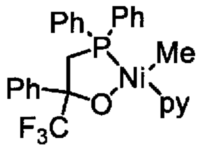 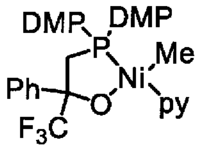 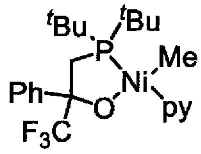 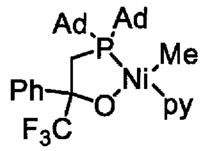

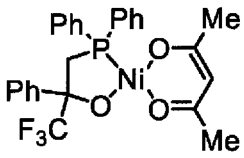 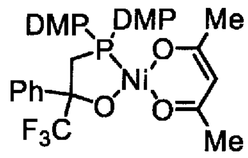 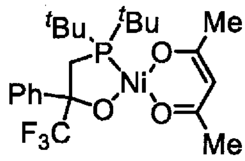 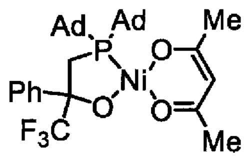

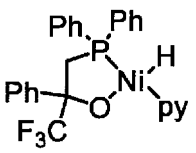 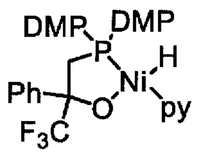 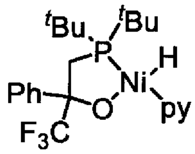 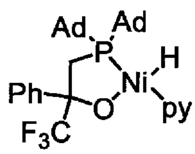

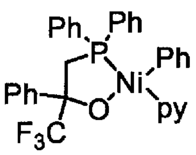 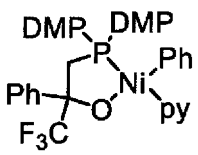 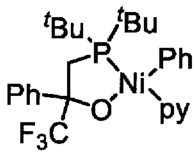 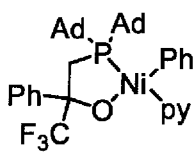

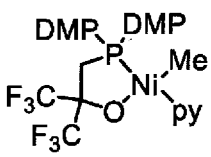 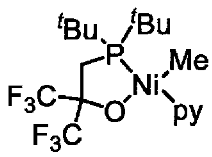

Examples further include the following complexes. The complexes shown below are only illustrative, and the complexes in the method of the present invention are not limited to those specific examples. Specific examples further include compounds corresponding to the structures below except that the 2,6-dimethoxyphenyl groups present on the phosphorus atom are replaced by t-butyl groups.

[Chem. 16]

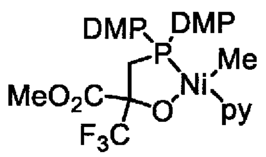 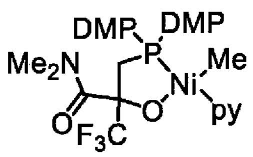 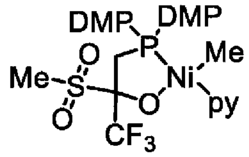 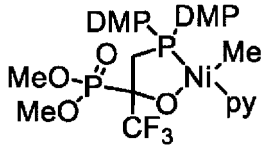

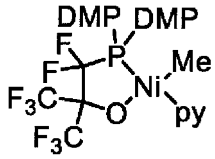 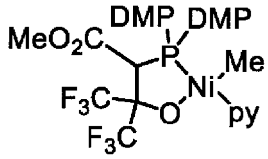 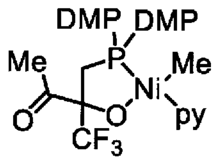 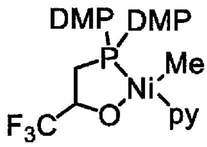

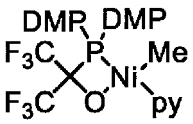 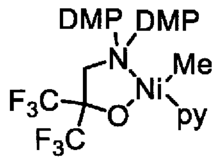

The metal complex of the general formula (D) used in the method of the present invention may be prepared by a known method. The metal complex used in the method of the present invention may be prepared based on a known complex preparation method by a skilled person with appropriate modifications, such as changing of raw materials.

3. Cocatalysts

In the method of the present invention, a cocatalyst may be further added in addition to the metal complex that is a product of reaction between the compound represented by the general formula (A) and the transition metal compound represented by the general formula (B) or (C), or the metal complex represented by the general formula (D) (hereinafter, these complexes are sometimes collectively written simply as the "metal complex catalyst"). Examples of the cocatalysts include organometallic compounds containing a Group 1, 2, or 13 element in the periodic table. In particular, some examples are compounds represented by the general formula (2) below, compounds represented by the general formula (3), and organoaluminum oxy-compounds. A plurality of types of these compounds may be added to the catalyst composition.

[Chem. 17]

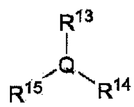

(2)

[Chem. 18]

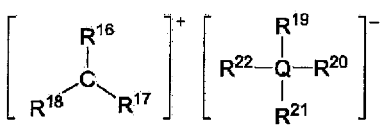

(3)

The compounds represented by the general formula (2) are boron or aluminum compounds represented by $QR^{13}R^{14}R^{15}$ (where Q represents boron (B) or aluminum (Al), and $R^{13}$, $R^{14}$, and $R^{15}$ each independently represent a hydrogen atom; an optionally substituted C1-C30 alkyl, alicyclic, alkoxy, aryl, or aryloxy group; or each independently represent an amino or silyl group substituted by a C1-C30 hydrocarbon in place of one or more hydrogen atoms).

The description, such as examples, of $R^{13}$ to $R^{15}$ is the same as described hereinabove with respect to, for example, $R^1$. From such points of view as the ease in preparation and the availability of the compounds, groups belonging to hydrocarbons, such as alkyl groups and aryl groups, and halogen (in particular, fluorine)-substituted alkyl and aryl groups, such as trifluoromethyl group and perfluorophenyl group, are preferable.

Examples of the compounds represented by the general formula (2) include, but are not limited to, trimethylborane, trimethoxyborane, perfluoromethylborane, triphenylborane, tris(perfluorophenyl)borane, triphenoxyborane, tris(dimethylamino)borane, tris(diphenylamino)borane, trimethylaluminum, triethylaluminum, tri(n-propyl)aluminum, tri(n-butyl)aluminum, triisobutylaluminum, tri(n-hexyl)aluminum, tri(n-octyl)aluminum, tri(n-decyl)aluminum, diethylaluminum hydride, diethylaluminum ethoxide, diethylaluminum dimethylamide, and diisobutylaluminum hydride.

The compounds represented by the general formula (3) are salts of boron or aluminum with a carbocation, represented by $[CR^{16}R^{17}R^{18}][QR^{19}R^{20}R^{21}R^{22}]$ (where Q is the same as defined in the general formula (2), and $R^{16}$, $R^{17}$, $R^{18}$, $R^{19}$, $R^{20}$, $R^{21}$, and $R^{22}$ are each independently defined the same as $R^{13}$).

The description, such as examples, of $R^{16}$ to $R^{22}$ is the same as described hereinabove with respect to, for example, $R^1$. From such points of view as the ease in preparation and the availability of the compounds, groups belonging to hydrocarbons, such as alkyl groups and aryl groups, are preferable. Bulky hydrocarbon groups, such as t-butyl group and aryl groups, are more preferable because the carbocation is easily obtained.

Examples of the compounds represented by the general formula (3) include, but are not limited to, trityl tetramethylborate, trityl tetrakis(perfluoromethyl)borate, trityl tetraphenylborate, trityl tetrakis(perfluorophenyl)borate, and trityl tetrakis(di(trifluoromethyl)phenyl)borate.

The compounds represented by the general formula (2) or (3) may be purchased from the market or may be obtained by a known method with appropriate modifications in accordance with the types of substituents in the compound.

In addition to the compounds represented by the general formula (2) or (3), organoaluminum oxy-compounds may also be added to the catalyst composition in the method of the present invention. Examples of the organoaluminum compounds include methylaluminoxanes (MAO) and modified methylaluminoxanes (MMAO). Commercially available products may be used. MMAO are preferable because they are easily available and are easy to handle. Commercially available MAO and MMAO may be used without limitation on quality, such as grades.

In addition to the compounds with a Group 13 element described above, organometallic compounds conventionally known as cocatalysts may be used as the cocatalysts, with examples including Group 1 metal-containing compounds, such as alkyllithiums including methyllithium and n-butyllithium, and Group 2 metal-containing compounds, such as Grignard reagents. Commercially available products of these compounds may be used without limitation on quality, such as grades.

The cocatalysts may be used under the same conditions as the metal complex catalysts, but are preferably used in an inert gas atmosphere while avoiding oxygen and water. The amount in which the cocatalyst is added may be appropriately determined by a person skilled in the art.

3. Monomers for constituting polymers

Monomers that are subjected to polymerization reaction in the present invention are olefin monomers, and are linear, branched, or alicyclic hydrocarbons having a carbon-carbon double bond. In particular, examples include ethylene, propylene, and $\alpha$-olefms. $\alpha$-Olefms are molecules that have a carbon-carbon double bond at an end of the carbon chain. The structures of $\alpha$-olefms are preferably of 4 to 20 carbon atoms, and may have an unsaturated bond in a branch, a ring, and/or at other than the ends. If the number of carbon atoms is more than 20, sufficient polymerization activity may not be exhibited. Thus, C4-C10 $\alpha$-olefms are more preferable. Still more preferred olefins include ethylene, propylene, 1-butene, 1-pentene, 1-hexene, 1-octene, 1-decene, 3-methyl-1-butene, 4-methyl-1-pentene, and vinylcyclohexene. Particularly preferred olefins include ethylene, propylene, 1-hexene, and 1-decene. The olefins may be used singly, or two or more olefins may be used at the same time.

Examples of the monomers subjected to polymerization reaction in the present invention other than the above olefins include alkenes having a carbon-carbon double bond at other than the ends, polar group-containing monomers, and nonpolar cyclic olefins. In the method of the present invention, the olefins described above may be used singly, or the olefins may be used together with polar group-containing monomers or nonpolar cyclic olefins.

Examples of the alkenes having a carbon-carbon double bond at other than the ends include 2-butene, 2-pentene, and 2-hexene. Such monomers may be used singly, or a plurality of monomers may be used in combination.

Examples of the nonpolar cyclic olefins include cyclopentene, cyclohexene, cycloheptene, norbornene, and norbornadiene. Such monomers may be used singly, or a plurality of monomers may be used in combination.

Examples of the polar group-containing monomers include monomers resulting from the introduction of a polar functional group into olefins, alkenes having a carbon-carbon double bond at other than the ends, and nonpolar cyclic olefins. Examples of the monomers resulting from the introduction of a polar functional group into olefins include polar group-containing monomers represented by the general formula: $CH_2=C(R^{10})(R^{11})$. Preferred examples of the polar group-containing monomers include (meth)acrylic acid esters. Here, $R^{10}$ represents a hydrogen atom or a C1-C10 hydrocarbon group, and $R^{11}$ represents $-COOR^{12}$ (where $R^{12}$ represents a C1-C20 hydrocarbon group), $-CON(-R^{12'})_2$ (where $R^{12'}$ independently at each occurrence represents a hydrogen atom or a C1-C20 hydrocarbon group), a cyano group, or an optionally substituted aryl group. $R^{10}$ is preferably a hydrogen atom or a C1-C3 hydrocarbon group for the reason that more sufficient polymerization activity can be exhibited. More preferably, $R^{10}$ is a hydrogen atom or a methyl

group. $R^{11}$ may be any of the above-described substituents without limitation, and is preferably $-COOR^{12}$ or an aryl group for the reason that a copolymer that is obtained has a wide range of use applications. If the number of carbon atoms in $R^{12}$ is more than 20, the polymerization activity tends to be lowered. Thus, $R^{12}$ is preferably a C1-C12 hydrocarbon group, and more preferably a C1-C8 hydrocarbon group.

Furthermore, $R^{12}$ is preferably composed of a carbon atom(s) and hydrogen atoms. $R^{12}$ may contain a heteroatom, such as an oxygen atom, a sulfur atom, a selenium atom, a phosphorus atom, a nitrogen atom, a silicon atom, a fluorine atom, or a boron atom. Among these heteroatoms, oxygen atom, silicon atom, and fluorine atom are preferable, and oxygen atom is more preferable. The preferred ranges and examples of $R^{12}$ also apply to $R^{12'}$ when $R^{12'}$ is not a hydrogen atom.

Examples of the monomers resulting from the introduction of a polar functional group into alkenes having a carbon-carbon double bond at other than the ends, and examples of the monomers resulting from the introduction of a polar functional group into nonpolar cyclic olefins include compounds obtained by introducing a substituent $R^{11}$ into any position of the alkene compounds and the cyclic olefin compounds described as examples hereinabove.

More preferred examples of the polar group-containing monomers include methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, pentyl (meth)acrylate, hexyl (meth)acrylate, cyclohexyl (meth)acrylate, octyl (meth)acrylate, 2-ethylhexyl (meth)acrylate, nonyl (meth)acrylate, decyl (meth)acrylate, dodecyl (meth)acrylate, phenyl (meth)acrylate, toluyl (meth)acrylate, benzyl (meth)acrylate, hydroxyethyl (meth)acrylate, dimethylaminoethyl (meth)acrylate, diethylaminoethyl (meth)acrylate, 2-aminoethyl (meth)acrylate, 2-methoxyethyl (meth)acrylate, 3-methoxypropyl (meth)acrylate, glycidyl (meth)acrylate, trifluoromethyl (meth)acrylate, 3,3,3-trifluoropropyl (meth)acrylate, perfluoroethyl (meth)acrylate, (meth)acrylamide, (meth)acryldimethylamide, 2-hydroxybutyl (meth)acrylate, 4-hydroxybutyl (meth)acrylate, acrylonitrile, methyl 10-undecenoate, styrene, 4-methylstyrene, 4-acetoxystyrene, vinylanisole, norbornene, methyl 5-norbomene-2-carboxylate, t-butyl 5-norbornene-2-carboxylate, 5-norbornene-2-methanol, 5-norbomene-2-methylamine, 5-norbornene-2-methylpivalamide, and 5-norbomen-2-yl acetate. Still more preferably, at least one is selected from methyl acrylate, ethyl acrylate, propyl acrylate, n-butyl acrylate, isobutyl acrylate, t-butyl acrylate, methyl methacrylate, ethyl methacrylate, butyl methacrylate, t-butyl methacrylate, acrylonitrile, methyl 10-undecenoate, styrene, 4-methylstyrene, 4-acetoxystyrene, 4-nitrostyrene, vinylanisole, norbornene, methyl 5-norbornene-2-carboxylate, t-butyl 5-norbomene-2-carboxylate, 5-norbornene-2-methylpivalamide, and 5-norbomen-2-yl acetate.

Further preferably, for example, at least one is selected from t-butyl acrylate, methyl methacrylate, methyl 10-undecenoate, 4-methylstyrene, 4-acetoxystyrene, norbomene, t-butyl 5-norbomene-2-carboxylate, 9-decenyl acetate, and 1,2-epoxy-9-decene.

These monomers may be used singly, or a plurality of monomers may be used in combination.

The types of monomers may be selected appropriately in accordance with properties required of the polymer that is obtained. In some cases, a composition of two or more kinds of monomers may be copolymerized, and a composition composed of two or more kinds of polar group-containing monomers may be copolymerized. The amounts in which the monomers are added, and the quantitative ratio of the monomers may be determined appropriately in accordance with properties required of the copolymer that is obtained.

4. Polymerization reaction

In the method of the present invention, a catalyst composition including the metal complex catalyst described hereinabove may be used as a copolymerization catalyst component. The metal complex catalyst may be used in an isolated form or while being supported on a carrier. The metal complex catalyst may be supported in a reactor used for the polymerization of olefins or the copolymerization of an olefin and a (meth)acrylic acid ester, in the presence or absence of these monomers. Alternatively, the metal complex catalyst may be supported in a separate container different from the reactor.

Any carriers may be used without impairing the gist of the present invention. In general, inorganic oxides and polymer carriers may be suitably used. Specific examples include $SiO_2$, $Al_2O_3$, MgO, $ZrO_2$, $TiO_2$, $B_2O_3$, CaO, ZnO, BaO, $ThO_2$, and mixtures thereof. Mixed oxides may also be used, with examples including $SiO_2$-$Al_2O_3$, $SiO_2$-$V_2O_5$, $SiO_2$-$TiO_2$, $SiO_2$-MgO, and $SiO_2$-$Cr_2O_3$. For example, use may be made of inorganic silicates, polyethylene carriers, polypropylene carriers, polystyrene carriers, polyacrylic acid carriers, polymethacrylic acid carriers, polyacrylic acid ester carriers, polyester carriers, polyamide carriers, and polyimide carriers. Properties of these carriers, such as particle size, particle size distribution, pore volume, and specific surface area, are not particularly limited and may be selected appropriately.

Some inorganic silicates that may be used include clays, clay minerals, zeolites, and diatomaceous earths. These may be synthetic products or naturally occurring minerals. Specific examples of the clays and the clay minerals include allophane group, such as allophane; kaolin group, such as dickite, nacrite, kaolinite, and anauxite; halloysite group, such as metahalloysite and halloysite; serpentine group, such as chrysotile, lizardite, and antigorite; smectites, such as montmorillonite, sauconite, beidellite, nontronite, saponite, and hectorite; vermiculite minerals, such as vermiculite; mica minerals, such as illite, sericite, and glauconite; attapulgite, sepiolite, palygorskite, bentonite, kibushi clay, gairome clay, hisingerite, pyrophyllite, and chlorite group. These may form a mixed layer. Examples of the artificial synthetic products include synthetic mica, synthetic hectorite, synthetic saponite, and synthetic tainiolite.

Among the above specific examples, those that are preferable are kaolin group, such as dickite, nacrite, kaolinite, and anauxite; halloysite group, such as metahalloysite and halloysite; serpentine group, such as chrysotile, lizardite, and antigorite; smectites, such as montmorillonite, sauconite, beidellite, nontronite, saponite, and hectorite; vermiculite minerals, such as vermiculite; mica minerals, such as illite, sericite, and glauconite; synthetic mica, synthetic hectorite, synthetic saponite, and synthetic tainiolite. Those that are particularly preferable are smectites, such as montmorillonite, sauconite, beidellite, nontronite, saponite, and hectorite; vermiculite minerals, such as vermiculite; synthetic mica, synthetic hectorite, synthetic saponite, and synthetic tainiolite.

The carriers described above may be used directly or may be treated with an acid, such as hydrochloric acid, nitric acid, or sulfuric acid, and/or a salt, such as LiCl, NaCl, KCl, $CaCl_2$, $MgCl_2$, $Li_2SO_4$, $MgSO_4$, $ZnSO_4$, $Ti(SO_4)_2$, $Zr(SO_4)_2$, or $Al_2(SO_4)_3$. In the treatment, an acid and a corresponding base may be mixed in the reaction system and the carrier may be treated with the resultant salt. Furthermore, the carriers may be subjected to shape control, such as pulverization or granulation, and drying treatment.

In the method of the present invention, a polymerization reaction may be carried out in the presence or absence of the cocatalyst and known additives. Preferred additives are those that act to stabilize the copolymer that is formed. For example, preferred examples of the additives include quinone derivatives and hindered phenol derivatives.

Specifically, for example, use may be made of monomethyl ether hydroquinone, 2,6-di-t-butyl-4-methylphenol (BHT), a reaction product of trimethylaluminum and BHT, or a reaction product of a tetravalent titanium alkoxide and BHT.

Inorganic and/or organic fillers may also be used as additives. Polymerization may be performed in the presence of such a filler or with the addition of an ionic liquid.

Lewis bases are preferred additives in the present invention. An appropriately selected Lewis base improves the activity, the molecular weight, and the copolymerizability of an acrylic acid ester. The amount of the Lewis base is 0.0001 equivalent to 1000 equivalents, preferably 0.1 equivalent to 100 equivalents, and more preferably 0.3 equivalents to 30 equivalents with respect to the transition metal M in the catalyst component present in the polymerization system. The Lewis base may be added to the polymerization system in any manner without limitation. For example, the Lewis base may be added as a mixture with the catalyst component of the present invention, may be added as a mixture with the monomers, or may be added to the polymerization system separately from the catalyst component and the monomers. A plurality of Lewis bases may be used in combination.

Examples of the Lewis bases include aromatic amines, aliphatic amines, alkyl ethers, aryl ethers, alkyl aryl ethers, cyclic ethers, alkylnitriles, arylnitriles, alcohols, amides, aliphatic esters, aromatic esters, phosphates, phosphites, thiophenes, thianthrenes, thiazoles, oxazoles, morpholines, and cyclic unsaturated hydrocarbons.

Among those described above, particularly preferred Lewis bases are aromatic amines, aliphatic amines, cyclic ethers, aliphatic esters, and aromatic esters. Especially preferred Lewis bases are pyridine derivatives, pyrimidine derivatives, piperidine derivatives, imidazole derivatives, aniline derivatives, piperidine derivatives, triazine derivatives, pyrrole derivatives, and furan derivatives.

Specific examples of the Lewis base compounds include pyridine, pentafluoropyridine, 2,6-lutidine, 2,4-lutidine, 3,5-lutidine, pyrimidine, N,N-dimethylaminopyridine, N-methylimidazole, 2,2'-bipyridine, aniline, piperidine, 1,3,5-triazine, 2,4,6-tris(trifluoromethyl)-1,3,5-triazine, 2,4,6-tris(2-pyridyl)-s-triazine, quinoline, 8-methylquinoline, phenazine, 1,10-phenanthroline, N-methylpyrrole, 1,8-diazabicyclo-[5.4.0]-undec-7-ene, 1,4-diazabicyclo-[2,2,2]-octane, triethylamine, benzonitrile, picoline, triphenylamine, N-methyl-2-pyrrolidone, 4-methylmorpholine, benzoxazole, benzothiazole, furan, 2,5-dimethylfuran, dibenzofuran, xanthene, 1,4-dioxane, 1,3,5-trioxane, dibenzothiophene, thianthrene, triphenylphosphonium cyclopentadienide, triphenyl phosphite, triphenyl phosphate, and tripyrrolidinophosphine.

In the present invention, the polymerization mode is not particularly limited. For example, some favorably used polymerization modes are solution polymerization in which the polymer produced is completely dissolved in a medium, slurry polymerization in which at least part of the polymer produced is suspended in a medium, bulk polymerization in which liquefied monomers themselves are used as a medium, gas-phase polymerization performed in vaporized monomers, and highpressure ion polymerization in which at least part of the polymer produced is dissolved in monomers liquefied at high temperature and high pressure. The polymerization may be batchwise or semi-batchwise. The polymerization reaction is preferably performed in an inert gas atmosphere, such as a nitrogen atmosphere. The metal complex catalyst may be used under any common polymerization conditions without limitation. The amount in which the metal complex catalyst is used is not particularly limited as long as the amount is appropriate for use as a catalyst, and may be appropriately determined by a skilled person.

When the monomers that are used favor polymerization in a liquid phase, the polymerization reaction in the present invention is performed in the presence or absence of a hydrocarbon solvent, such as n-butane, isobutane, n-hexane, n-heptane, toluene, xylene, cyclohexane, or methylcyclohexane, a liquid, such as a liquefied olefin, a halogenated hydrocarbon solvent, such as chlorobenzene or 1,2-dichlorobenzene, or a polar solvent, such as diethyl ether, ethylene

glycol dimethyl ether, tetrahydrofuran, dioxane, ethyl acetate, methyl benzoate, acetone, methyl ethyl ketone, formamide, acetonitrile, methanol, isopropyl alcohol, or ethylene glycol. A mixture of the liquid compounds described above may also be used as the solvent. Liquefied olefins may also be used as monomers for bulk polymerization. Furthermore, ionic liquids may also be used as solvents. In order to obtain high polymerization activity and high molecular weight, the hydrocarbon solvents and the ionic liquids described above are more preferable.

The unreacted monomers and the medium may be separated from the copolymer and may be recycled for next use. The monomers and the medium that are recycled may be reused after purification or may be reused without purification. The copolymer may be separated from the unreacted monomers and the medium by a conventionally known method, such as, for example, filtration, centrifugation, solvent extraction, or reprecipitation using a poor solvent.

The polymerization temperature, the polymerization pressure, and the polymerization time are not particularly limited and may be usually set to optimum conditions in the ranges described below in consideration of productivity and process capabilities. Specifically, the polymerization temperature is usually -20°C to 290°C, preferably 0°C to 250°C, more preferably 0°C to 200°C, still more preferably 10°C to 150°C, and particularly preferably 20°C to 100°C. The copolymerization pressure is 0.1 MPa to 300 MPa, preferably 0.3 MPa to 200 MPa, more preferably 0.5 MPa to 150 MPa, still more preferably 1.0 MPa to 100 MPa, and particularly preferably 1.3 MPa to 50 MPa. The polymerization time may be selected from the range of 0.1 minute to 100 hours, preferably 0.5 minutes to 70 hours, and more preferably 1 minute to 60 hours.

In the present invention, polymerization is generally carried out in an inert gas atmosphere. For example, nitrogen or argon atmosphere may be used, and nitrogen atmosphere is preferably used. Small amounts of oxygen and air may be mixed. When, however, a monomer that is gaseous at room temperature, such as ethylene, is used, polymerization may be performed after the reaction system has been filled with ethylene.

The catalyst and the monomers may be supplied to the polymerization reactor in any manner without limitation in accordance with the purpose. In the case of, for example, batch polymerization, predetermined amounts of monomers may be supplied to the polymerization reactor beforehand, and the catalyst may be supplied thereto. In this case, additional amounts of the monomers and the catalyst may be supplied to the polymerization reactor.

The composition of the copolymer may be controlled in a general manner by supplying monomers to the reactor while changing the supply ratio. Alternatively, the composition of the copolymer may be controlled utilizing the difference in reactivity ratio of the monomers depending on the structure of the catalyst, or the composition of the copolymer may be controlled utilizing the dependency of the reactivity ratios of the monomers on polymerization temperature. In the method of the present invention, in particular, a block copolymer may be obtained in which the content of a nonpolar monomer (ethylene) is higher than that of a polar monomer. The lower limit of the quantitative ratio (the molar ratio) of the total of nonpolar monomers to the whole copolymer is preferably 70% or more, more preferably 80% or more, and particularly preferably 90% or more. The upper limit is variable depending on properties that are imparted to the copolymer and may be controlled appropriately; the upper limit is preferably 99.99% or less, more preferably 99.95% or less, and particularly preferably 99.9% or less. These ranges ensure that properties, such as affinity for paints and adhesion, can be imparted without significantly impairing the inherent properties of polyolefins, such as heat resistance, and also ensure that properties are controllable.

The molecular weight of the polymer may be controlled by a conventionally known method. Specifically, for example, the molecular weight may be controlled by control of the polymerization temperature; the molecular weight may be controlled by control of the monomer concentrations; the molecular weight may be controlled by using a chain transfer agent; or the molecular weight may be controlled by control of the ligand structure in the transition metal complex. The chain transfer agent that is used may be a conventionally known chain transfer agent. Examples include hydrogen and metal alkyls.

The method of the present invention can produce a copolymer of an olefin and a (polar group-containing) vinyl monomer with high activity, molecular weight, and comonomer incorporation efficiency, and thus may be used as a process for producing polymers with various characteristics. Furthermore, the catalyst used in the method of the present invention has a well-balanced catalytic performance and affords a high-molecular weight (co)polymer with high activity. In addition, the catalyst does not necessarily require isolation. Thus, the catalyst may be used to realize efficient synthesis of olefin polymers.

## Examples

The present invention will be described in greater detail hereinbelow by presenting Examples and Comparative Examples without limiting the scope of the present invention to such examples below. In the following Synthesis Examples and Examples, synthesis of ligands and metal complexes and polymerization reaction were all performed in a nitrogen atmosphere unless otherwise specified.

Abbreviations used in Examples are described below.

tBA: tert-butyl acrylate
4-MeSt: 4-methylstyrene
MMA: methyl methacrylate
NB: norbornene
tBNC: tert-butyl 5-norbomene-2-carboxylate
MU: methyl 10-undecenoate
4-OAcSt: 4-acetoxystyrene
NbocNBMA: N-(tert-butoxycarbonyl)-5-norbornene-2-methylamine
DA: 9-decenyl acetate
EPD: 1,2-epoxy-9-decene

[Methods for analyzing structures in Synthesis Examples]

The structures of compounds disclosed in Synthesis Examples of Examples were analyzed by $^{1}$H-NMR, $^{13}$C-NMR, $^{19}$F-NMR, and $^{31}$P{$^{1}$H}-NMR using NMR device JNM-ECS400 manufactured by JEOL Ltd. The measurement methods are specifically described below.

[Sample preparation]

A sample weighing 5-20 mg was dissolved into 0.6 mL of deuterated chloroform containing 0.03% (v/v) tetramethylsilane or 0.6 mL of deuterated toluene containing 0.03% (v/v) tetramethylsilane. The solution was placed into an NMR sample tube having an inner diameter of 5 mmϕ.

[$^{1}$H-NMR measurement conditions]

Probe: 5 mmϕ probe
Sample temperature: room temperature
Pulse angle: 45°
Pulse interval: 2.8 seconds
Number of scans: 8
Chemical shifts: When deuterated chloroform was used as the solvent, the chemical shift of the proton signal assigned to tetramethylsilane was set at 0 ppm, and the chemical shifts of other proton signals were determined with reference to that chemical shift. When deuterated toluene was used as the solvent, the chemical shift of the proton signal assigned to tetramethylsilane was set at 0 ppm, and the chemical shifts of other proton signals were determined with reference to that chemical shift.

[$^{19}$F-NMR]

Probe: 5 mmϕ probe
Sample temperature: room temperature
Pulse angle: 45°
Pulse interval: 1.8 seconds
Number of scans: 8
Chemical shifts: The chemical shift of $CFCl_3$ as an external standard was set at 0 ppm, and the chemical shifts of other fluorine signals were determined with reference to that chemical shift.

[$^{31}$P{$^{1}$H}-NMR]

Probe: 5 mmϕ probe
Sample temperature: room temperature
Pulse angle: 30°
Pulse interval: 0.5 seconds

Number of scans: 64 to 256
Chemical shifts: The chemical shift of an 85% aqueous phosphoric acid solution as an external standard was set at 0 ppm, and the chemical shifts of other phosphorus signals were determined with reference to that chemical shift.

[Methods for analyzing polymer structures]

The structures of polymers obtained in Examples were determined by $^1$H-NMR and $^{13}$C-NMR analyses using Bruker Biospin NMR device AV400. The measurement methods are specifically described below.

[Sample preparation]

A sample weighing 200-300 mg was added into an NMR sample tube having an inner diameter of 10 mmϕ together with 2.4 ml of o-dichlorobenzene (ODCB)/brominated deuterated benzene ($C_6D_5Br$) = 3/1 (by volume), and hexamethyldisiloxane as a chemical shift reference substance. The mixture was uniformly dissolved with a block heater at 150°C.

[$^1$H-NMR measurement conditions]

Probe: 10 mmϕ cryoprobe
Sample temperature: 120°C
Pulse angle: 4.5°
Pulse interval: 2 seconds
Number of scans: 512
Chemical shifts: The chemical shift of the proton signal assigned to hexamethyldisiloxane was set at 0.09 ppm, and the chemical shifts of other proton signals were determined with reference to that chemical shift.

[$^{13}$C-NMR measurement conditions]

<Ethylene/4-MeSt, ethylene/norbornene, propylene/norbomene, and propylene/4-MeSt>

Probe: 10 mmϕ cryoprobe
Sample temperature: 120°C
Pulse angle: 45°
Pulse interval: 38.5 seconds
Number of scans: 512
Decoupling conditions: broadband decoupling method
Chemical shifts: The chemical shift of the $^{13}$C signal assigned to hexamethyldisiloxane was set at 1.98 ppm, and the chemical shifts of other $^{13}$C signals were determined with reference to that chemical shift.

<Ethylene/1-decene>

Probe: 10 mmϕ cryoprobe
Sample temperature: 120°C
Pulse angle: 45°
Pulse interval: 27.5 seconds
Number of scans: 1024
Decoupling conditions: broadband decoupling method
Chemical shifts: The chemical shift of the $^{13}$C signal assigned to hexamethyldisiloxane was set at 1.98 ppm, and the chemical shifts of other $^{13}$C signals were determined with reference to that chemical shift.

<Ethylene/tBA, ethylene/MMA, ethylene/MU, ethylene/tBNC, ethylene/4-OAcSt, propylene/MU, propylene/N-bocNBMA, propylene/DA, and propylene/EPD>

Probe: 10 mmϕ cryoprobe
Sample temperature: 120°C
Pulse angle: 90°
Pulse interval: 51.5 seconds
Number of scans: 512-768
Decoupling conditions: inverse gated decoupling method Chemical shifts: The chemical shift of the $^{13}C$ signal assigned to hexamethyldisiloxane was set at 1.98 ppm, and the chemical shifts of other $^{13}C$ signals were determined with reference to that chemical shift.

Typical examples of the structures in polymers that can be identified by NMR spectroscopy are illustrated in the following figure.

[Chem. 19]

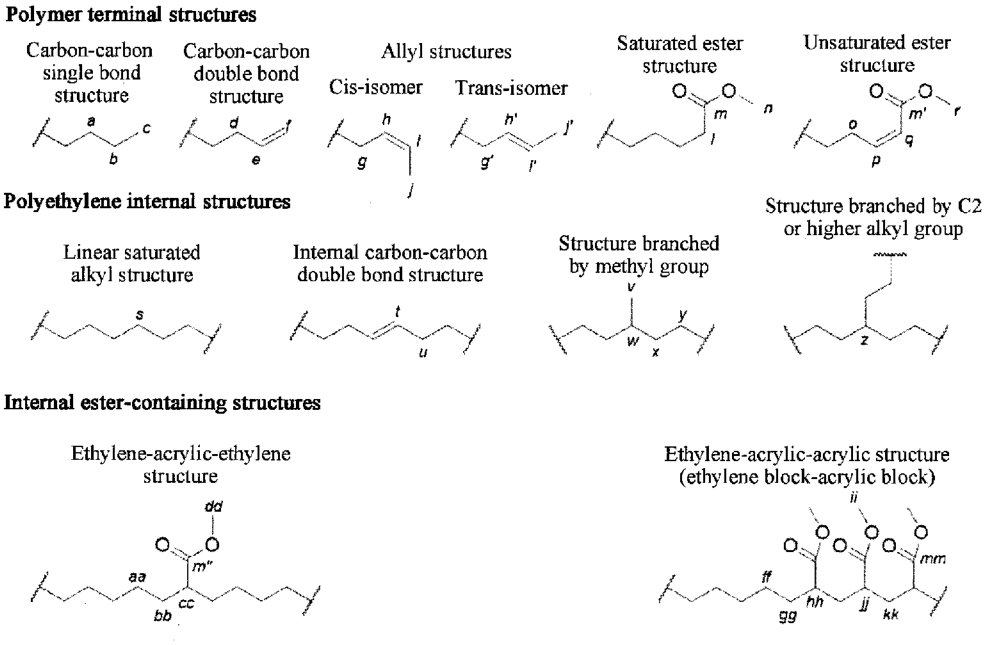


In the following, "I" indicates the integrated intensity, and the subscript values to I indicate the chemical shift range. For example, $I_{80.0\text{-}20.0}$ indicates the integrated intensity of a signal detected between 80.0 ppm and 20.0 ppm.

A branch structure may be identified from a $^{13}C$-NMR spectrum of tertiary carbon atoms. For example, the chemical shift value of tertiary carbon atoms branched by a C2 or higher alkyl group (corresponding to z in the above figure) appears in the range of 38.2 to 39.0 ppm (Reference: Macromolecules 1999, 32, 1620.). Regarding methyl branches, the integrated intensities of the signal assigned to methyl carbon (corresponding to v in the above figure) at 20.0 to 19.8 ppm and the signal assigned to methylene carbon (corresponding to x in the above figure) at 37.6 to 37.3 in the $^{13}C$-NMR spectrum were combined, and the sum was divided by 3 to give $I_{B1}$. The number of methyl branches per 1,000 carbon atoms was calculated using the following equation.

Number of methyl branches (branches/1000 carbon atoms) = $I_{B1} \times 1000/I_{total}$ Here, $I_{B1}$ and $I_{total}$ are amounts given by the following equations, respectively.

$$I_{B1} = (I_{20.0\text{-}19.8} + I_{37.6\text{-}37.3})/3$$

$$I_{total} = I_{180.0\text{-}136.0} + I_{120.0\text{-}100.0} + I_{80.0\text{-}2.0}$$

A terminal structure may be similarly analyzed by $^{13}$C-NMR or $^{1}$H-NMR. For example, a carbon-carbon double bond structure show peaks in a $^{13}$C-NMR spectrum at 114 ppm (corresponding to f in the above figure) and 139 ppm (corresponding to e in the above figure), and can be distinguished from a carbon-carbon single bond structure at 13.6 ppm (corresponding to c in the above figure) (Reference: Chem. Commun., 53, 2630 (2017) (Non Patent Literature 4)).

The stereoregularity of the structure of polypropylene may be similarly analyzed by quantitative $^{13}$C-NMR. In a $^{13}$C-NMR spectrum, for example, three peaks at 21.2 ppm to 22.0 ppm correspond to mm, three peaks at 20.3 ppm to 21.2 ppm correspond to mr, and three peaks at 19.7 ppm to 20.3 ppm correspond to rr. The ratio of mm, mr, and rr may be determined by calculating the integral ratio of these peaks.

[Methods for calculating comonomers]

In the following, I indicates the integrated intensity, and the subscript values to I indicate the chemical shift range.

<Ethylene (E)/tBA copolymer>

Based on signals in a $^{13}$C-NMR spectrum, the content of tBA was calculated from the following equation.

$$\text{tBA content (mol\%)} = I_{(tBA)} \times 100/(I_{(E)} + I_{(tBA)})$$

Here, $I(_{tBA})$ and $I_{(E)}$ are amounts given by the following equations, respectively.

$$I_{(tBA)} = I_{79.5\text{-}79.0}$$

$$I_{(E)} = (I_{180.0\text{-}136.0} + I_{120.0\text{-}100.0} + I_{80.0\text{-}2.0} - I_{(tBA)} \times 7)/2$$

<Ethylene/1-decene (1-decene) copolymer>

Based on signals in a $^{13}$C-NMR spectrum, the content of 1-decene was calculated from the following equation.

$$\text{1-Decene content (mol\%)} = I_{(1\text{-}decene)} \times 100/(I_{(E)} + I_{(1\text{-}decene)})$$

Here, $I_{(1\text{-}decene)}$ and $I_{(E)}$ are amounts given by the following equations, respectively.

$$I_{(1\text{-}decene)} = I_{27.4\text{-}27.3} + I_{34.6\text{-}34.4})/4$$

$$I_{(E)} = (I_{180.0\text{-}136.0} + I_{120.0\text{-}100.0} + I_{50.0\text{-}2.0} - I_{(1\text{-}decene)} \times 10)/2$$

<Ethylene/NB copolymer>

Based on signals in a $^{13}$C-NMR spectrum, the content of NB was calculated from the following equation.

$$\text{NB content (mol\%)} = I_{(NB)} \times 100/(I_{(E)} + I_{(NB)})$$

Here, $I_{(NB)}$ and $I_{(E)}$ are amounts given by the following equations, respectively.

$$I_{(NB)} = I_{48.3\text{-}41.3}/4$$

$$I_{(E)} = (I_{180.0\text{-}136.0} + I_{120.0\text{-}100.0} + I_{50.0\text{-}2.0} - I_{(NB)} \times 7)/2$$

<Ethylene/4-MeSt copolymer>

Based on signals in a $^{13}$C-NMR spectrum, the content of 4-MeSt was calculated from the following equation.

$$\text{4-MeSt content (mol\%)} = I_{(4\text{-}MeSt)} \times 100/(I_{(E)} + I_{(4\text{-}MeSt)})$$

Here, $I_{(4\text{-}MeSt)}$ and $I_{(E)}$ are amounts given by the following equations, respectively.
$I(_{4\text{-}MeSt}) = I_{21.3\text{-}20.5}$

$$I_{(E)} = (I_{180.0\text{-}136.0} + I_{120.0\text{-}100.0} + I_{50.0\text{-}2.0} - I_{(4\text{-}MeSt)} \times 5)/2$$

<Ethylene/MU copolymer>

Based on signals in a $^{13}$C-NMR spectrum, the content of MU was calculated from the following equation.

$$\text{MU content (mol\%)} = I_{(MU)} \times 100/(I_{(E)} + I_{(MU)})$$

Here, $I_{(MU)}$ and $I_{(E)}$ are amounts given by the following equations, respectively.

$$I_{(MU)} = I_{50.9\text{-}50.5}$$

$$I_{(E)} = (I_{180.0\text{-}136.0} + I_{120.0\text{-}100.0} + I_{55.0\text{-}2.0} - I_{(MU)} \times 12)/2$$

<Ethylene/tBNC copolymer>

Based on signals in a $^{13}$C-NMR spectrum, the content of tBNC was calculated from the following equation.

$$\text{tBNC content (mol\%)} = I_{(tBNC)} \times 100/(I_{(E)} + I_{(tBNC)})$$

Here, $I_{(tBNC))}$ and $I_{(E)}$ are amounts given by the following equations, respectively.

$$I_{(tBNC)} = I_{79.5\text{-}79.0}$$

$$I_{(E)} = (I_{180.0\text{-}136.0} + I_{120.0\text{-}100.0} + I_{80.0\text{-}2.0} - I_{(tBNC)} \times 12)/2$$

<Ethylene/4-OAcSt copolymer>

Based on signals in a $^{13}$C-NMR spectrum, the content of 4-OAcSt was calculated from the following equation.

$$\text{4-OAcSt content (mol\%)} = I_{(4\text{-}OAcSt)} \times 100/(I_{(E)} + I_{(4\text{-}OAcSt)})$$

Here, $I_{(4\text{-}OAcSt)}$ and $I_{(E)}$ are amounts given by the following equations, respectively.

$$I_{(4\text{-}OAcSt)} = I_{21.0\text{-}20.4}$$

$$I_{(E)} = (I_{180.0\text{-}136.0} + I_{120.0\text{-}100.0} + I_{50.0\text{-}2.0} - I_{(4\text{-}OAcSt)} \times 5)/2$$

<Ethylene/MMA copolymer>

Based on signals in a $^{13}$C-NMR spectrum, the content of MMA was calculated from the following equation.

$$\text{MMA content (mol\%)} = I_{(MMA)} \times 100/(I_{(E)} + I_{(MMA)})$$

Here, $I_{(MMA)}$ and $I_{(E)}$ are amounts given by the following equations, respectively.

$$I_{(MMA)} = I_{51.5\text{-}50.5}$$

$$I_{(E)} = (I_{180.0\text{-}136.0} + I_{120.0\text{-}100.0} + I_{55.0\text{-}2.0} - I_{(MMA)} \times 5)/2$$

<Propylene (P)/NB copolymer>

Based on signals in a $^{1}$H-NMR spectrum, the content of NB was calculated from the following equation.

$$\text{NB content (mol\%)} = I_{(NB)} \times 100/(I_{(NB)} + I_{(P)})$$

Here, $I_{(NB)}$ and $I_{(P)}$ are amounts given by the following equations, respectively.

$$I_{(NB)} = (I_{2.3\text{-}2.0})$$

$$I_{(P)} = (I_{0.1\text{-}6.0} - I_{(NB)} \times 10)/6$$

<Propylene/4-MeSt copolymer>

Based on signals in a $^{1}$H-NMR spectrum, the content of 4-MeSt was calculated from the following equation.

$$\text{4-MeSt content (mol\%)} = I_{(4\text{-}MeSt)} \times 100/(I_{(4\text{-}MeSt\text{-}total)} + I_{(P)})$$

Here, $I_{(4\text{-}MeSt)}$, $I_{(4\text{-}MeSt\text{-}total)}$, $I_{(4\text{-}MeSt\text{-}monomer)}$, and $I_{(P)}$ are amounts given by the following equations, respectively.

$$I_{(4\text{-}MeSt)} = (I_{2.0\text{-}2.4} - I_{(4\text{-}MeSt\text{-}monomer)} \times 3)/3$$

$$I_{(4\text{-}MeSt\text{-}total)} = I_{2.0\text{-}2.4}/3$$

$$I_{(4\text{-}MeSt\text{-}monomer)} = (I_{5.0\text{-}5.2} + I_{5.5\text{-}5.7})/2$$

$$I_{(P)} = (I_{0.1\text{-}6.0} - I_{(4\text{-}MeSt)} \times 6 - I_{(4\text{-}MeSt\text{-}monomer)} \times 5)/6$$

<Propylene/NbocNBMA copolymer>

Based on signals in a $^{1}$H-NMR spectrum, the content of NbocNBMA was calculated from the following equation.

$$\text{NbocNBMA content (mol\%)} = I_{(NbocNBMA)} \times 100/(I_{(NbocNBMA)} + I_{(P)})$$

Here, $I_{(NbocNBMA)}$ and $I_{(P)}$ are amounts given by the following equations, respectively.

$$I_{(NbocNBMA)} = (I_{2.8\text{-}3.2})/2$$

$$I_{(P)} = (I_{0.1\text{-}6.0} - I_{(NbocNBMA)} \times 21)/6$$

<Propylene/MU copolymer>

Based on signals in a $^1$H-NMR spectrum, the content of MU was calculated from the following equation.

$$\text{MU content (mol\%)} = I_{(MU)} \times 100/(I_{(MU)} + I_{(P)})$$

Here, $I_{(MU)}$ and $I_{(P)}$ are amounts given by the following equations, respectively.

$$I_{(MU)} = (I_{3.3\text{-}3.8})/3$$

$$I_{(P)} = (I_{0.1\text{-}6.0} - I_{(MU)} \times 22)/6$$

<Propylene/DA copolymer>

Based on signals in a $^1$H-NMR spectrum, the content of DA was calculated from the following equation.

$$\text{DA content (mol\%)} = I_{(DA)} \times 100/(I_{(DA)} + I_{(P)})$$

Here, $I_{(DA)}$ and I(r) are amounts given by the following equations, respectively.

$$I_{(DA)} = (I_{3.9\text{-}4.1})/2$$

$$I_{(P)} = (I_{0.1\text{-}6.0} - I_{(DA)} \times 22)/6$$

<Propylene/EPD copolymer>

Based on signals in a $^1$H-NMR spectrum, the content of EPD was calculated from the following equation.

$$\text{EPD content (mol\%)} = I_{(EPD)} \times 100/(I_{(EPD)} + I_{(P)})$$

Here, $I_{(EPD)}$ and $I_{(P)}$ are amounts given by the following equations, respectively.

$$I_{(EPD)} = (I_{2.6\text{-}2.9})$$

$$I_{(P)} = (I_{0.1\text{-}6.0} - I_{(EPD)} \times 18)/6$$

The number average molecular weight and the weight average molecular weight were calculated by size exclusion chromatography using polystyrenes as molecular weight standards. The specific GPC measurement method

is described below.

Device: GPC (ALC/GPC 150C) manufactured by Waters
Detector: Detector MIRAN 1A IR (measurement wavelength: 3.42 μm) manufactured by FOXBORO
Columns: AD806M/S (three columns in series) manufactured by SHOWA DENKO K.K.
Mobile phase solvent: ortho-dichlorobenzene (ODCB)
Measurement temperature: 140°C
Flow rate: 1.0 ml/min
Injection volume: 0.2 ml

[Sample preparation]

An ethylene (co)polymer is added to ODCB containing 0.32 mg/mL of TMP (2,3,6-trimethylphenol) and is dissolved at 140°C in about 1 hour to give a 1 mg/mL sample solution.
A propylene (co)polymer is added to ODCB containing 0.5 mg/mL of BHT (2,6-di-tert-butyl-4-methylphenol) and is dissolved at 140°C in about 1 hour to give a 1 mg/mL sample solution.
The retention volume obtained by the GPC measurement is converted to a molecular weight using a previously prepared standard polystyrene (PS) calibration curve. The standard polystyrenes that are used are the following brands manufactured by TOSOH CORPORATION: F380, F288, F128, F80, F40, F20, F10, F4, F1, A5000, A2500, and A1000. The standard polystyrenes are each dissolved into ODCB containing 0.32 mg/mL of TMP for the measurement of an ethylene (co)polymer or ODCB containing 0.5 mg/mL of BHT for the measurement of a propylene copolymer. The standard concentrations are all 0.5 mg/mL. A calibration curve is drawn by injecting 0.2 mL of each of the solutions. In the preparation of the calibration curve, a cubic equation obtained by least squares approximation is used. The following numerical values are used in the viscosity equation $[\eta] = K \times M\alpha$ used for the conversion to a molecular weight.

PS:

$$K = 1.38 \times 10^{-4}, \alpha = 0.7$$

PP:

$$K = 1.03 \times 10^{-4}, \alpha = 0.78$$

The catalytic activity was calculated by the following equation.

[Math. 1]

$$\text{Catalytic activity(kg/mol/h)} = \frac{\text{Yield (kg) of polymer obtained}}{\text{Amount of substance (mol) of ligand used} \times \text{Reaction time (h)}}$$

"Toluene (mL)" described in Tables indicates the total amount of toluene added to the autoclave.

(Synthesis Example 1: Synthesis of AL-1)

[Chem. 20]

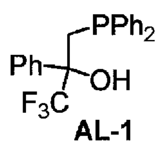

**AL-1**

1.84 mL (10.7 mmol) of diphenylphosphine was weighed into a Schlenk tube, and 10 mL of tetrahydrofuran was added to form a solution. At room temperature, 25.8 mL (23.5 mmol) of borane-tetrahydrofuran complex (about 0.9 mol/L) was added. The mixture was stirred at room temperature for 1 hour, and the solvent was completely distilled off. 30 mL of tetrahydrofuran was added to the Schlenk tube, and the mixture was cooled to -78°C. Subsequently, 7.5 mL (11.8 mmol) of n-butyllithium was slowly added dropwise. After the completion of the dropwise addition, the mixture was stirred at room temperature for 1 hour. After the mixture was cooled to 0°C, a solution of 2.013 g (10.7 mmol) of $\alpha$-(trifluoromethyl)styrene oxide in 10 mL of tetrahydrofuran was slowly added. The mixture was stirred at room temperature for 1 hour, and the solvent was completely distilled off. The residue was washed once with each of 40 mL and 20 mL of hexane. After the washing, the solvent was completely distilled off, and 30 mL of tetrahydrofuran was added. After the mixture was cooled to 0°C, 6.4 mL (12.8 mmol) of hydrogen chloride solution in ether was slowly added dropwise. The mixture was stirred at room temperature for 15 minutes, and subsequently 30 mL of degassed water and 40 mL of ether were added to extract an organic layer. 40 mL of ether was added to the aqueous layer to extract an organic layer. This operation was repeated twice. The organic layers were combined and dried with sodium sulfate. The sodium sulfate was removed using a glass filter. The solvent in the organic layer thus recovered was completely distilled off.

20 mL of toluene was added to the residue obtained above. A solution of 1.200 g (10.7 mmol) of 1,4-diazabicyclo[2.2.2]octane in 10 mL of toluene was added thereto. The temperature was raised to 60°C, and stirring was performed for 2 hours. After the stirring, the solvent was completely distilled off. The residue was purified by silica gel column chromatography using toluene to give 2.54 g of a solid. The purity determined by $^{31}P\{^{1}H\}$-NMR was 100%.

$^{1}H$-NMR (400 MHz, $CDCl_3$) $\delta$: 7.49-7.16 (m, 15H), 3.04 (d, J = 2.8 Hz, 1H), 3.02 (d, J = 2.2 Hz, 1H)
$^{19}F$-NMR (376 MHz, $CDCl_3$) $\delta$: -79.8 (d, J = 11.0 Hz)
$^{31}P\{^{1}H\}$-NMR (162 MHz, $CDCl_3$) $\delta$: -29.5 (q, J = 7.3 Hz)

(Synthesis Example 2: Synthesis of AL-2)

[Chem. 21]

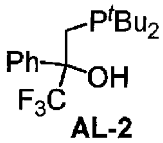

AL-2

21.931 g (15 mmol) of a hexane solution (10 wt%) of di-tert-butylphosphine was weighed into a Schlenk tube, and 100 mL of tetrahydrofuran was added to form a solution. At room temperature, 36.2 mL (33 mmol) of borane-tetrahydrofuran complex (about 0.9 mol/L) was added. The mixture was stirred at room temperature for 1 hour, and the solvent was completely distilled off. 50 mL of tetrahydrofuran was added to the Schlenk tube, and the mixture was cooled to -78°C. Subsequently, 10.5 mL (16.5 mmol) of n-butyllithium was slowly added dropwise. After the completion of the dropwise addition, the mixture was stirred at room temperature for 1 hour. After the mixture was cooled to 0°C, a solution of 2.822 g (15.0 mmol) of $\alpha$-(trifluoromethyl)styrene oxide in 15 mL of tetrahydrofuran was slowly added. The mixture was stirred at room temperature for 1 hour, and the solvent was completely distilled off. The residue was washed once with each of 40 mL and 30 mL of hexane. After the washing, the solvent was completely distilled off, and 50 mL of tetrahydrofuran was added. After the mixture was cooled to 0°C, 9.0 mL (18.0 mmol) of hydrogen chloride solution in ether was slowly added dropwise. The mixture was stirred at room temperature for 15 minutes, and subsequently 30 mL of degassed water and 40 mL of ether were added to extract an organic layer. 40 mL of ether was added to the aqueous layer to extract an organic layer. This operation was repeated twice. The organic layers were combined and dried with sodium sulfate. The sodium sulfate was removed using a glass filter. The solvent in the organic layer thus recovered was completely distilled off.

20 mL of toluene was added to the residue obtained above. A solution of 1.682 g (15.0 mmol) of 1,4-diazabicyclo[2.2.2]octane in 10 mL of toluene was added thereto. The temperature was raised to 60°C, and stirring was performed for 2 hours. After the stirring, the solvent was completely distilled off. The residue was purified by silica gel column chromatography using toluene to give 3.16 g of a solid. The purity determined by $^{31}P\{^{1}H\}$-NMR was 99%.

$^{1}H$-NMR (400 MHz, $CDCl_3$) $\delta$: 7.61 (d, J = 7.7 Hz, 2H), 7.38-7.28 (m, 3H), 4.10 (d, J = 10.1 Hz, 1H), 2.51 (dd, J = 15.7, 4.4 Hz, 1H), 2.21 (dd, J = 15.7, 4.7 Hz, 1H), 1.22 (d, J = 12.0 Hz, 9H), 0.87 (d, J = 12.0 Hz, 9H)
$^{19}F$-NMR (376 MHz, $CDCl_3$) $\delta$: -78.6 (d, J = 11.0 Hz)

$^{31}P\{^1H\}$-NMR (162 MHz, $CDCl_3$) δ: 6.7 (q, J = 8.0 Hz)

(Synthesis Example 3: Synthesis of AL-3)

[Chem. 22]

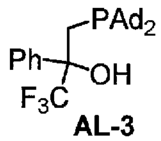

AL-3

969 mg (3.0 mmol) of di-1-adamantylphosphine borane was weighed into a Schlenk tube, and 38 mL of tetrahydrofuran was added. After the mixture was cooled to -78°C, 2.1 mL (3.3 mmol) of n-butyllithium was slowly added dropwise. After the completion of the dropwise addition, the mixture was stirred at room temperature for 1 hour. After the mixture was cooled to 0°C, a solution of 598 mg (3.0 mmol) of α-(trifluoromethyl)styrene oxide in 10 mL of tetrahydrofuran was slowly added. The mixture was stirred at room temperature for 1 hour and 30 minutes, and the solvent was completely distilled off. The residue was washed once with each of 20 mL and 10 mL of hexane. After the washing, the solvent was completely distilled off, and 27 mL of tetrahydrofuran was added. After the mixture was cooled to 0°C, 1.8 mL (3.6 mmol) of hydrogen chloride solution in ether was slowly added dropwise. The mixture was stirred at room temperature for 30 minutes, and subsequently 15 mL of degassed water was added, and an organic layer was separated. 10 mL of ether was added to the aqueous layer to extract an organic layer. This operation was repeated three times. The organic layers were combined and dried with sodium sulfate. The sodium sulfate was removed using a glass filter. The solution thus recovered was evaporated completely to dryness to give 1.214 g (2.4 mmol) of a residue.

24 mL of toluene was added to the residue obtained above. A solution of 325 mg (2.9 mmol) of 1,4-diazabicyclo[2.2.2]octane in 12 mL of toluene was added thereto. The temperature was raised to 60°C, and stirring was performed for 2 hours. After the stirring, the solvent was completely distilled off. The residue was purified by silica gel column chromatography using toluene. After the purification, the product was recrystallized from 4 mL of tetrahydrofuran and 20 mL of hexane to give 367 mg of a solid. The supernatant after the recrystallization was concentrated, and the concentrate was recrystallized from 2 mL of tetrahydrofuran and 10 mL of hexane to give another 300 mg of a solid. The supernatant was further recrystallized from 1.8 mL of dichloromethane and 9 mL of hexane to give another 80 mg of a solid. The purity determined by $^{31}P\{^1H\}$-NMR was 96%.

$^1H$-NMR (400 MHz, $CDCl_3$) δ: 7.61 (d, J = 7.8 Hz, 2H), 7.36 (t, J = 7.6 Hz, 2H), 7.29 (t, J = 7.3 Hz, 1H), 4.17 (d, J = 10.2 Hz, 1H), 2.51 (dd, J = 15.7, 4.4 Hz, 1H), 2.26 (dd, J = 15.6, 4.6 Hz, 1H), 2.04-1.44 (m, 30H)
$^{19}F$-NMR (376 MHz, $CDCl_3$) δ: -78.4
$^{31}P\{^1H\}$-NMR (162 MHz, $CDCl_3$) δ: 2.4 (q, J = 6.7 Hz)

(Synthesis Example 4: Synthesis of AL-4)

[Chem. 23]

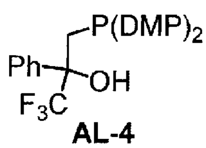

AL-4

700 mg (2.2 mmol) of bis(2,6-dimethoxyphenyl)phosphine borane was weighed into a Schlenk tube, and 28 mL of tetrahydrofuran was added. After the mixture was cooled to -78°C, 1.5 mL (2.4 mmol) of n-butyllithium was slowly added dropwise. After the completion of the dropwise addition, the mixture was stirred at room temperature for 1 hour and 10 minutes. After the mixture was cooled to 0°C, a solution of 437 mg (2.2 mmol) of α-(trifluoromethyl)styrene oxide in 7 mL of tetrahydrofuran was slowly added. The mixture was stirred at room temperature for 4 hours, and the solvent

was completely distilled off. The residue was washed once with each of 30 mL and 20 mL of hexane. After the washing, the solvent was completely distilled off, and 21 mL of tetrahydrofuran was added. After the mixture was cooled to 0°C, 1.3 mL (2.6 mmol) of hydrogen chloride solution in ether was slowly added dropwise. The mixture was stirred at room temperature for 50 minutes, and subsequently 21 mL of degassed water was added, and an organic layer was separated. 28 mL of ether was added to the aqueous layer to extract an organic layer. This operation was repeated three times. Furthermore, 10 mL of dichloromethane was added to the aqueous layer to extract an organic layer. This operation was repeated twice. Only the organic layers extracted with dichloromethane were combined and dried with sodium sulfate. The sodium sulfate was removed using a glass filter. The solution thus recovered was evaporated completely to dryness to give 614 mg (1.2 mmol) of a residue.

14 mL of toluene was added to the residue obtained above. A solution of 162 mg (1.4 mmol) of 1,4-diazabicyclo[2.2.2]octane in 7 mL of toluene was added thereto. The temperature was raised to 60°C, and stirring was performed for 2 hours. After the stirring, the solvent was completely distilled off. The residue was purified by silica gel column chromatography using hexane:acetone = 3:2 as an eluent. After the purification, the product was recrystallized from 7 mL of tetrahydrofuran and 28 mL of hexane to give 398 mg of a solid. The purity determined by $^{31}P\{^1H\}$-NMR was 90%.

$^1H$-NMR (400 MHz, $CDCl_3$) δ: 7.48-7.46 (m, 2H), 7.21-7.19 (m, 3H), 7.17-7.11 (m, 2H), 6.46 (dd, J = 8.3, 2.8 Hz, 2H), 6.37 (dd, J = 8.4, 2.6 Hz, 2H), 5.02 (d, J = 3.7 Hz, 1H), 4.01 (dd, J = 15.3, 2.3 Hz, 1H), 3.64 (s, 6H), 3.52 (s, 6H), 2.90 (d, J = 15.4 Hz, 1H)
$^{19}F$-NMR (376 MHz, $CDCl_3$) δ: -80.4
$^{31}P\{^1H\}$-NMR (162 MHz, $CDCl_3$) δ: -57.9 (q, J = 5.5 Hz)

(Synthesis Example 5: Synthesis of AL-5)

[Chem. 24]

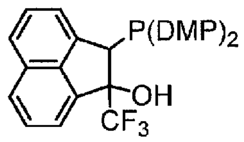

**AL-5**

129 mg (0.42 mmol) of bis(2,6-dimethoxyphenyl)phosphine was weighed into a Schlenk tube, and 5.4 mL of tetrahydrofuran was added. After the mixture was cooled to -78°C, 0.29 mL (0.46 mmol) of n-butyllithium was slowly added dropwise. After the completion of the dropwise addition, the mixture was stirred at -78°C for 30 minutes. After the temperature was raised to 0°C, a solution of 100 mg (0.42 mmol) of 1-trifluoromethyl-1,2-epoxyacenaphthene in 1.8 mL of tetrahydrofuran was slowly added. The mixture was stirred at room temperature for 2 hours and 45 minutes. After the mixture was cooled to 0°C, 0.25 mL (0.50 mmol) of hydrogen chloride solution in ether was slowly added dropwise. The mixture was stirred at 0°C for 30 minutes, and subsequently 4 mL of degassed water was added, and an organic layer was separated. 4 mL of hexane was added to the aqueous layer to extract an organic layer. This operation was repeated three times. Furthermore, 4 mL of dichloromethane was added to the aqueous layer to extract an organic layer. This operation was repeated three times. Only the organic layers extracted with dichloromethane were combined and dried with sodium sulfate. The sodium sulfate was removed using a glass filter. The solution thus recovered was evaporated completely to dryness, and the residue was recrystallized from 7 mL of dichloromethane and 28 mL of hexane to give 91 mg of a solid. The purity determined by $^{31}P\{^1H\}$-NMR was 100%.

$^1H$-NMR (400 MHz, $CDCl_3$) δ: 7.77 (d, J = 8.2 Hz, 1H), 7.70 (d, J = 7.1 Hz, 1H), 7.56 (d, J = 7.1 Hz, 1H), 7.54 (d, J = 8.1 Hz, 1H), 7.30 (t, J = 8.4 Hz, 1H), 7.22 (dd, J = 8.8, 8.2 Hz, 1H), 7.13 (dd, J = 8.1, 7.5 Hz, 1H), 6.58 (dd, J = 8.5, 2.3 Hz, 2H), 6.49 (dd, J = 8.4, 2.6 Hz, 2H), 6.24 (d, J = 7.2 Hz, 1H), 6.15 (brs, 1H), 5.07 (s, 1H), 3.83 (s, 6H), 3.56 (s, 6H)
$^{19}F$-NMR (376 MHz, $CDCl_3$) δ: -74.3 (d, J = 66.0 Hz)
$^{31}P\{^1H\}$-NMR (162 MHz, $CDCl_3$) δ: -42.5 (q, J = 66.0 Hz)

(Synthesis Example 6: Synthesis of AL-6)

[Chem. 25]

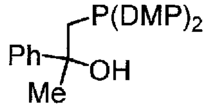

**AL-6**

528 mg (1.65 mmol) of bis(2,6-dimethoxyphenyl)phosphine borane was weighed into a Schlenk tube, and 21 mL of tetrahydrofuran was added. After the mixture was cooled to -78°C, 1.26 mL (1.98 mmol) of n-butyllithium was slowly added dropwise. After the completion of the dropwise addition, the mixture was stirred at room temperature for 1 hour and 10 minutes. After the mixture was cooled to 0°C, a solution of 0.26 mL (1.98 mmol) of α-methylstyrene oxide in 5.3 mL of tetrahydrofuran was slowly added. The mixture was stirred at room temperature for 3 hours, and the solvent was completely distilled off. The residue was washed once with each of 20 mL and 15 mL of hexane. After the washing, the solvent was completely distilled off, and 15 mL of tetrahydrofuran was added. After the mixture was cooled to 0°C, 0.99 mL (1.98 mmol) of hydrogen chloride solution in ether was slowly added dropwise. The mixture was stirred at room temperature for 30 minutes, and subsequently 15 mL of degassed water was added, and an organic layer was separated. 20 mL of ether was added to the aqueous layer to extract an organic layer. This operation was performed twice. 10 mL of ether was added to the aqueous layer to extract an organic layer. This operation was performed once. The organic layers were combined and dried with sodium sulfate. The sodium sulfate was removed using a glass filter. The solution thus recovered was evaporated completely to dryness. The residue was purified by silica gel column chromatography using hexane:acetone = 3:1 as an eluent under air to give 503 mg of a solid.

A 450 mg portion of the solid obtained above was dissolved into 10 mL of toluene. A solution of 135 mg (1.20 mmol) of 1,4-diazabicyclo[2.2.2]octane in 5 mL of toluene was added thereto. The temperature was raised to 60°C, and stirring was performed for 1 hour and 40 minutes. After the stirring, the solvent was completely distilled off. The residue was purified by silica gel column chromatography using hexane: acetone = 3:2 as an eluent. After the purification, the product was recrystallized from 4 mL of tetrahydrofuran and 20 mL of hexane to give 189 mg of a solid. The purity determined by $^{31}P\{^1H\}$-NMR was 93%.

$^1H$-NMR (400 MHz, $CDCl_3$) δ: 7.38 (d, J = 7.3 Hz, 2H), 7.18-7.13 (m, 3H), 7.07 (t, J = 8.5 Hz, 2H), 6.44 (dd, J = 8.4, 2.6 Hz, 2H), 6.34 (dd, J = 8.4, 2.6 Hz, 2H), 3.86 (d, J = 6.7 Hz, 1H), 3.65 (s, 6H), 3.56 (s, 6H), 3.42 (dd, J = 15.0, 2.9 Hz, 1H), 3.04 (d, J = 15.2 Hz, 1H), 1.62 (s, 3H)
$^{31}P\{^1H\}$-NMR (162 MHz, $CDCl_3$) δ: -56.6

(Synthesis Example 7: Synthesis of AL-7)

[Chem. 26]

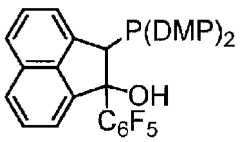

**AL-7**

92 mg (0.30 mmol) of bis(2,6-dimethoxyphenyl)phosphine was weighed into a Schlenk tube, and 3.9 mL of tetrahydrofuran was added. After the mixture was cooled to -78°C, 0.21 mL (0.33 mmol) of n-butyllithium was slowly added dropwise. After the completion of the dropwise addition, the mixture was stirred at -78°C for 30 minutes. After the temperature was raised to 0°C, a solution of 100 mg (0.30 mmol) of 1-pentafluorophenyl-1,2-epoxyacenaphthene in 1.6 mL of tetrahydrofuran was slowly added. The mixture was stirred at room temperature for 2 hours and 15 minutes. After the mixture was cooled to 0°C, 0.18 mL (0.36 mmol) of hydrogen chloride solution in ether was slowly added dropwise. The mixture was stirred at 0°C for 25 minutes, and subsequently 3 mL of degassed water was added, and an organic layer was separated. 3 mL of ether was added to the aqueous layer to extract an organic layer. This operation was repeated three times. The organic layers were combined and dried with sodium sulfate. The sodium sulfate was removed using a glass filter. The solution thus recovered was evaporated completely to dryness, and the residue was recrystallized

from 4 mL of tetrahydrofuran and 20 mL of hexane to give 75 mg of a solid. The purity determined by $^{31}P\{^1H\}$-NMR was 100%.

$^1H$-NMR (400 MHz, $CDCl_3$) δ: 8.14 (d, J = 8.2 Hz, 1H), 8.04 (d, J = 7.2 Hz, 1H), 7.86 (d, J = 8.4 Hz, 1H), 7.77 (dd, J = 8.0, 7.4 Hz, 1H), 7.58 (dd, J = 8.5, 7.0 Hz, 1H), 7.29 (d, J = 7.0 Hz, 1H), 7.26-7.20 (m, 2H), 6.49-6.45 (m, 4H), 5.29 (s, 1H), 3.60 (s, 6H), 3.57 (s, 6H)
$^{19}F$-NMR (376 MHz, $CDCl_3$) δ: -132.9 to -133.0 (m, 4F), -147.8 (brs, 1F) $^{31}P\{^1H\}$-NMR (162 MHz, $CDCl_3$) δ: -65.2 (t, J = 35.5 Hz)

(Synthesis Example 8: Synthesis of AL-8)

[Chem. 27]

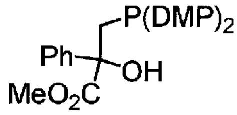

**AL-8**

224 mg (0.7 mmol) of bis(2,6-dimethoxyphenyl)phosphine borane was weighed into a Schlenk tube, and 10 mL of tetrahydrofuran was added. After the mixture was cooled to -78°C, 0.5 mL (0.77 mmol) of n-butyllithium was slowly added dropwise. After the completion of the dropwise addition, the mixture was stirred at room temperature for 3 hours. After the mixture was cooled to 0°C, a solution of 124.7 mg (0.7 mmol) of methyl-2-phenyloxirane 2-carboxylate in 3.5 mL of tetrahydrofuran was slowly added. The mixture was stirred at room temperature for 3 hours, and 0.42 mL (0.84 mmol) of hydrogen chloride solution in ether was slowly added dropwise. After stirring was performed, 10 mL of degassed water was added, and an organic layer was separated. 10 mL of dichloromethane was added to the aqueous layer to extract an organic layer. This operation was repeated three times. Only the organic layers extracted with dichloromethane were combined, washed with a saturated aqueous sodium chloride solution, and dried with sodium sulfate. The sodium sulfate was removed using a glass filter. The solvent in the organic layer thus recovered was completely distilled off. The residue was purified by silica gel chromatography using hexane:acetone = 5:2 as an eluent to give 165 mg (0.33 mmol) of a solid.
6 mL of toluene was added to the solid obtained above. A solution of 44.6 mg (0.4 mmol) of 1,4-diazabicyclo[2.2.2]octane in 4 mL of toluene was added thereto. The temperature was raised to 60°C, and stirring was performed for 3 hours. After the stirring, the solvent was completely distilled off. The residue was purified by silica gel column chromatography using hexane:acetone = 3:4 as an eluent. After the purification, the product was recrystallized from 5 mL of dichloromethane and 15 mL of hexane to give 150 mg of a solid. The solid obtained was further recrystallized from 2 mL of dichloromethane and 8 mL of hexane to give 78 mg of a solid. The purity determined by $^{31}P\{^1H\}$-NMR was 91%.

$^1H$-NMR (400 MHz, $CDCl_3$) δ: 7.62 (d, J = 8.4 Hz, 2H), 7.30-7.09 (m, 5H), 6.46 (dd, J = 8.4, 2.8 Hz, 2H), 6.39 (dd, J = 8.4, 2.8 Hz, 2H), 4.45 (d, J = 4.0 Hz, 1H), 3.77 (d, J = 15.1 Hz, 1H), 3.68 (s, 6H), 3.61 (s, 6H), 3.46 (s, 3H), 3.41 (d, J = 14.8 Hz, 1H) $^{31}P\{^1H\}$-NMR (162 MHz, $CDCl_3$) δ: -54.4

(Synthesis Example 9: Synthesis of AL-11)

[Chem. 28]

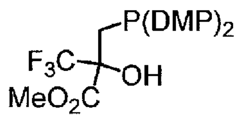

**AL-11**

560 mg (1.75 mmol) of bis(2,6-dimethoxyphenyl)phosphine borane was weighed into a Schlenk tube, and 23 mL of tetrahydrofuran was added. After the mixture was cooled to -78°C, 1.2 mL (1.93 mmol) of n-butyllithium was slowly added dropwise. After the completion of the dropwise addition, the mixture was stirred at room temperature for 30 minutes. After the mixture was cooled to 0°C, a solution of 298 mg (1.75 mmol) of methyl 2-(trifluoromethyl)-2-oxiranecarboxylate in 5.7 mL of tetrahydrofuran was slowly added. The mixture was stirred at room temperature for 3 hours. The solvent was completely distilled off, and the residue was washed with 10 mL of hexane twice. After the washing, the solvent was completely distilled off, and 16 mL of tetrahydrofuran was added. After the mixture was cooled to 0°C, 0.80 mL (1.6 mmol) of hydrogen chloride solution in ether was slowly added dropwise. The mixture was stirred at room temperature for 30 minutes, and subsequently 15 mL of degassed water was added, and an organic layer was separated. 10 mL of ether was added to the aqueous layer to extract an organic layer. This operation was repeated three times. The organic layers were combined and dried with sodium sulfate. The sodium sulfate was removed using a glass filter. The solution thus recovered was evaporated completely to dryness, and the residue was purified by silica gel chromatography to give 145 mg of a solid. This operation was performed under air, and the eluent was changed from hexane:acetone = 200:1 to 50:1 and then to 3:1.

A 115 mg portion of the solid obtained above was dissolved into 2.3 mL of toluene. A solution of 31 mg (0.28 mmol) of 1,4-diazabicyclo[2.2.2]octane in 1.2 mL of toluene was added thereto. The temperature was raised to 60°C, and stirring was performed for 1 hour and 45 minutes. After the stirring, the solvent was completely distilled off. The residue was purified by silica gel column chromatography using hexane: acetone = 3:2 as an eluent. After the purification, the product was recrystallized from 2 mL of tetrahydrofuran and 8 mL of hexane to give 69 mg of a solid. The purity determined by $^{31}P\{^{1}H\}$-NMR was 97%.

$^{1}H$-NMR (400 MHz, $CDCl_3$) $\delta$: 7.19 (t, J = 8.4, 1H), 7.14 (t, J = 8.0 Hz, 1H), 6.48-6.44 (m, 4H), 4.54 (d, J = 2.2 Hz, 1H), 3.67 (s, 6H), 3.66 (s, 6H), 3.58 (s, 3H), 3.13 (d, J = 14.9 Hz, 1H)
$^{19}F$-NMR (376 MHz, $CDCl_3$) $\delta$: -79.0
$^{31}P\{^{1}H\}$-NMR (162 MHz, $CDCl_3$) $\delta$: -54.9 (q, J = 5.4 Hz)

(Synthesis Example 10: Synthesis of AL-14)

[Chem. 29]

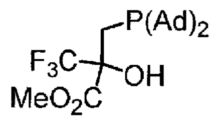

**AL-14**

521 mg (1.65 mmol) of di-1-adamantylphosphine borane was weighed into a Schlenk tube, and 21 mL of tetrahydrofuran was added. After the mixture was cooled to -78°C, 1.1 mL (1.76 mmol) of n-butyllithium was slowly added dropwise. After the completion of the dropwise addition, the mixture was stirred at room temperature for 1 hour and 50 minutes. After the mixture was cooled to 0°C, a solution of 300 mg (1.60 mmol) of methyl 2-(trifluoromethyl)-2-oxiranecarboxylate in 5.2 mL of tetrahydrofuran was slowly added. The mixture was stirred at room temperature for 1 hour, and the solvent was completely distilled off. The residue was washed with 10 mL of hexane twice. After the washing, the solvent was completely distilled off, and 15 mL of tetrahydrofuran was added. After the mixture was cooled to 0°C, 0.96 mL (1.92 mmol) of hydrogen chloride solution in ether was slowly added dropwise. The mixture was stirred at room temperature for 35 minutes, and subsequently 15 mL of degassed water was added, and an organic layer was separated. 8 mL of ether was added to the aqueous layer to extract an organic layer. This operation was repeated three times. The organic layers were combined and dried with sodium sulfate. The sodium sulfate was removed using a glass filter. The solution thus recovered was evaporated completely to dryness, and the residue was purified by silica gel chromatography to give 347 mg of a solid. This operation was performed under air, and the eluent was changed from hexane:acetone = 25:1 to 10:1.

7 mL of toluene was added to 347 mg of the solid obtained above. A solution of 94 mg (0.84 mmol) of 1,4-diazabicyclo[2.2.2]octane in 3.5 mL of toluene was added thereto. The temperature was raised to 60°C, and stirring was performed for 6 hours and 30 minutes. After the stirring, the solvent was completely distilled off. The residue was purified by silica gel column chromatography using hexane:acetone = 2:1 as an eluent. After the purification, the product was recrystallized from 2 mL of tetrahydrofuran and 8 mL of hexane, and the supernatant was extracted. The supernatant

was dried, and the residue was recrystallized again from 1 mL of tetrahydrofuran and 10 mL of hexane. The supernatant was extracted and was evaporated to dryness to give 152 mg of a solid. The purity determined by $^{31}P\{^1H\}$-NMR was 90%.

$^1H$-NMR (400 MHz, $CDCl_3$) δ: 3.93 (s, 1H), 3.77 (s, 3H), 2.11 (dd, J = 15.4, 4.3 Hz, 1H), 2.00-1.64 (m, 31H)
$^{19}F$-NMR (376 MHz, $CDCl_3$) δ: -78.1
$^{31}P\{^1H\}$-NMR (162 MHz, $CDCl_3$) δ: 13.5

(Synthesis Example 11: Synthesis of AL-16)

[Chem. 30]

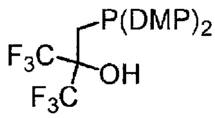

**AL-16**

535 mg (1.67 mmol) of bis(2,6-dimethoxyphenyl)phosphine borane was weighed into a Schlenk tube, and 21 mL of tetrahydrofuran was added. After the mixture was cooled to -78°C, 1.2 mL (1.84 mmol) of n-butyllithium was slowly added dropwise. After the completion of the dropwise addition, the mixture was stirred at room temperature for 2 hours and 15 minutes. After the mixture was cooled to 0°C, a solution of 0.18 mL (1.67 mmol) of 2,2-bis(trifluoromethyl)oxirane in 5.4 mL of tetrahydrofuran was slowly added. The mixture was stirred at room temperature for 1 hour and 40 minutes, and the solvent was completely distilled off. The residue was washed with 10 mL of hexane twice. After the washing, the solvent was completely distilled off, and 16 mL of tetrahydrofuran was added. After the mixture was cooled to 0°C, 1.0 mL (2.00 mmol) of hydrogen chloride solution in ether was slowly added dropwise. The mixture was stirred at room temperature for 30 minutes, and subsequently 15 mL of degassed water was added, and an organic layer was separated. 8 mL of ether was added to the aqueous layer to extract an organic layer. This operation was repeated three times. The organic layers were combined and dried with sodium sulfate. The sodium sulfate was removed using a glass filter. The solution thus recovered was evaporated completely to dryness to give 722 mg (1.44 mmol) of a residue.

14 mL of toluene was added to the residue obtained above. A solution of 194 mg (1.73 mmol) of 1,4-diazabicyclo[2.2.2]octane in 7 mL of toluene was added thereto. The temperature was raised to 60°C, and stirring was performed for 2 hours. After the stirring, the solvent was completely distilled off. The residue was purified by silica gel column chromatography using hexane:acetone = 2:1 as an eluent. After the purification, the product was recrystallized from 2 mL of tetrahydrofuran and 8 mL of hexane to give 471 mg of a solid. The purity determined by $^{31}P\{^1H\}$-NMR was 97%.

$^1H$-NMR (400 MHz, $CDCl_3$) δ: 7.22 (t, J = 8.4, 2H), 6.49 (dd, J = 8.4, 3.0 Hz, 4H), 5.25 (d, J = 5.8 Hz, 1H), 3.68 (s, 12H), 3.19 (s, 2H)
$^{19}F$-NMR (376 MHz, $CDCl_3$) δ: -77.3 (d, J = 17.5 Hz)
$^{31}P\{^1H\}$-NMR (162 MHz, $CDCl_3$) δ: -62.0 (septet, J = 20.0 Hz)

[Synthesis Example 12] (AL-17)

[Chem. 31]

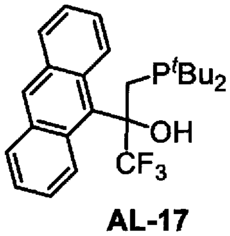

**AL-17**

1.0 g (5.5 mmol) of di-tert-butylphosphine chloride was weighed into a Schlenk tube, and 7.7 mL of tetrahydrofuran was added. The solution thus formed was cooled to -78°C, and 5.6 mL (6.1 mmol) of an ether solution of methyllithium (about 1.09 mol/L) was slowly added. The mixture was stirred for 1 hour. Subsequently, the mixture was stirred at room temperature for 1 hour, and 7.4 mL (6.6 mmol) of borane-tetrahydrofuran complex (about 0.89 mol/L) was added at room temperature. The mixture was allowed to stand at room temperature overnight. Subsequently, 3.8 mL of a saturated aqueous sodium hydrogen carbonate solution was slowly added under air, and the mixture was left until bubbling stopped. The organic layer was separated. 4 mL of ether was added to the aqueous layer to extract an organic layer. This operation was repeated twice. The organic layers were combined and dried with sodium sulfate. The sodium sulfate was removed using a glass filter. The solution thus recovered was evaporated completely to dryness to give 834 mg (4.8 mmol) of di-tert-butylmethylphosphine borane.

381 mg (2.19 mmol) of the above di-tert-butylmethylphosphine borane was weighed into a Schlenk tube, and 27 mL of tetrahydrofuran was added. After the mixture was cooled to -78°C, 1.8 mL (2.42 mmol) of sec-butyllithium was slowly added dropwise. After the completion of the dropwise addition, the mixture was stirred at -78°C for 10 minutes and was stirred at room temperature for 2 hours and 15 minutes. After the mixture was cooled to -78°C, 2.1 mL (2.71 mmol) of sec-butyllithium was slowly added dropwise. After the completion of the dropwise addition, the mixture was stirred at -78°C for 10 minutes and was stirred at room temperature for 1 hour and 15 minutes. After the mixture was cooled to -78°C, a solution of 600 mg (2.19 mmol) of (trifluoromethyl)oxirane in 6.9 mL of tetrahydrofuran was slowly added. The mixture was stirred at room temperature for 1 hour, and the solvent was completely distilled off. The residue was washed with 12 mL of hexane twice. After the washing, the solvent was completely distilled off, and 23 mL of tetrahydrofuran was added. After the mixture was cooled to 0°C, 1.62 mL (3.23 mmol) of hydrogen chloride solution in ether was slowly added dropwise. The mixture was stirred at room temperature for 30 minutes, and subsequently 21 mL of degassed water was added, and an organic layer was separated. 12 mL of ether was added to the aqueous layer to extract an organic layer. This operation was repeated three times. The organic layers were combined and dried with sodium sulfate. The sodium sulfate was removed using a glass filter. The solution thus recovered was evaporated completely to dryness, and the residue was purified by silica gel column chromatography using hexane:acetone = 25:1 as an eluent to give 404 mg of a solid. This operation was performed under air.

3.4 mL of toluene was added to 151 mg of the residue obtained above. A solution of 46 mg (0.41 mmol) of 1,4-diazabicyclo[2.2.2]octane in 1.7 mL of toluene was added thereto. The temperature was raised to 60°C, and stirring was performed for 3 hours. After the stirring, the solvent was completely distilled off. The residue was purified by silica gel column chromatography using hexane:acetone = 2:1 as an eluent to give 111 mg of a solid. The purity determined by $^{31}P\{^1H\}$-NMR was 93%.

$^1H$-NMR (400 MHz, $CDCl_3$) $\delta$: 9.24 (d, J = 10.5 Hz, 1H), 8.43 (d, J = 8.6 Hz, 1H), 8.41 (s, 1H), 7.97 (dd, J = 8.4, 1.4 Hz, 1H), 7.93-7.90 (m, 1H), 7.45 (ddd, J = 9.2, 6.5, 1.6 Hz, 1H), 7.41-7.37 (m, 3H), 3.22 (dd, J = 15.8, 5.2 Hz, 1H), 2.95 (dd, J = 15.6, 3.8 Hz, 1H), 1.25 (d, J = 12.2 Hz, 9H), 0.52 (d, J = 12.2 Hz, 9H)
$^{19}F$-NMR (376 MHz, $CDCl_3$) $\delta$: -75.5
$^{31}P\{^1H\}$-NMR (162 MHz, $CDCl_3$) $\delta$: 6.6 (d, J = 5.5 Hz)

[Synthesis Example 13] (AL-18)

[Chem. 32]

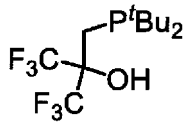

**AL-18**

267 mg (1.67 mmol) of di-tert-butylphosphine borane was weighed into a Schlenk tube, and 21 mL of tetrahydrofuran was added. After the mixture was cooled to -78°C, 1.2 mL (1.84 mmol) of n-butyllithium was slowly added dropwise. After the completion of the dropwise addition, the mixture was stirred at room temperature for 2 hours and 15 minutes. After the mixture was cooled to 0°C, a solution of 0.18 mL (1.67 mmol) of 2,2-bis(trifluoromethyl)oxirane in 5.4 mL of tetrahydrofuran was slowly added. The mixture was stirred at room temperature for 1 hour. The solvent was completely distilled off, and 16 mL of tetrahydrofuran was added. After the mixture was cooled to 0°C, 1.0 mL (2.00 mmol) of hydrogen chloride solution in ether was slowly added dropwise. The mixture was stirred at room temperature

for 50 minutes, and subsequently 15 mL of degassed water was added, and an organic layer was separated. 8 mL of ether was added to the aqueous layer to extract an organic layer. This operation was repeated twice. 4 mL of ether was added to the aqueous layer to extract an organic layer. This operation was performed once. The organic layers were combined and dried with sodium sulfate. The sodium sulfate was removed using a glass filter. The solution thus recovered was evaporated completely to dryness, and the residue was purified by silica gel column chromatography using hexane:acetone = 25:1 as an eluent to give 412 mg of a solid. This operation was performed under air.

12 mL of toluene was added to the solid obtained above. A solution of 163 mg (1.45 mmol) of 1,4-diazabicyclo[2.2.2]octane in 6 mL of toluene was added thereto. The temperature was raised to 60°C, and stirring was performed for 1 hour and 30 minutes. After the stirring, the solvent was completely distilled off. The residue was purified by silica gel column chromatography using hexane:acetone = 2:1 as an eluent to give 339 mg of a solid. The purity determined by $^{31}P\{^1H\}$-NMR was 92%.

$^1H$-NMR (400 MHz, $CDCl_3$) δ: 4.19 (d, J = 7.7 Hz, 1H), 2.17 (d, J = 3.8 Hz, 1H), 1.21 (s, 9H), 1.18 (s, 9H)
$^{19}F$-NMR (376 MHz, $CDCl_3$) δ: -76.8 (d, J = 11.0 Hz)
$^{31}P\{^1H\}$-NMR (162 MHz, $CDCl_3$) δ: 5.4

[Synthesis Example 14] (AL-19)

[Chem. 33]

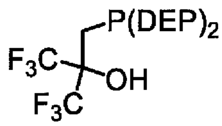

**AL-19**

500 mg (1.60 mmol) of bis(2,6-diethylphenyl)phosphine borane was weighed into a Schlenk tube, and 20 mL of tetrahydrofuran was added. After the mixture was cooled to -78°C, 1.1 mL (1.76 mmol) of n-butyllithium was slowly added dropwise. After the completion of the dropwise addition, the mixture was stirred at room temperature for 45 minutes. After the mixture was cooled to 0°C, a solution of 0.17 mL (1.60 mmol) of 2,2-bis(trifluoromethyl)oxirane in 5.4 mL of tetrahydrofuran was slowly added. The mixture was stirred at room temperature for 2 hours and 30 minutes. The solvent was completely distilled off, and 15 mL of tetrahydrofuran was added. After the mixture was cooled to 0°C, 0.96 mL (1.92 mmol) of hydrogen chloride solution in ether was slowly added dropwise. The mixture was stirred at room temperature for 30 minutes, and subsequently 15 mL of degassed water was added, and an organic layer was separated. 8 mL of ether was added to the aqueous layer to extract an organic layer. This operation was repeated three times. The organic layers were combined and dried with sodium sulfate. The sodium sulfate was removed using a glass filter. The solution thus recovered was evaporated completely to dryness, and the residue was purified by silica gel column chromatography using hexane:acetone = 20:1 as an eluent to give 406 mg of a solid. This operation was performed under air. The purity determined by $^{31}P\{^1H\}$-NMR was 99%.

$^1H$-NMR (400 MHz, $CDCl_3$) δ: 7.26 (t, J = 7.7 Hz, 2H), 7.09 (dd, J = 7.7, 3.5 Hz, 4H), 4.84 (brs, 1H), 3.06 (d, J = 3.0 Hz, 2H), 2.75 (q, J = 7.5 Hz, 8H), 1.09 (t, J = 7.5 Hz, 12H)
$^{19}F$-NMR (376 MHz, $CDCl_3$) δ: -77.3 (d, J = 10.6 Hz)
$^{31}P\{^1H\}$-NMR (162 MHz, $CDCl_3$) δ: -47.7

[Synthesis Example 15] (AL-24)

[Chem. 34]

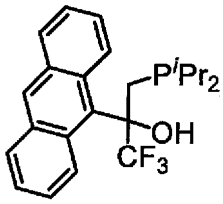

**AL-24**

1.0 g (6.6 mmol) of diisopropylphosphine chloride was weighed into a Schlenk tube, and 9.2 mL of tetrahydrofuran was added. The solution thus formed was cooled to -78°C, and 6.7 mL of an ether solution of methyllithium (about 1.09 mol/L) was slowly added. The mixture was stirred for 1 hour. Subsequently, the mixture was stirred at room temperature for 3 hours, and 8.9 mL (7.9 mmol) of boranetetrahydrofuran complex (about 0.89 mol/L) was added at room temperature. The mixture was allowed to stand at room temperature for 2 hours. Subsequently, 5.2 mL of a saturated aqueous sodium hydrogen carbonate solution was slowly added under air, and the mixture was left until bubbling stopped. The organic layer was separated. 6 mL of ether was added to the aqueous layer to extract an organic layer. This operation was repeated twice. The organic layers were combined and dried with sodium sulfate. The sodium sulfate was removed using a glass filter. The solution thus recovered was evaporated completely to dryness to give 691 mg (4.7 mmol) of diisopropylmethylphosphine borane.

159 mg (1.09 mmol) of the above diisopropylmethylphosphine borane was weighed into a Schlenk tube, and 13 mL of tetrahydrofuran was added. After the mixture was cooled to -78°C, 0.92 mL (1.20 mmol) of n-butyllithium was slowly added dropwise. After the completion of the dropwise addition, the mixture was stirred at room temperature for 2 hours and 25 minutes. After the mixture was cooled to -78°C, a solution of 300 mg (1.09 mmol) of 1-(anthracenyl)-2,2,2-trifluoroethanone in 3.4 mL of tetrahydrofuran was slowly added. The mixture was stirred at room temperature for 1 hour and 25 minutes. The solvent was completely distilled off, and 9 mL of tetrahydrofuran was added. After the mixture was cooled to 0°C, 0.66 mL (1.31 mmol) of hydrogen chloride solution in ether was slowly added dropwise. The mixture was stirred at room temperature for 30 minutes, and subsequently 9 mL of degassed water was added, and an organic layer was separated. 6 mL of ether was added to the aqueous layer to extract an organic layer. This operation was repeated three times. The organic layers were combined and dried with sodium sulfate. The sodium sulfate was removed using a glass filter. The solution thus recovered was evaporated completely to dryness, and the residue was purified by silica gel column chromatography to give 246 mg of a solid. This operation was performed under air, and the eluent was changed from hexane:acetone = 25:1 to 10:1.

2.4 mL of toluene was added to 101 mg of the solid obtained above. A solution of 33 mg (0.29 mmol) of 1,4-diazabicyclo[2.2.2]octane in 1.2 mL of toluene was added thereto. The temperature was raised to 60°C, and stirring was performed for 3 hours and 15 minutes. After the stirring, the solvent was completely distilled off. The residue was purified by silica gel column chromatography using hexane:acetone = 2:1 as an eluent. After the purification, 2 mL of methanol was added. The supernatant was extracted. An operation was performed three times in which 2 mL of hexane was added and the solvent was completely distilled off. Thus, 79 mg of a solid was obtained. The purity determined by $^{31}P\{^1H\}$-NMR was 94%.

$^1H$-NMR (400 MHz, $CDCl_3$) δ: 9.17 (brs, 1H), 8.43 (s, 1H), 8.40 (brs, 1H), 7.96 (brs, 2H), 7.46-7.37 (m, 4H), 4.55 (d, J = 12.6 Hz, 1H), 3.09 (dd, J = 15.2, 5.3 Hz, 1H), 2.78 (dd, J = 15.2, 4.3 Hz, 1H), 1.87-1.83 (m, 1H), 1.15-1.05 (m, 7H), 0.53-0.44 (m, 6H) $^{19}F$-NMR (376 MHz, $CDCl_3$) δ: -75.0
$^{31}P\{^1H\}$-NMR (162 MHz, $CDCl_3$) δ: -11.7 (q, J = 8.5 Hz)

[Synthesis Example 16] (AL-26)

[Chem. 35]

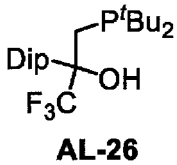

**AL-26**

254 mg (1.46 mmol) of di-tert-butylphosphine borane was weighed into a Schlenk tube, and 18 mL of tetrahydrofuran was added. The mixture was cooled to - 78°C, and 2.7 mL of sec-butyllithium (1.3 M) was slowly added dropwise thereto. After the completion of the dropwise addition, the mixture was stirred at room temperature for 1 hour. The resulting solution was cooled again to -78°C. 380 mg (1.47 mmol) of 2',6'-diisopropyl-2,2,2-trifluoroacetophenone was weighed into another Schlenk tube, and 5 mL of tetrahydrofuran was added to form a ketone solution. The ketone solution was slowly added to the resulting solution that had been cooled. Subsequently, the mixture was stirred at room temperature for 2 hours. The resulting solution was cooled to 0°C, and 2 mL (4 mmol) of hydrogen chloride solution in ether was added. The following operations were performed under air. Water (14 mL) was added and an organic layer was separated. 8 mL of ether was added to the aqueous layer to extract an organic layer. This operation was repeated three times. The organic layers were combined and dried with sodium sulfate. The mixture was filtered. The filtrate was recovered and was vacuum-dried at 40°C to give 459 mg of a residue.
The residue was dissolved into a minimum amount of acetone, and the solution was purified by silica gel column chromatography using hexane:acetone = 100:1 as an eluent to give 151 mg of a solid. The following operations were performed in a nitrogen atmosphere.
The whole 151 mg (0.349 mmol) of the solid obtained above was transferred to another Schlenk tube using 3 mL of toluene. A solution of 47 mg (0.419 mmol) of 1,4-diazabicyclo[2.2.2]octane in 2 mL of toluene was added thereto, and the mixture was stirred at 60°C for 4 hours. The mixture was evaporated completely to dryness to give a residue. The residue was dissolved by addition of 2 mL of dichloromethane. The solution was purified by silica gel column chromatography using dichloromethane as an eluent. The solution containing the target substance was evaporated to dryness at 40°C to give 119 mg of a solid. The purity determined by $^{31}P\{^1H\}$-NMR was 97%.

$^1H$-NMR (400 MHz, $CDCl_3$) $\delta$: 7.26-7.16 (m, 3H), 5.06 (d, J = 14.8 Hz, 1H), 4.25 (septet, J = 6.8 Hz, 1H), 3.45 (septet, J = 6.8 Hz, 1H), 2.82 (dd, J = 15.2, 3.2 Hz, 1H), 2.48 (dd, J = 5.6, 15.6 Hz, 1H), 1.43 (d, J = 6.8 Hz, 3H), 1.27 (d, J = 7.2 Hz, 3H), 1.24 (d, J = 12.4 Hz, 9H), 1.11 (d, J = 6.4 Hz, 3H), 1.06 (d, J = 6.8 Hz, 3H), 0.94 (d, J = 11.2 Hz, 9H)
$^{19}F$-NMR (376 MHz, $CDCl_3$) $\delta$: -77.2 (d, J = 7.9 Hz)
$^{31}P\{^1H\}$-NMR (162 MHz, $CDCl_3$) $\delta$: 5.28 (d, J = 8.3 Hz)

[Synthesis Example 17] (AL-27)

[Chem. 36]

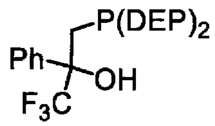

**AL-27**

500 mg (1.60 mmol) of bis(2,6-diethylphenyl)phosphine borane was weighed into a Schlenk tube, and 20 mL of tetrahydrofuran was added. After the mixture was cooled to -78°C, 1.1 mL (1.76 mmol) of n-butyllithium was slowly added dropwise. After the completion of the dropwise addition, the mixture was stirred at room temperature for 1 hour. After the mixture was cooled to 0°C, a solution of 0.17 mL (1.60 mmol) of 2,2-bis(trifluoromethyl)oxirane in 5 mL of tetrahydrofuran was slowly added. The mixture was stirred at room temperature for 2 hours and 35 minutes. The solvent was completely distilled off, and 15 mL of tetrahydrofuran was added. After the mixture was cooled to 0°C, 0.96 mL (1.92 mmol) of hydrogen chloride solution in ether was slowly added dropwise. The mixture was stirred at room temperature for 30 minutes, and subsequently 15 mL of degassed water was added, and an organic layer was separated. 8 mL of ether was added to the aqueous layer to extract an organic layer. This operation was repeated three times. The organic layers were combined and dried with sodium sulfate. The sodium sulfate was removed using a glass filter. The solution thus recovered was evaporated completely to dryness, and the residue was purified by silica gel column chromatography using hexane:acetone = 25:1 as an eluent to give 357 mg of a solid. This operation was performed under air. The purity determined by $^{31}P\{^1H\}$-NMR was 97%.

$^1H$-NMR (400 MHz, $CDCl_3$) $\delta$: 7.33 (d, J = 7.6 Hz, 2H), 7.22 (dd, J = 7.4, 2.6 Hz, 2H), 7.19 (dd, J = 11.3, 7.8 Hz, 2H), 7.13 (t, J = 7.8 Hz, 1H), 7.05 (dd, J = 7.7, 3.3 Hz, 2H), 6.89 (dd, J = 7.7, 3.2 Hz, 2H), 3.48 (brs, 1H), 3.48 (d, J = 15.0 Hz, 1H), 3.33 (d, J = 14.4 Hz, 1H), 2.70 (q, J = 7.6 Hz, 4H), 2.61 (quind, J = 7.5, 2.0 Hz, 2H), 1.05 (t, J = 7.5

Hz, 6H), 0.89 (t, J = 7.5 Hz, 6H)
$^{19}$F-NMR (376 MHz, $CDCl_3$) δ: -80.8
$^{31}$P{$^1$H}-NMR (162 MHz, $CDCl_3$) δ: -43.9

[Synthesis Example 18] (AL-30)

[Chem. 37]

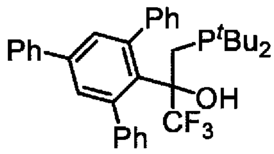

**AL-30**

259 mg (1.49 mmol) of di-tert-butylmethylphosphine borane was weighed into a Schlenk tube, and 18 mL of tetrahydrofuran was added. After the mixture was cooled to -78°C, 2.8 mL (3.58 mmol) of sec-butyllithium was slowly added dropwise. After the completion of the dropwise addition, the mixture was stirred at -78°C for 10 minutes and was stirred at room temperature for 3 hours. After the mixture was cooled to -78°C, a solution of 600 mg (2.19 mmol) of (2,4,6-triphenyl)phenyl-2,2,2-fluoroethanone in 4.6 mL of tetrahydrofuran was slowly added. The mixture was stirred at room temperature for 1 hour and 35 minutes. The mixture was cooled to 0°C, and 1.9 mL (3.87 mmol) of hydrogen chloride solution in ether was slowly added dropwise. The mixture was stirred at room temperature for 30 minutes, and subsequently 14 mL of degassed water was added, and an organic layer was separated. 8 mL of ether was added to the aqueous layer to extract an organic layer. This operation was repeated three times. The organic layers were combined and dried with sodium sulfate. The sodium sulfate was removed using a glass filter. The solution thus recovered was evaporated completely to dryness, and the residue was purified by silica gel column chromatography to give 257 mg of a solid. This operation was performed under air, and the eluent was changed from hexane:acetone = 30:1 to 20:1, and then to acetone only.

2.8 mL of toluene was added to 160 mg of the residue obtained above. A solution of 38 mg (0.34 mmol) of 1,4-diazabicyclo[2.2.2]octane in 1.4 mL of toluene was added thereto. The temperature was raised to 60°C, and stirring was performed for 1 hour and 15 minutes. After the stirring, the solvent was completely distilled off. The residue was purified by silica gel column chromatography using hexane:acetone = 2:1 as an eluent. The solid thus recovered was further purified by silica gel column chromatography to give a solid. The eluent was changed from hexane:dichloromethane = 5:1 to hexane:acetone = 2:1.

Lastly, the solid recovered above was purified by silica gel column chromatography using hexane:acetone = 100:1 as an eluent to give 32 mg of a solid. The purity determined by $^{31}$P{$^1$H}-NMR was 99%.

$^1$H-NMR (400 MHz, $CDCl_3$) δ: 7.58 (d, J = 1.4, 1H), 7.56 (d, J = 1.2, 1H), 7.47-7.20 (m, 15H), 3.70 (d, J = 8.6 Hz, 1H), 2.19 (dd, J = 16.1, 5.5 Hz, 1H), 1.69 (dd, J = 16.0, 2.8 Hz, 1H), 1.03 (d, J = 11.5 Hz, 9H), 0.82 (d, J = 11.7 Hz, 9H)
$^{19}$F-NMR (376 MHz, $CDCl_3$) δ: -74.3 (d, J = 20.6 Hz)
$^{31}$P{$^1$H}-NMR (162 MHz, $CDCl_3$) δ: 12.9 (q, J = 20.1 Hz)

[Synthesis Example 19] (AL-37)

[Chem. 38]

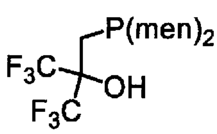

**AL-37**

269 mg (0.83 mmol) of dimenthylphosphine borane was weighed into a Schlenk tube, and 10 mL of tetrahydrofuran was added. After the mixture was cooled to -78°C, 0.58 mL (0.91 mmol) of n-butyllithium was slowly added dropwise. After the completion of the dropwise addition, the mixture was stirred at room temperature for 1 hour and 25 minutes. After the mixture was cooled to 0°C, a solution of 91 μL (0.83 mmol) of 2,2-bis(trifluoromethyl)oxirane in 2.7 mL of tetrahydrofuran was slowly added. The mixture was stirred at room temperature for 2 hours, and the solvent was completely distilled off. The residue was purified by silica gel column chromatography to give 114 mg of a solid. The eluent was changed from hexane:acetone = 50:1 to 20:1. This operation was performed under air.

3.2 mL of tetrahydrofuran was added to 106 mg of the solid obtained above. After the mixture was cooled to 0°C, 0.13 mL (0.25 mmol) of hydrogen chloride solution in ether was slowly added dropwise. The mixture was stirred at room temperature for 1 hour and was cooled again to 0°C. 0.65 mL (1.30 mmol) of hydrogen chloride solution in ether was slowly added dropwise. The mixture was stirred at room temperature for 6 hours. The solvent was completely distilled off, and subsequently 1.5 mL of degassed saturated aqueous sodium acetate solution was added. 2 mL of dichloromethane was added to the aqueous layer to extract an organic layer. This operation was repeated three times. The organic layers were combined and evaporated completely to dryness. The residue was purified by silica gel column chromatography to give 64 mg of a solid. The eluent was changed from hexane:acetone = 100:1 to 20:1, and then to 1:1. The purity determined by $^{31}P\{^1H\}$-NMR was 95%.

$^1H$-NMR (400 MHz, $CDCl_3$) δ: 4.91 (d, J = 10.0, 1H), 2.67-0.80 (m, 20H), 2.35 (dd, J = 16.1, 2.1 Hz, 1H), 1.98 (dd, J = 16.3, 3.0 Hz, 1H), 0.92 (d, J = 2.9 Hz, 3H), 0.91 (d, J = 3.4 Hz, 3H), 0.90 (d, J = 3.6 Hz, 3H), 0.89 (d, J = 2.8 Hz, 3H), 0.76 (d, J = 6.9 Hz, 3H), 0.69 (d, J = 6.9 Hz, 3H)
$^{19}F$-NMR (376 MHz, $CDCl_3$) δ: -77.7 (dt, J = 49.4, 11.0 Hz)
$^{31}P\{^1H\}$-NMR (162 MHz, $CDCl_3$) δ: -47.6 (septet, J = 10.1 Hz)

[Synthesis Example 20] (AL-38-1 and AL-38-2)

[Chem. 39]

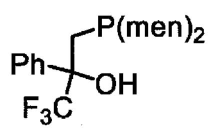

**AL-38-1/AL-38-2**
**(diastereomer)**

491 mg (1.51 mmol) of dimenthylphosphine borane was weighed into a Schlenk tube, and 18 mL of tetrahydrofuran was added. After the mixture was cooled to -78°C, 1.2 mL (1.81 mmol) of n-butyllithium was slowly added dropwise. After the completion of the dropwise addition, the mixture was stirred at room temperature for 1 hour. After the mixture was cooled to 0°C, a solution of 300 mg (1.50 mmol) of α-(trifluoromethyl)styrene oxide in 4.9 mL of tetrahydrofuran was slowly added. The mixture was stirred at room temperature for 1 hour and 30 minutes, and the solvent was completely distilled off. The residue was purified by silica gel column chromatography using hexane:acetone = 50:1 as an eluent to give 558 mg of a solid. The solid was further purified by silica gel column chromatography to give 158 mg of a solid 1 and 265 mg of a solid 2. The eluent was changed from hexane:dichloromethane = 10:1 to 5:1. This operation was performed under air. The solids were subjected to the respective synthetic procedures described below.

(Procedure for synthesis of AL-38-1)

4.3 mL of tetrahydrofuran was added to 143 mg of the solid 1 obtained above. After the mixture was cooled to 0°C, 2.1 mL (2.10 mmol) of hydrogen chloride solution in ether was slowly added dropwise. The mixture was stirred at room temperature for 3 hours and 50 minutes. The mixture was cooled again to 0°C, and 2.1 mL (2.10 mmol) of hydrogen chloride solution in ether was slowly added dropwise. The mixture was stirred at room temperature for 3 hours. The mixture was cooled again to 0°C, and 4.2 mL (4.20 mmol) of hydrogen chloride solution in ether was slowly added dropwise. The mixture was stirred at room temperature for 4 hours and 15 minutes. The supernatant was removed. 1 mL of ether was added, and washing was performed. This operation was repeated twice. The residue was then completely dried, and 1.5 mL of degassed saturated aqueous sodium hydrogen carbonate solution was added. 2 mL of dichloromethane was added to the aqueous layer to extract an organic layer. This operation was repeated three times. The

organic layers were combined and dried with sodium sulfate. The sodium sulfate was removed using a glass filter. The solution thus recovered was evaporated completely to dryness to give 73 mg of a solid. The purity determined by $^{31}P\{^1H\}$ -NMR was >99%.

$^1$H-NMR (400 MHz, $CDCl_3$) δ: 7.60-7.58 (m, 2H), 7.36-7.31 (m, 3H), 4.23 (d, J = 11.5 Hz, 1H), 2.70-0.42 (m, 20H), 2.55 (d, J = 14.6 Hz, 1H), 2.21 (d, J = 14.7 Hz, 1H), 0.91 (d, J = 7.0 Hz, 3H), 0.90 (d, J = 6.6 Hz, 3H), 0.84 (d, J = 4.9 Hz, 3H), 0.76 (d, J = 7.0 Hz, 3H), 0.64 (d, J = 6.9 Hz, 3H), 0.32 (d, J = 6.8 Hz, 3H)
$^{19}$F-NMR (376 MHz, $CDCl_3$) δ: -80.0
$^{31}P\{^1H\}$-NMR (162 MHz, $CDCl_3$) δ: -46.0

(Procedure for synthesis of AL-38-2)

4.1 mL of tetrahydrofuran was added to 140 mg of the solid 2 obtained above. After the mixture was cooled to 0°C, 1.0 mL (2.00 mmol) of hydrogen chloride solution in ether was slowly added dropwise. The mixture was stirred at room temperature for 3 hours and 30 minutes. The mixture was cooled again to 0°C, and 0.95 mL (1.90 mmol) of hydrogen chloride solution in ether was slowly added dropwise. The mixture was stirred at room temperature for 3 hours and 50 minutes. The mixture was cooled again to 0°C, and 0.54 mL (0.54 mmol) of hydrogen chloride solution in ether was slowly added dropwise. The mixture was stirred at room temperature for 2 hours. The supernatant was removed. 1 mL of tetrahydrofuran was added, and washing was performed. This operation was repeated twice. The residue was then completely dried, and 1.5 mL of degassed saturated aqueous sodium hydrogen carbonate solution was added. 2 mL of dichloromethane was added to the aqueous layer to extract an organic layer. This operation was repeated three times. The organic layers were combined and dried with sodium sulfate. The sodium sulfate was removed using a glass filter. The solution thus recovered was evaporated completely to dryness to give 74 mg of a solid. The purity determined by $^{31}P\{^1H\}$-NMR was >99%.

$^1$H-NMR (400 MHz, $CDCl_3$) δ: 7.59 (d, J = 7.6 Hz, 2H), 7.40-7.31 (m, 3H), 4.34 (d, J = 11.2 Hz, 1H), 2.43-0.38 (m, 19H), 2.71 (dd, J = 14.9, 2.0 Hz, 1H), 2.03 (dd, J = 14.9, 3.0 Hz, 1H), 0.90 (d, J = 6.5 Hz, 3H), 0.87 (d, J = 7.0 Hz, 3H), 0.82 (d, J = 6.6 Hz, 3H), 0.77 (d, J = 6.8 Hz, 3H), 0.63 (d, J = 7.0 Hz, 3H), 0.53 (d, J = 7.0 Hz, 3H), -0.26 (dt, J = 12.2, 2.5 Hz, 1H)
$^{19}$F-NMR (376 MHz, $CDCl_3$) δ: -79.0 (d, J = 8.2 Hz)
$^{31}P\{^1H\}$-NMR (162 MHz, $CDCl_3$) δ: -46.3 (q, J = 6.4 Hz)

[Synthesis Example 21] (AL-16NiMePy)

[Chem. 40]

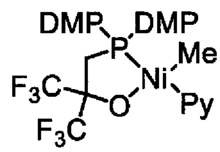

**(AL-16)NiMePy**

94 mg (0.21 mmol) of dichlorotetrapyridine nickel (II) was weighed into a Schlenk tube, and 1.8 mL of toluene and 0.2 mL of tetrahydrofuran were added. After the mixture was cooled to 0°C, 89 μL (1.10 mmol) of pyridine and 0.39 mL (0.42 mmol) of methyllithium were slowly added dropwise. 100 mg of AL-16 (0.21 mmol) that had been mixed with 0.6 mL of toluene was added thereto. The Schlenk tube that had contained AL-16 was washed with 0.2 mL of toluene twice, and the washings were also added. The mixture was stirred at 40°C for 1 hour and 25 minutes. The solvent was completely distilled off, and 8 mL of toluene was added to the residue. The mixture was filtered through Celite. After the filtration, the solvent was completely distilled off, and the residue was recrystallized from 0.4 mL of tetrahydrofuran and 4 mL of hexane to give 56 mg of a solid. The purity determined by $^{31}P\{^1H\}$-NMR was >99%.

$^1$H-NMR (400 MHz, $C_6D_5CD_3$) δ: 8.88 (brs, 2H), 7.07 (t, J = 8.4, 2H), 6.81 (brs, 1H), 6.51 (brs, 2H), 6.24 (dd, J = 8.4, 3.5 Hz, 4H), 3.78 (d, J = 12.4 Hz, 2H), 3.36 (s, 12H), -0.78 (d, J = 6.4 Hz, 3H)
$^{19}$F-NMR (376 MHz, $C_6D_5CD_3$) δ: -77.3

$^{31}P\{^1H\}$-NMR (162 MHz, $C_6D_5CD_3$) δ: 4.9

[Synthesis Example 22] (AL-18NiMePy)

[Chem. 41]

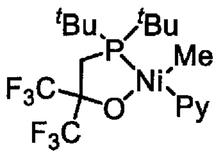

**(AL-18)NiMePy**

67 mg (0.15 mmol) of dichlorotetrapyridine nickel (II) was weighed into a Schlenk tube, and 1.4 mL of toluene and 0.2 mL of tetrahydrofuran were added. After the mixture was cooled to 0°C, 63 μL (0.78 mmol) of pyridine and 0.30 mL (0.28 mmol) of methyllithium were slowly added dropwise. A solution of 50 mg of AL-18 (0.15 mmol) in 0.5 mL of toluene was added thereto. The Schlenk tube that had contained AL-18 was washed with 0.2 mL of toluene twice, and the washings were also added. The mixture was stirred at 40°C for 1 hour. The solvent was completely distilled off, and 8 mL of toluene was added to the residue. The mixture was filtered through Celite. After the filtration, the solvent was completely distilled off. Thus, 27 mg of a solid was obtained. The purity determined by $^{31}P\{^1H\}$-NMR was 90%.

$^1H$-NMR (400 MHz, $C_6D_5CD_3$) δ: 8.56 (brs, 2H), 6.72 (t, J = 7.5, 1H), 6.40 (t, J = 6.1 Hz, 2H), 2.40 (d, J = 9.4 Hz, 2H), 1.31 (s, 9H), 1.28 (s, 9H), -0.77 (d, J = 4.5 Hz, 3H)
$^{19}F$-NMR (376 MHz, $C_6D_5CD_3$) δ: -75.8
$^{31}P\{^1H\}$-NMR (162 MHz, $C_6D_5CD_3$) δ: -67.4

[Synthesis Example 23] (AA-1)

203 mg (1.2 mmol) of diphenylamine was weighed into a Schlenk, and 15 mL of THF was added. The Schlenk was submerged in a dry ice bath at -78°C, and n-butyllithium (1.59 M in hexane, 0.83 mL, 1.32 mmol, 1.1 eq) was added. The dry ice bath was removed, and stirring was performed for 55 minutes. A light yellow solution was thus obtained. 240 mg (1.2 mmol, 1 eq) of α-(trifluoromethyl)styrene oxide was weighed into another Schlenk, and 2.5 mL of THF was added thereto. The Schlenk containing diphenylamine was submerged in an ice bath at 0°C, and the THF solution of α-(trifluoromethyl)styrene oxide was added. Furthermore, the Schlenk that had contained α-(trifluoromethyl)styrene oxide was washed with 2.5 mL of THF, and the washing was added to the Schlenk containing diphenylamine. This operation was repeated twice. The resulting solution thus obtained was stirred at room temperature for 21.5 hours, and water was added to stop the reaction. Extraction with dichloromethane was performed three times, and the organic layer was washed with water once. The organic layer was further washed with brine once. The organic layer was dried with sodium sulfate, and the solvent was distilled off. A brown oily substance was thus obtained. The substance was purified by silica gel chromatography (eluent: hexane/dichloromethane = 2/1), and the solvent was distilled off. 213.3 mg of the target compound was thus obtained with a yield of 50%.
$^1H$-NMR (400 MHz, $CDCl_3$) δ: 7.51 (m, 2H), 7.29 (m, 3H), 7.20 (t, J = 8.0, 4H), 6.99 (t, J = 7.6 Hz, 2H), 6.86 (d, J = 7.8 Hz, 4H), 4.67 (d, J = 15.6 Hz, 9H), 4.30 (d, J = 15.6 Hz, 1H), 3.74 (s, 1H)

[Synthesis Example 24] (AL-2al)

A complex was synthesized with reference to pages 51 and 52 of WO 2001/092342. The complex with a $^{31}P\{^1H\}$-NMR purity of 90% was used in Comparative Example 1, and the complex with a $^{31}P\{^1H\}$-NMR purity of 76% was used in Comparative Examples 2 to 5.

[Synthesis Example 25] (B27-DM)

2-Bis(2,6-dimethoxyphenyl)phosphano-6-pentafluorophenylphenol ligand (B-27DM) illustrated below was used in accordance with Synthesis Example 4 described in WO 2010/050256.

[Chem. 42]

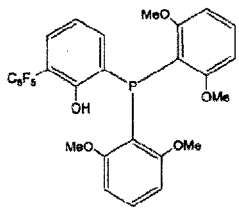

B-27DM

[Example 1]

41 mg (0.15 mmol) of $Ni(cod)_2$ was weighed into a flask and was dissolved into 15 mL of toluene. Furthermore, 37 mg (0.10 mmol) of AL-1 obtained in Synthesis Example 1 was weighed into another flask. 10 mL of the $Ni(cod)_2$ in toluene solution was weighed out and was added to the flask containing AL-1. The resultant solution was warmed in a 40°C water bath and was stirred for 15 minutes to give a catalyst solution (10 mM/AL-1).

A 2.4 L autoclave was charged with 1000 mL of toluene. The temperature was raised to 50°C. Nitrogen was added so that the internal pressure of the autoclave would be 0.5 MPa. Subsequently, ethylene was added so that the internal pressure of the autoclave would be 3.0 MPa. 2.0 mL of the catalyst solution was added to the catalyst cylinder, and the catalyst was added to the autoclave with 3.5 MPa nitrogen. This addition was taken as the reaction start time. Furthermore, 10 minutes after the start of the reaction, 8.0 mL of the catalyst solution was added to the autoclave. The flask that had contained the catalyst solution and the syringe used to weigh out the catalyst were washed with 10 mL of toluene, and the washings were added through the catalyst cylinder to the autoclave 13 minutes after the start of the reaction. 60 Minutes after the start of the reaction, 10 mL of a toluene solution (0.2 M) of 1,2-butanediol was added to stop the reaction. Ethylene pressure was released. The autoclave was brought back to room temperature, and EKINEN (registered trademark) F-1 (1000 mL, manufactured by Japan Alcohol Trading CO., LTD.) was added. The solid that was precipitated was recovered by filtration, washed with EKINEN (registered trademark) F-1 (1000 mL × 2), and dried under reduced pressure. A polymer weighing 6.0 g was thus obtained.

[Example 2]

10 mL of a catalyst solution (10 mM/AL-2) was prepared in the same manner as in Example 1, except that 33 mg (0.10 mmol) of AL-2 was used instead of AL-1.

The procedure of Example 1 was repeated, except that 10 mL of the above catalyst solution was used, and that the catalyst was not added after the reaction had started, and the reaction was stopped 40 minutes after the start of the reaction. As a result, a polymer weighing 9.0 g was obtained.

[Example 3]

96.3 mg (0.35 mmol) of $Ni(cod)_2$ was weighed into a flask and was dissolved into 35 mL of toluene. Furthermore, 10.0 mg (0.03 mmol) of AL-2 obtained in Synthesis Example 2 was weighed into another flask. 30 mL of the $Ni(cod)_2$ in toluene solution was weighed out and was added to the flask containing AL-2. The solution was warmed in a 40°C water bath and was stirred for 15 minutes to give a catalyst solution (1 mM/AL-2).

The procedure of Example 1 was repeated, except that 5 mL of the above catalyst solution was used, and that the catalyst was not added after the reaction had started, and the reaction temperature was controlled to 90°C. As a result, a polymer weighing 14.3 g was obtained.

[Example 4]

330.4 mg (1.2 mmol) of $Ni(cod)_2$ was weighed into a flask and was dissolved into 30 mL of toluene to form a transition metal compound solution. Furthermore, 40.2 mg (0.12 mmol) of AL-2 obtained in Synthesis Example 2 was weighed into another flask. 6 mL of the $Ni(cod)_2$ in toluene solution was weighed out and was added to the flask containing AL-2. The resultant solution was warmed in a 40°C water bath and was stirred for 15 minutes to give a catalyst solution (20 mM/AL-2).

A 0.2 L autoclave was charged with 72 mL of toluene, 0.15 mL (1 mmol) of tert-butyl acrylate (tBA), and 100 μL of a toluene solution (0.1 M) of tri-n-octylaluminum (TnOA). The temperature was raised to 90°C. Nitrogen was added

so that the internal pressure of the autoclave would be 0.5 MPa. Subsequently, ethylene was added so that the internal pressure of the autoclave would be 3.0 MPa. 2.5 mL of the catalyst solution was added to the catalyst cylinder, and the catalyst was added to the autoclave with 3.3 MPa nitrogen. This addition was taken as the reaction start time. Subsequently, 10 mL of the transition metal compound solution was added through the catalyst cylinder to the autoclave. The catalyst cylinder was washed with 3 mL of toluene. 60 Minutes after the start of the reaction, 3 mL of a toluene solution (0.2 M) of 1,2-butanediol was added to stop the reaction. Ethylene pressure was released. The autoclave was brought back to room temperature, and EKINEN (registered trademark) F-1 (100 mL, manufactured by Japan Alcohol Trading CO., LTD.) was added. The solid that was precipitated was recovered by filtration and was suspended in EKINEN (registered trademark) F-1 (100 mL). 1 mL of hydrochloric acid (10 wt%) was added, and the suspension was allowed to stand in a refrigerator overnight. The solid was recovered by filtration, washed with acetone (100 mL × 2), and dried under reduced pressure. A polymer weighing 0.80 g was thus obtained.

[Example 5]

10 mL of a catalyst solution (1 mM/AL-2) was prepared in the same manner as in Example 3, except that the amount of $Ni(cod)_2$ was changed to 137.6 mg (0.50 mmol), $Ni(cod)_2$ was dissolved into 50 mL of toluene, and 13.7 mg (0.04 mmol) of AL-2 was used.

A 0.2 L autoclave was charged with 88 mL of toluene and 3.6 mL (19 mmol) of 1-decene. The temperature was raised to 90°C. Nitrogen was added so that the internal pressure of the autoclave would be 0.5 MPa. Subsequently, ethylene was added so that the internal pressure of the autoclave would be 3.0 MPa. 1.0 mL of the catalyst solution was added to the catalyst cylinder, and the catalyst was added to the autoclave with 3.5 MPa nitrogen. This addition was taken as the reaction start time. The catalyst cylinder was washed with 3 mL of toluene 10 minutes after the start of the reaction. 30 Minutes after the start of the reaction, 3 mL of a toluene solution (0.2 M) of 1,2-butanediol was added to stop the reaction. Ethylene pressure was released. The autoclave was brought back to room temperature, and acetone (100 mL) was added. The solid that was precipitated was recovered by filtration, washed with acetone (100 mL × 2), and dried under reduced pressure. A polymer weighing 1.6 g was thus obtained.

[Example 6]

22.4 mg (0.08 mmol) of $Ni(cod)_2$ was weighed into a flask and was dissolved into 8 mL of toluene. Furthermore, 16.4 mg (0.05 mmol) of AL-2 obtained in Synthesis Example 2 was weighed into another flask. 5 mL of the $Ni(cod)_2$ in toluene solution was weighed out and was added to the flask containing AL-2. The solution was warmed in a 40°C water bath and was stirred for 15 minutes. 5 mL of toluene was added to the solution. A catalyst solution (5 mM/AL-2) was thus prepared.

A 0.2 L autoclave was charged with 88 mL of toluene and 4.04 g (13.6 mmol) of a toluene solution of norbornene (0.318 g/g). The temperature was raised to 90°C. Nitrogen was added so that the internal pressure of the autoclave would be 0.2 MPa. Subsequently, ethylene was added so that the internal pressure of the autoclave would be 1.0 MPa. 1.0 mL of the catalyst solution and 2 mL of toluene were added to the catalyst cylinder, and the catalyst was added to the autoclave with 1.2 MPa nitrogen. This addition was taken as the reaction start time. 3 mL of the catalyst solution was added 5 minutes after the start of the reaction. The catalyst cylinder was washed with 3 mL of toluene 10 minutes after the start of the reaction. 30 Minutes after the start of the reaction, 3 mL of a toluene solution (0.2 M) of 1,2-butanediol was added to stop the reaction. Ethylene pressure was released. The autoclave was brought back to room temperature, and acetone (100 mL) was added. The solid that was precipitated was recovered by filtration, washed with acetone (100 mL × 2), and dried under reduced pressure. A polymer weighing 1.8 g was thus obtained.

[Example 7]

30 mL of a catalyst solution (2 mM/AL-2) was prepared in the same manner as in Example 3, except that the amount of $Ni(cod)_2$ was changed to 192.2 mg (0.7 mmol), $Ni(cod)_2$ was dissolved into 70 mL of toluene, and 20.1 mg (0.06 mmol) of AL-2 was used.

A 0.2 L autoclave was charged with 89 mL of toluene and 2.5 mL (19 mmol) of 4-methylstyrene (4-MeSt). The temperature was raised to 90°C. Subsequently, 2.5 MPa of ethylene was added. 2.5 mL of the catalyst solution was added to the catalyst cylinder, and the catalyst was added to the autoclave with 3.0 MPa nitrogen. This addition was taken as the reaction start time. The catalyst cylinder was washed with 3 mL of toluene 5 minutes after the start of the reaction (the total amount of toluene in the autoclave: about 95 mL). 30 Minutes after the start of the reaction, 3 mL of a toluene solution (0.2 M) of 1,2-butanediol was added to stop the reaction. Ethylene pressure was released. The autoclave was brought back to room temperature, and acetone (100 mL) was added. The solid that was precipitated was recovered by filtration, washed with acetone (100 mL × 2), and dried under reduced pressure. A polymer weighing

6.6 g was thus obtained.

[Example 8]

30 mL of a catalyst solution (2 mM/AL-2) was prepared in the same manner as in Example 7.
The procedure of Example 7 was repeated, except that the above catalyst solution was used and that the amount of ethylene added was changed to 1.0 MPa. As a result, a polymer weighing 2.3 g was obtained.

[Example 9]

15 mL of a catalyst solution (4 mM/AL-2) was prepared in the same manner as in Example 3, except that the amount of $Ni(cod)_2$ was changed to 198.0 mg (0.72 mmol), $Ni(cod)_2$ was dissolved into 72 mL of toluene, the amount of AL-2 was changed to 20.1 mg (0.06 mmol), and 15 mL of the $Ni(cod)_2$ in toluene solution was added to AL-2.
A 0.2 L autoclave was charged with 82 mL of toluene, 8.4 mL (38 mmol) of methyl 10-undecenoate (MU), and 100 μL of a toluene solution (0.1 M) of TnOA. The temperature was raised to 70°C. Nitrogen was added so that the internal pressure of the autoclave would be 0.2 MPa. Subsequently, ethylene was added so that the internal pressure of the autoclave would be 0.7 MPa. 1.0 mL of the catalyst solution was added to the catalyst cylinder, and the catalyst was added to the autoclave with 0.9 MPa nitrogen. This addition was taken as the reaction start time. The catalyst cylinder was washed with 3 mL of toluene 4 minutes after the start of the reaction. 60 Minutes after the start of the reaction, 3 mL of a toluene solution (0.2 M) of 1,2-butanediol was added to stop the reaction. Ethylene pressure was released. The autoclave was brought back to room temperature, and acetone (100 mL) was added. The solid that was precipitated was recovered by filtration, washed with acetone (100 mL × 2), and dried under reduced pressure. A polymer weighing 0.64 g was thus obtained.

[Example 10]

10 mL of a catalyst solution (10 mM/AL-3) was prepared in the same manner as in Example 1, except that 41 mg (0.15 mmol) of $Ni(cod)_2$ and 49 mg (0.10 mmol) of AL-3, instead of AL-1, obtained in Synthesis Example 3 were used.
The procedure of Example 1 was repeated, except that 10 mL of the above catalyst solution was added, and that the catalyst was not added after the reaction had started, and the reaction was stopped 25 minutes after the start of the reaction. As a result, a polymer weighing 7.3 g was obtained.

[Example 11]

10 mL of a catalyst solution (1 mM/AL-3) was prepared in the same manner as in Example 3, except that 14.8 mg (0.03 mmol) of AL-3 was used instead of AL-2.
Polymerization was performed in the same manner as in Example 3, except that the above catalyst solution was used. As a result, a polymer weighing 37.0 g was obtained.

[Example 12]

10 mL of a catalyst solution (1 mM/AL-3) was prepared in the same manner as in Example 11.
A 2.4 L autoclave was charged with 940 mL of toluene. 12 mL of 1-decene was added to the catalyst cylinder, and the 1-decene was added to the autoclave with 0.5 MPa nitrogen. This operation was repeated three times. Subsequently, the catalyst cylinder was washed with 10 mL of toluene, and the washing was added to the autoclave. The temperature was raised to 90°C. Nitrogen was added so that the internal pressure of the autoclave would be 0.5 MPa. Subsequently, ethylene was added so that the internal pressure of the autoclave would be 3.0 MPa. 5.0 mL of the catalyst solution was added to the catalyst cylinder, and the catalyst was added to the autoclave with 3.5 MPa nitrogen. This addition was taken as the reaction start time. 6 Minutes after the start of the reaction, the catalyst cylinder was washed with 10 mL of toluene. 30 Minutes after the start of the reaction, 10 mL of a toluene solution (0.2 M) of 1,2-butanediol was added to stop the reaction. Ethylene pressure was released. The autoclave was brought back to room temperature, and acetone (1000 mL) was added. The solid that was precipitated was recovered by filtration, washed with acetone (1000 mL × 2), and dried under reduced pressure. A polymer weighing 5.0 g was thus obtained.

[Example 13]

50 mL of a catalyst solution (4 mM/AL-3) was prepared in the same manner as in Example 3, except that the amount of $Ni(cod)_2$ was changed to 605 mg (2.2 mmol), $Ni(cod)_2$ was dissolved into 220 mL of toluene, 98.1 mg (0.20

mmol) of AL-3 was used instead of AL-2, and 50 mL of the $Ni(cod)_2$ in toluene solution was added to AL-3.

A 2.4 L autoclave was charged with 1000 mL of toluene. The temperature was raised to 90°C. 2.9 mL (20 mmol) of tBA was added to the catalyst cylinder and was added to the autoclave with 0.5 MPa nitrogen. The catalyst cylinder was washed with 10 mL of toluene, and the washing was added to the autoclave. 1.0 mL of a toluene solution (0.1 M) of TNOA was added to the catalyst cylinder and was added to the autoclave with 0.5 MPa nitrogen. The catalyst cylinder was washed with 10 mL of toluene, and the washing was added to the autoclave. The temperature was raised to 90°C. Nitrogen was added so that the internal pressure of the autoclave would be 0.5 MPa. Subsequently, ethylene was added so that the internal pressure of the autoclave would be 3.0 MPa. 10 mL of the catalyst solution was added to the catalyst cylinder, and the catalyst was added to the autoclave with 3.5 MPa nitrogen. This addition was taken as the reaction start time. Another 10 mL of the catalyst solution was added 5 minutes after the start of the reaction. The catalyst cylinder was washed with 10 mL of toluene 14 minutes after the start of the reaction. 60 Minutes after the start of the reaction, 10 mL of a toluene solution (0.2 M) of 1,2-butanediol was added to stop the reaction. Ethylene pressure was released. The autoclave was brought back to room temperature, and acetone (1000 mL) was added. The solid that was precipitated was recovered by filtration, washed with acetone (1000 mL × 2), and dried under reduced pressure. A polymer weighing 5.7 g was thus obtained.

[Example 14]

10 mL of a catalyst solution (10 mM/AL-4) was prepared in the same manner as in Example 1, except that 41 mg (0.15 mmol) of $Ni(cod)_2$ and 49 mg (0.10 mmol) of AL-4 instead of AL-1 were used.

The procedure of Example 1 was repeated, except that 2 mL of the above catalyst solution was used, and that the reaction was stopped 20 minutes after the start of the reaction. The catalyst was not added after the reaction had started. As a result, a polymer weighing 2.2 g was obtained.

[Example 15]

28 mg (0.10 mmol) of $Ni(cod)_2$ was weighed into a flask and was dissolved into 10 mL of toluene. Furthermore, 15 mg (0.03 mmol) of AL-4 was weighed into another flask. 3 mL of the $Ni(cod)_2$ in toluene solution was weighed out and was added to the flask containing AL-4. 27 mL of toluene was added to the solution. The mixture was warmed in a 40°C water bath and was stirred for 15 minutes to give a catalyst solution (1 mM/AL-4).

The procedure of Example 1 was repeated, except that 10 mL of the above catalyst solution was used, and that the catalyst was not added after the reaction had started, and the reaction temperature was controlled to 90°C. As a result, a polymer weighing 10.0 g was obtained.

[Example 16]

10 mL of a catalyst solution was prepared in the same manner as in Example 3, except that the amount of $Ni(cod)_2$ was changed to 96.4 mg (0.35 mmol) and 14.8 mg (0.03 mmol) of AL-4 was used instead of AL-2.

Polymerization was performed in the same manner as in Example 3 using the above catalyst solution. As a result, a polymer weighing 39.5 g was obtained.

[Example 17]

50 mL of a catalyst solution (2 mM/AL-4) was prepared in the same manner as in Example 3, except that the amount of $Ni(cod)_2$ was changed to 303 mg (1.1 mmol), $Ni(cod)_2$ was dissolved into 110 mL of toluene, 49 mg (0.10 mmol) of AL-4 was used instead of AL-2, and 50 mL of the $Ni(cod)_2$ in toluene solution was added to AL-4.

A 2.4 L autoclave was charged with 930 mL of toluene. 2.9 mL (20 mmol) of tBA was added to the catalyst cylinder and was added to the autoclave with 0.5 MPa nitrogen. Subsequently, 2.5 mL (20 mmol) of 1-hexene was added to the catalyst cylinder and was added to the autoclave with 0.5 MPa nitrogen. The catalyst cylinder was washed with 10 mL of toluene, and the washing was added to the autoclave. 1.0 mL of a toluene solution (0.1 M) of TNOA was added to the catalyst cylinder and was added to the autoclave with 0.5 MPa nitrogen. The catalyst cylinder was washed with 10 mL of toluene, and the washing was added to the autoclave. The temperature was raised to 90°C. Nitrogen was added so that the internal pressure of the autoclave would be 0.5 MPa. Subsequently, ethylene was added so that the internal pressure of the autoclave would be 3.0 MPa. 10 mL of the catalyst solution was added to the catalyst cylinder, and the catalyst was added to the autoclave with 3.5 MPa nitrogen. This addition was taken as the reaction start time. 10 mL of the catalyst solution was added 3 minutes, 6 minutes, 9 minutes, and 12 minutes after the start of the reaction. The catalyst cylinder was washed with 10 mL of toluene 16 minutes after the start of the reaction. 60 Minutes after the start of the reaction, 10 mL of a toluene solution (0.2 M) of 1,2-butanediol was added to stop the reaction. Ethylene

pressure was released. The autoclave was brought back to room temperature, and EKINEN (registered trademark) F-1 (1000 mL, manufactured by Japan Alcohol Trading CO., LTD.) was added. The solid that was precipitated was recovered by filtration, washed with EKINEN (registered trademark) F-1 (1000 mL × 2), and dried under reduced pressure. A polymer weighing 9.6 g was thus obtained.

[Example 18]

50 mL of a catalyst solution (2 mM/AL-4) was prepared in the same manner as in Example 17.

A 2.4 L autoclave was charged with 930 mL of toluene. 12 mL of 1-decene was added to the catalyst cylinder, and the 1-decene was added to the autoclave with 0.5 MPa nitrogen. This operation was repeated three times. Subsequently, the catalyst cylinder was washed with 10 mL of toluene, and the washing was added to the autoclave. The temperature was raised to 90°C. Nitrogen was added so that the internal pressure of the autoclave would be 0.5 MPa. Subsequently, ethylene was added so that the internal pressure of the autoclave would be 3.0 MPa. 5 mL of the catalyst solution was added to the catalyst cylinder, and the catalyst was added to the autoclave with 3.5 MPa nitrogen. This addition was taken as the reaction start time. 10 mL of the catalyst solution was added 11 minutes after the start of the reaction. The catalyst cylinder was washed with 10 mL of toluene 20 minutes after the start of the reaction. 60 Minutes after the start of the reaction, 10 mL of a toluene solution (0.2 M) of 1,2-butanediol was added to stop the reaction. Ethylene pressure was released. The autoclave was brought back to room temperature, and acetone (1000 mL) was added. The solid that was precipitated was recovered by filtration, washed with acetone (1000 mL × 2), and dried under reduced pressure. A polymer weighing 65.4 g was thus obtained.

[Example 19]

660 mg (2.4 mmol) of $Ni(cod)_2$ was weighed into a flask and was dissolved into 60 mL of toluene to give a transition metal compound solution (40 mM/Ni). Furthermore, 118.7 mg (0.24 mmol) of AL-4 was weighed into another flask. 6 mL of the $Ni(cod)_2$ in toluene solution was weighed out and was added to the flask containing AL-4. Furthermore, 18 mL of toluene was added. The solution was warmed in a 40°C water bath and was stirred for 15 minutes to give a catalyst solution 1 (10 mM/AL-4). 3 mL of the catalyst solution 1 was weighed out, and 12 mL of toluene was added thereto. A catalyst solution 2 (2 mM/AL-4) was thus prepared.

A 0.2 L autoclave was charged with 88 mL of toluene and 4.21 g (14.2 mmol) of a toluene solution of norbomene (0.318 g/g). The temperature was raised to 90°C. Nitrogen was added so that the internal pressure of the autoclave would be 0.2 MPa. Subsequently, ethylene was added so that the internal pressure of the autoclave would be 1.0 MPa. 0.45 mL of the transition metal compound solution, 1 mL of the catalyst solution 2, and 2 mL of toluene were added to the catalyst cylinder, and the catalyst was added to the autoclave with 1.2 MPa nitrogen. This addition was taken as the reaction start time. 5 Minutes after the start of the reaction, 0.45 mL of the transition metal compound solution and 1 mL of the catalyst solution 2 were added. 7 Minutes after the start of the reaction, 0.9 mL of the transition metal compound solution and 2 mL of the catalyst solution 2 were added. 16 Minutes after the start of the reaction, 1.8 mL of the transition metal compound solution and 0.8 mL of the catalyst solution 1 were added. The catalyst cylinder was washed with 3 mL of toluene 20 minutes after the start of the reaction. 40 Minutes after the start of the reaction, 3 mL of a toluene solution (0.2 M) of 1,2-butanediol was added to stop the reaction. Ethylene pressure was released. The autoclave was brought back to room temperature, and acetone (100 mL) was added. The solid that was precipitated was recovered by filtration, washed with acetone (100 mL × 2), and dried under reduced pressure. A polymer weighing 1.5 g was thus obtained.

[Example 20]

A catalyst solution 1 was prepared in the same manner as in Example 19.

A 0.2 L autoclave was charged with 88 mL of toluene and 3.92 g (13.2 mmol) of a toluene solution of norbomene (0.318 g/g). The temperature was raised to 90°C. Nitrogen was added so that the internal pressure of the autoclave would be 0.2 MPa. Subsequently, ethylene was added so that the internal pressure of the autoclave would be 1.0 MPa. 1 mL of the catalyst solution 1 and 2 mL of toluene were added to the catalyst cylinder, and the catalyst was added to the autoclave with 1.2 MPa nitrogen. This addition was taken as the reaction start time. 7 Minutes after the start of the reaction, 3 mL of the catalyst solution 1 was added. The catalyst cylinder was washed with 3 mL of toluene 10 minutes after the start of the reaction. 30 Minutes after the start of the reaction, 3 mL of a toluene solution (0.2 M) of 1,2-butanediol was added to stop the reaction. Ethylene pressure was released. The autoclave was brought back to room temperature, and acetone (100 mL) was added. The solid that was precipitated was recovered by filtration, washed with acetone (100 mL × 2), and dried under reduced pressure. A polymer weighing 2.4 g was thus obtained.

[Example 21]

30 mL of a catalyst solution (2 mM/AL-4) was prepared in the same manner as in Example 3, except that the amount of $Ni(cod)_2$ was changed to 193.0 mg (0.7 mmol), $Ni(cod)_2$ was dissolved into 70 mL of toluene, 29.9 mg (0.06 mmol) of AL-4 was used instead of AL-2, and 30 mL of the $Ni(cod)_2$ in toluene solution was added to AL-4.
The procedure of Example 7 was repeated, except that 5.5 mL of the above catalyst solution was used at the start of the reaction, the catalyst cylinder was washed with 3 mL of toluene 3 minutes after the start of the reaction, 3 mL of the catalyst solution was added 8 minutes after the start of the reaction, and the catalyst cylinder was washed with 3 mL of toluene 14 minutes after the start of the reaction. As a result, a polymer weighing 1.9 g was obtained.

[Example 22]

30 mL of a catalyst solution (2 mM/AL-4) was prepared in the same manner as in Example 21.
The procedure of Example 7 was repeated, except that 2.5 mL of the above catalyst solution was used at the start of the reaction, 3 mL of the catalyst solution was added 5 minutes after the start of the reaction, and the catalyst cylinder was washed with 3 mL of toluene 7 minutes after the start of the reaction. As a result, a polymer weighing 0.5 g was obtained.

[Example 23]

20 mL of a catalyst solution (4 mM/AL-4) was prepared in the same manner as in Example 3, except that the amount of $Ni(cod)_2$ was changed to 275.1 mg (1.0 mmol), $Ni(cod)_2$ was dissolved into 100 mL of toluene, 39.6 mg (0.08 mmol) of AL-4 was used instead of AL-2, and 20 mL of the $Ni(cod)_2$ in toluene solution was added to AL-4.
A 0.2 L autoclave was charged with 78 mL of toluene, 2.8 mL (14 mmol) of tert-butyl 5-norbornene-2-carboxylate (tBNC), and 100 μL of a toluene solution (0.1 M) of TNOA. The temperature was raised to 90°C. Nitrogen was added so that the internal pressure of the autoclave would be 0.2 MPa. Subsequently, ethylene was added so that the internal pressure of the autoclave would be 1.0 MPa. 3.0 mL of the catalyst solution was added to the catalyst cylinder, and the catalyst was added to the autoclave with 1.2 MPa nitrogen. This addition was taken as the reaction start time. The catalyst cylinder was washed with 3 mL of toluene 3 minutes after the start of the reaction. 3.0 mL of the catalyst solution was added 8 minutes after the start of the reaction. The catalyst cylinder was washed with 3 mL of toluene 9 minutes after the start of the reaction. 30 Minutes after the start of the reaction, 3 mL of a toluene solution (0.2 M) of 1,2-butanediol was added to stop the reaction. Ethylene pressure was released. The autoclave was brought back to room temperature, and acetone (100 mL) was added. The solid that was precipitated was recovered by filtration, washed with acetone (100 mL × 2), and dried under reduced pressure. A polymer weighing 1.9 g was thus obtained.

[Example 24]

25 mL of a catalyst solution (4 mM/AL-4) was prepared in the same manner as in Example 3, except that the amount of $Ni(cod)_2$ was changed to 330.1 mg (1.2 mmol), $Ni(cod)_2$ was dissolved into 120 mL of toluene, 49.4 mg (0.10 mmol) of AL-4 was used instead of AL-2, and 25 mL of the $Ni(cod)_2$ in toluene solution was added to AL-4.
A 0.2 L autoclave was charged with 87 mL of toluene and 2.9 mL (19 mmol) of 4-acetoxystyrene (4-OAcSt). The temperature was raised to 90°C. Subsequently, 1.0 MPa of ethylene was added. 3.5 mL of the catalyst solution was added to the catalyst cylinder, and the catalyst was added to the autoclave with 1.2 MPa nitrogen. This addition was taken as the reaction start time. The catalyst cylinder was washed with 3 mL of toluene 7 minutes after the start of the reaction. 30 Minutes after the start of the reaction, 3 mL of a toluene solution (0.2 M) of 1,2-butanediol was added to stop the reaction. Ethylene pressure was released. The autoclave was brought back to room temperature, and acetone (100 mL) was added. The solid that was precipitated was recovered by filtration, washed with acetone (100 mL × 2), and dried under reduced pressure. A polymer weighing 2.5 g was thus obtained.

[Example 25]

30 mL of a catalyst solution (1 mM/AL-5) was prepared in the same manner as in Example 3, except that 16.2 mg (0.03 mmol) of AL-5 was used instead of AL-2.
The procedure of Example 3 was repeated, except that 5 mL of the above catalyst solution was used at the start of the reaction, 10 mL of 5 mL of the catalyst solution was added 10 minutes after the start of the reaction, and the catalyst cylinder was washed with 10 mL of toluene 12 minutes after the start of the reaction. As a result, a polymer weighing 0.8 g was obtained.

[Example 26]

30 mL of a catalyst solution (1 mM/AL-6) was prepared in the same manner as in Example 3, except that 13.2 mg (0.03 mmol) of AL-6 was used instead of AL-2.

Polymerization was performed in the same manner as in Example 3, except that the above catalyst solution was used. As a result, a polymer weighing 0.6 g was obtained.

[Example 27]

30 mL of a catalyst solution (1 mM/AL-7) was prepared in the same manner as in Example 3, except that 19.2 mg (0.03 mmol) of AL-7 was used instead of AL-2.

Polymerization was performed in the same manner as in Example 3, except that 5 mL of the above catalyst solution was used at the start of the reaction, 10 mL of the catalyst solution was added 5 minutes and 10 minutes after the start of the reaction, and the catalyst cylinder was washed with 10 mL of toluene 15 minutes after the start of the reaction. As a result, a polymer weighing 1.5 g was obtained.

[Example 28]

30 mL of a catalyst solution (1 mM/AL-8) was prepared in the same manner as in Example 3, except that 14.5 mg (0.03 mmol) of AL-8 was used instead of AL-2.

Polymerization was performed in the same manner as in Example 3, except that 5 mL of the above catalyst solution was used at the start of the reaction, 10 mL of the catalyst solution was added 5 minutes after the start of the reaction, and the catalyst cylinder was washed with 10 mL of toluene 10 minutes after the start of the reaction. As a result, a polymer weighing 3.2 g was obtained.

[Example 29]

30 mL of a catalyst solution (1 mM/AL-11) was prepared in the same manner as in Example 3, except that 14.3 mg (0.03 mmol) of AL-11 was used instead of AL-2.

Polymerization was performed in the same manner as in Example 3, except that the above catalyst solution was used, and the reaction was stopped 16 minutes after the start of the reaction. As a result, a polymer weighing 49.8 g was obtained.

[Example 30]

50 mL of a catalyst solution (1 mM/AL-11) was prepared in the same manner as in Example 3, except that the amount of $Ni(cod)_2$ was changed to 141.3 mg (0.55 mmol), $Ni(cod)_2$ was dissolved into 55 mL of toluene, 23.8 mg (0.05 mmol) of AL-11 was used instead of AL-2, and 50 mL of the $Ni(cod)_2$ in toluene solution was added to AL-11.

A 2.4 L autoclave was charged with 930 mL of toluene. 2.9 mL (20 mmol) of tBA was added to the catalyst cylinder and was added to the autoclave with 0.5 MPa nitrogen. The catalyst cylinder was washed with 10 mL of toluene, and the washing was added to the autoclave. 1.0 mL of a toluene solution (0.1 M) of TNOA was added to the catalyst cylinder and was added to the autoclave with 0.5 MPa nitrogen. The catalyst cylinder was washed with 10 mL of toluene, and the washing was added to the autoclave. The temperature was raised to 90°C. Nitrogen was added so that the internal pressure of the autoclave would be 0.5 MPa. Subsequently, ethylene was added so that the internal pressure of the autoclave would be 3.0 MPa. 5 mL of the catalyst solution was added to the catalyst cylinder, and the catalyst was added to the autoclave with 3.5 MPa nitrogen. This addition was taken as the reaction start time. 10 mL of the catalyst solution was added 5 minutes, 10 minutes, 13 minutes, and 15 minutes after the start of the reaction. 5 mL of the catalyst solution was added 18 minutes after the start of the reaction. The catalyst cylinder was washed with 10 mL of toluene 23 minutes after the start of the reaction. 60 Minutes after the start of the reaction, 10 mL of a toluene solution (0.2 M) of 1,2-butanediol was added to stop the reaction. Ethylene pressure was released. The autoclave was brought back to room temperature, and acetone (1000 mL) was added. The solid that was precipitated was recovered by filtration, washed with acetone (1000 mL × 2), and dried under reduced pressure. A polymer weighing 18.4 g was thus obtained.

[Example 31]

30 mL of a catalyst solution (1 mM/AL-14) was prepared in the same manner as in Example 3, except that 14.2 mg (0.03 mmol) of AL-14 was used instead of AL-2.

Polymerization was performed in the same manner as in Example 3, except that 1 mL of the above catalyst

solution was used at the start of the reaction, the catalyst cylinder was washed with 10 mL of toluene 4 minutes after the start of the reaction, 1 mL of the catalyst solution was added 33 minutes after the start of the reaction, and the catalyst cylinder was washed with 10 mL of toluene after 40 minutes. As a result, a polymer weighing 7.5 g was obtained.

[Example 32]

50 mL of a catalyst solution (1 mM/AL-16) was prepared in the same manner as in Example 3, except that 141.3 mg (0.55 mmol) of $Ni(cod)_2$ was added to the flask, $Ni(cod)_2$ was dissolved into 55 mL of toluene, 24.3 mg (0.05 mmol) of AL-16 was used instead of AL-2, and 50 mL of the $Ni(cod)_2$ in toluene solution was added to AL-16.

A 2.4 L autoclave was charged with 930 mL of toluene. 2.9 mL (20 mmol) of tBA was added to the catalyst cylinder and was added to the autoclave with 0.5 MPa nitrogen. The catalyst cylinder was washed with 10 mL of toluene, and the washing was added to the autoclave. 1.0 mL of a toluene solution (0.1 M) of TNOA was added to the catalyst cylinder and was added to the autoclave with 0.5 MPa nitrogen. The catalyst cylinder was washed with 10 mL of toluene, and the washing was added to the autoclave. The temperature was raised to 90°C. Nitrogen was added so that the internal pressure of the autoclave would be 0.5 MPa. Subsequently, ethylene was added so that the internal pressure of the autoclave would be 3.0 MPa. 5 mL of the catalyst solution was added to the catalyst cylinder, and the catalyst was added to the autoclave with 3.5 MPa nitrogen. This addition was taken as the reaction start time. 5 mL of the catalyst solution was added 5 minutes after the start of the reaction, and 10 mL of the catalyst solution was added 10 minutes after the start of the reaction. The catalyst cylinder was washed with 10 mL of toluene 37 minutes after the start of the reaction. 60 Minutes after the start of the reaction, 10 mL of a toluene solution (0.2 M) of 1,2-butanediol was added to stop the reaction. Ethylene pressure was released. The autoclave was brought back to room temperature, and EKINEN (1000 mL, manufactured by Japan Alcohol Trading CO., LTD.) was added. The solid that was precipitated was recovered by filtration, washed with acetone (1000 mL × 2), and dried under reduced pressure. A polymer weighing 13.0 g was thus obtained.

[Example 33]

13 mL of a catalyst solution (4 mM/AL-16) was prepared in the same manner as in Example 32, except that the amount of AL-16 was changed to 25.3 mg (0.052 mmol) and 13 mL of the $Ni(cod)_2$ in toluene solution was added to AL-16.

A 0.2 L autoclave was charged with 80 mL of toluene, 12 mL (113 mmol) of methyl methacrylate (MMA), and 100 μL of a toluene solution (0.1 M) of TNOA. The temperature was raised to 90°C. Subsequently, 1.0 MPa of ethylene was added. 1 mL of the catalyst solution and 2 mL of toluene were added to the catalyst cylinder, and the catalyst was added to the autoclave with 1.2 MPa nitrogen. This addition was taken as the reaction start time. 2 mL of the catalyst solution was added 8 minutes after the start of the reaction. The catalyst cylinder was washed with 3 mL of toluene 10 minutes after the start of the reaction. 30 Minutes after the start of the reaction, 3 mL of a toluene solution (0.2 M) of 1,2-butanediol was added to stop the reaction. Ethylene pressure was released. The autoclave was brought back to room temperature, and acetone (100 mL) was added. The solid that was precipitated was recovered by filtration and was suspended in acetone (100 mL). 1 mL of 10 wt% HCl was added to the suspension, and the mixture was allowed to stand overnight. The suspension was washed twice with acetone (100 mL × 2). The solid was recovered by filtration and was dried under reduced pressure. A polymer weighing 0.54 g was thus obtained.

[Example 34]

96.1 mg (0.35 mmol) of $Ni(cod)_2$ was weighed into a 50 mL flask and was dissolved into 35 mL of toluene. Furthermore, 14.4 mg (0.030 mmol) of AL-19 was weighed into another flask. 30 mL of the $Ni(cod)_2$ in toluene solution was weighed out and was added to the flask containing AL-19. The resultant solution was warmed in a 40°C water bath and was stirred for 15 minutes to give a catalyst solution.

A 0.2 L autoclave was charged with 94 mL of toluene, 0.3 mL of tBA (2.1 mmol), and 100 μL (0.010 mmol) of a toluene solution (0.1 M) of TNOA. The temperature was raised to 90°C. High-pressure nitrogen was added to increase the pressure to 0.5 MPa, and 2.5 MPa of ethylene was added. 1 mL of the catalyst solution was added to the catalyst cylinder, and 2 mL of toluene was placed still thereon. The catalyst was added to the autoclave with high-pressure nitrogen. This addition was taken as the reaction start time. The catalyst solution and toluene were added in the similar manner 7 minutes and 13 minutes after the start of the reaction. The catalyst cylinder was washed with 3 mL of toluene 22 minutes after the start of the reaction, and the washing was added to the autoclave. 60 Minutes after the start of the reaction, 3 mL of a toluene solution (0.2 M) of 1,2-butanediol was added to stop the reaction. Ethylene pressure was released. The autoclave was brought back to room temperature, and acetone (100 mL) was added. The solid that was precipitated was recovered by filtration, washed with acetone (100 mL × 2), and dried under reduced pressure. A polymer

weighing 5.3 g was thus obtained.

[Example 35]

164.5 mg (0.60 mmol) of Ni(cod)$_2$ was weighed into a 50 mL flask and was dissolved into 15 mL of toluene. Furthermore, 23.4 mg (0.050 mmol) of AL-19 was weighed into another flask. 12.5 mL of the Ni(cod)$_2$ in toluene solution was weighed out and was added to the flask containing AL-19. The resultant solution was warmed in a 40°C water bath and was stirred for 15 minutes to give a catalyst solution.

A 0.2 L autoclave was charged with 88 mL of toluene and 3.88 g (13.1 mmol) of a toluene solution of 2-norbornene (0.318 g/g). The temperature was raised to 90°C. High-pressure nitrogen was added to increase the pressure to 0.2 MPa, and 0.8 MPa of ethylene was added. 1 mL of the catalyst solution was added to the catalyst cylinder, and 2 mL of toluene was placed still thereon. The catalyst was added to the autoclave with high-pressure nitrogen. This addition was taken as the reaction start time. After 9 minutes, the catalyst cylinder was washed with 3 mL of toluene, and the washing was added to the autoclave. 30 Minutes after the start of the reaction, 3 mL of a toluene solution (0.2 M) of 1,2-butanediol was added to stop the reaction. Ethylene pressure was released. The autoclave was brought back to room temperature, and acetone (100 mL) was added. The solid that was precipitated was recovered by filtration, washed with acetone (100 mL × 2), and dried under reduced pressure. A polymer weighing 1.9 g was thus obtained.

[Example 36]

96.4 mg (0.35 mmol) of Ni(cod)$_2$ was weighed into a 50 mL flask and was dissolved into 35 mL of toluene. Furthermore, 14.6 mg (0.030 mmol) of AL-27 was weighed into another flask. 30 mL of the Ni(cod)$_2$ in toluene solution was weighed out and was added to the flask containing AL-27. The resultant solution was warmed in a 40°C water bath and was stirred for 15 minutes to give a catalyst solution.

A 2.4 L autoclave was charged with 1000 mL of toluene. The temperature was raised to 90°C. High-pressure nitrogen was added to increase the pressure to 0.5 MPa, and 2.5 MPa of ethylene was added. 5 mL of the catalyst solution was added to the catalyst cylinder, and the catalyst was added to the autoclave with high-pressure nitrogen. This addition was taken as the reaction start time. Subsequently, the catalyst cylinder was washed with 10 mL of toluene, and the washing was added to the autoclave. 60 Minutes after the start of the reaction, 10 mL of a toluene solution (0.2 M) of 1,2-butanediol was added to stop the reaction. Ethylene pressure was released. The autoclave was brought back to room temperature, and acetone (1 L) was added. The solid that was precipitated was recovered by filtration, washed with acetone (1 L × 2), and dried under reduced pressure. A polymer weighing 34.5 g was thus obtained.

[Example 37]

96.2 mg (0.35 mmol) of Ni(cod)$_2$ was weighed into a 50 mL flask and was dissolved into 35 mL of toluene. Furthermore, 14.7 mg (0.030 mmol) of AL-16 was weighed into another flask. 30 mL of the Ni(cod)$_2$ in toluene solution was weighed out and was added to the flask containing AL-16. The resultant solution was warmed in a 40°C water bath and was stirred for 15 minutes to give a catalyst solution.

A 0.2 L autoclave was charged with 88 mL of toluene and 1.95 g (6.6 mmol) of a toluene solution of norbomene (0.318 g/g). The temperature was raised to 90°C. High-pressure nitrogen was added to increase the pressure to 0.2 MPa, and 0.8 MPa of ethylene was added. 2 mL of the catalyst solution was added to the catalyst cylinder, and the catalyst was added to the autoclave with high-pressure nitrogen. This addition was taken as the reaction start time. Subsequently, the catalyst cylinder was washed with 3 mL of toluene, and the washing was added to the autoclave. 3 mL of the catalyst solution was added 5 minutes and 9 minutes after the start of the reaction. The catalyst cylinder was washed with 3 mL of toluene 12 minutes after the start of the reaction, and the washing was added to the autoclave. 30 Minutes after the start of the reaction, 3 mL of a toluene solution (0.2 M) of 1,2-butanediol was added to stop the reaction. Ethylene pressure was released. The autoclave was brought back to room temperature, and acetone (100 mL) was added. The solid that was precipitated was recovered by filtration, washed with acetone (100 mL × 2), and dried under reduced pressure. A polymer weighing 2.3 g was thus obtained.

[Example 38]

15.5 mg (0.024 mmol) of AL-16NiMePy was weighed into a 50 mL flask and was dissolved into 12 mL of toluene to give a catalyst solution (20 mM).

A 2.4 L autoclave was charged with 950 mL of toluene. 2.9 mL of tBA (20 mmol) was added to the catalyst cylinder, and 9 mL of toluene was placed still thereon. The materials were added to the autoclave with 0.5 MPa nitrogen. 1 mL (0.1 mmol) of a toluene solution (0.1 M) of TNOA was added to the catalyst cylinder, and 10 mL of toluene was

placed still thereon. The materials were added to the autoclave with 0.5 MPa nitrogen. The temperature was raised to 90°C. High-pressure nitrogen was added to increase the pressure to 0.5 MPa, and 2.5 MPa of ethylene was added. 2 mL of the catalyst solution was added to the catalyst cylinder, and 10 mL of toluene was placed still thereon. The catalyst was added to the autoclave with high-pressure nitrogen. This addition was taken as the reaction start time. 10 Minutes after the start of the reaction, 4 mL of the catalyst solution was added to the catalyst cylinder, 8 mL of toluene was placed still thereon, and the materials were added to the autoclave. The catalyst cylinder was washed with 10 mL of toluene 26 minutes after the start of the reaction, and the washing was added to the autoclave. 60 Minutes after the start of the reaction, 10 mL of a toluene solution (0.2 M) of 1,2-butanediol was added to stop the reaction. Ethylene pressure was released. The autoclave was brought back to room temperature, and acetone (100 mL) was added. The solid that was precipitated was recovered by filtration, washed with acetone (100 mL × 2), and dried under reduced pressure. A polymer weighing 6.4 g was thus obtained.

[Example 39]

Nickel (II) bis(acetylacetonate) is written as $Ni(acac)_2$.

10.2 mg (0.040 mmol) of $Ni(acac)_2$ was weighed into a 50 mL flask and was dissolved into 8 mL of toluene. Furthermore, 12.0 mg (0.025 mmol) of AL-16 was weighed into another flask. 5 mL of the $Ni(acac)_2$ in toluene solution was weighed out and was added to the flask containing AL-16. The resultant solution was warmed in a 40°C water bath and was stirred for 15 minutes to give a catalyst solution.

A 0.2 L autoclave was charged with 96 mL of toluene, 0.3 mL of tBA (2.1 mmol), and 0.25 mL (25 μmol) of a toluene solution (0.1 M) of TNOA. The temperature was raised to 90°C. High-pressure nitrogen was added to increase the pressure to 0.5 MPa, and 2.5 MPa of ethylene was added. 1 mL of the catalyst solution was added to the catalyst cylinder, and the catalyst was added to the autoclave with high-pressure nitrogen. This addition was taken as the reaction start time. After 2 minutes, the catalyst cylinder was washed with 3 mL of toluene, and the washing was added to the autoclave. 60 Minutes after the start of the reaction, 3 mL of a toluene solution (0.2 M) of 1,2-butanediol was added to stop the reaction. Ethylene pressure was released. The autoclave was brought back to room temperature, and acetone (100 mL) was added. The solid that was precipitated was recovered by filtration, washed with acetone (100 mL × 2), and dried under reduced pressure. A polymer weighing 3.6 g was thus obtained.

[Example 40]

Tris(trans-1,2-bis(4-tert-butylphenyl)ethene)nickel (0) is written as $Ni(4\text{-}tBuStb)_3$.

56.7 mg (0.061 mmol) of $Ni(4\text{-}tBuStb)_3$ was weighed into a 50 mL flask and was dissolved into 6 mL of toluene to give a transition metal compound solution. Furthermore, 12.1 mg (0.025 mmol) of AL-16 was weighed into another flask and was dissolved into 5 mL of toluene to give a ligand solution.

A 0.2 L autoclave was charged with 87 mL of toluene, 0.3 mL of tBA (2.1 mmol), and 0.3 mL (0.03 mmol) of a toluene solution (0.1 M) of TNOA. The temperature was raised to 90°C. High-pressure nitrogen was added to increase the pressure to 0.5 MPa, and 2.5 MPa of ethylene was added. 3 mL of the transition metal compound solution was added to the catalyst cylinder, and the catalyst was added to the autoclave with high-pressure nitrogen. Subsequently, 2 mL of the transition metal compound solution was further added to the autoclave. Subsequently, the catalyst cylinder was washed with 3 mL of toluene, and the washing was added to the autoclave. Subsequently, 1 mL of the ligand solution was added to the autoclave. This addition was taken as the reaction start time. The catalyst cylinder was washed with 3 mL of toluene 5 minutes after the start of the reaction, and the washing was added to the autoclave. 60 Minutes after the start of the reaction, 3 mL of a toluene solution (0.2 M) of 1,2-butanediol was added to stop the reaction. Ethylene pressure was released. The autoclave was brought back to room temperature, and acetone (100 mL) was added. The solid that was precipitated was recovered by filtration, washed with acetone (100 mL × 2), and dried under reduced pressure. A polymer weighing 3.8 g was thus obtained.

[Example 41]

343.8 mg (1.25 mmol) of $Ni(cod)_2$ was weighed into a 100 mL flask and was dissolved into 60 mL of toluene to give a transition metal compound solution (0.021 M). Furthermore, 213.3 mg (0.6 mmol) of AA-1 was weighed into another flask and was dissolved into 12 mL of toluene to give a ligand solution (0.05 M). 2 mL (0.1 mmol) of the AA-1 in toluene solution and 48 mL (1 mmol) of the $Ni(cod)_2$ in toluene solution were mixed. The resultant solution was stirred at 40°C for 15 minutes to give a catalyst solution (0.02 M/AA-1).

A 2.4 L autoclave was charged with 1000 mL of toluene. The temperature was raised to 90°C. High-pressure nitrogen was added to increase the pressure to 0.5 MPa, and 2.5 MPa of ethylene was added. 2.5 mL of the catalyst solution was added to the catalyst cylinder, and the catalyst solution was added to the autoclave with high-pressure

nitrogen. This addition was taken as the reaction start time. 10 mL of the catalyst solution was added 5 minutes, 10 minutes, 15 minutes, and 20 minutes after the start of the reaction, and 7.5 mL of the catalyst solution was added 25 minutes after the start of the reaction. The catalyst cylinder was washed with 10 mL of toluene 30 minutes after the start of the reaction, and the washing was added to the autoclave. 60 Minutes after the start of the reaction, 10 mL of a toluene solution (0.2 M) of 1,2-butanediol was added to stop the reaction. Ethylene pressure was released. The autoclave was brought back to room temperature, and acetone (1000 mL) was added. The solid that was precipitated was recovered by filtration, washed with acetone (1000 mL × 2), and dried under reduced pressure. A polymer weighing 7.2 g was thus obtained.

Table 1 describes the polymerization conditions in Examples 1 to 41. Table 2 describes the results obtained and the results of analysis of the polymers.

[Table 1]

| Ex. | Ligand | Amount of ligand (mmol) | Form of nickel | Amount at nickel (mmol) | Toluene (mL) | Ethylene (MPa) | Type of comonomer | Amount of comonomer (mmol) | TNOA (mmol) | Temp. (°C) | Time (min) |
|---|---|---|---|---|---|---|---|---|---|---|---|
| 1 | AL-1 | 0.100 | $Ni(cod)_2$ | 0.10 | 1020 | 2.5 | - | - | - | 50 | 60 |
| 2 | AL-2 | 0.100 | $Ni(cod)_2$ | 0.10 | 1020 | 2.5 | - | - | - | 50 | 40 |
| 3 | AL-2 | 0.005 | $Ni(cod)_2$ | 0.05 | 1015 | 2.5 | - | - | - | 90 | 60 |
| 4 | AL-2 | 0.050 | $Ni(cod)_2$ | 0.50 | 88 | 2.5 | tBA | 1 | 0.01 | 90 | 60 |
| 5 | AL-2 | 0.001 | $Ni(cod)_2$ | 0.01 | 92 | 2.5 | 1-Decene | 19 | - | 90 | 30 |
| 6 | AL-2 | 0.020 | $Ni(cod)_2$ | 0.02 | 100 | 0.8 | Norbomene | 13.6 | - | 90 | 30 |
| 7 | AL-2 | 0.005 | $Ni(cod)_2$ | 0.05 | 95 | 2.5 | 4-MeSt | 19 | - | 90 | 30 |
| 8 | AL-2 | 0.005 | $Ni(cod)_2$ | 0.05 | 95 | 1.0 | 1-McSt. | 19 | - | 90 | 30 |
| 9 | AL-2 | 0.004 | $Ni(cod)_2$ | 0.04 | 86 | 0.5 | MU | 38 | 0.01 | 70 | 60 |
| 10 | AL-3 | 0.100 | $Ni(cod)_2$ | 0.10 | 1020 | 2.5 | - | - | - | 50 | 25 |
| 11 | AL-3 | 0.005 | $Ni(cod)_2$ | 0.05 | 1015 | 2.5 | - | - | - | 90 | 60 |
| 12 | AL-3 | 0.005 | $Ni(cod)_2$ | 0.05 | 965 | 2.5 | 1-Decene | 190 | - | 90 | 60 |
| 13 | AL-3 | 0.080 | $Ni(cod)_2$ | 0.80 | 1050 | 2.5 | tBA | 20 | 0.1 | 90 | 60 |
| 14 | AL-4 | 0.020 | $Ni(cod)_2$ | 0.02 | 1012 | 2.5 | - | - | - | 50 | 20 |
| 15 | AL-4 | 0.010 | $Ni(cod)_2$ | 0.01 | 1020 | 2.5 | - | - | - | 90 | 60 |
| 16 | AL-4 | 0.005 | $Ni(cod)_2$ | 0.05 | 1015 | 2.5 | - | - | - | 90 | 60 |
| 17 | AL-4 | 0.100 | $Ni(cod)_2$ | 1.00 | 1010 | 2.5 | tBA, a | 20 | 0.1 | 90 | 60 |
| 18 | AL-4 | 0.015 | $Ni(cod)_2$ | 0.15 | 965 | 2.5 | 1-Decene | 190 | - | 90 | 60 |
| 19 | AL-4 | 0.016 | $Ni(cod)_2$ | 0.16 | 105 | 0.8 | Norbomene | 14.2 | - | 90 | 40 |
| 20 | AL-4 | 0.040 | $Ni(cod)_2$ | 0.04 | 97 | 0.8 | Norbomene | 13.2 | - | 90 | 30 |
| 21 | AL-4 | 0.017 | $Ni(cod)_2$ | 0.17 | 104 | 2.5 | 4-MeSL | 19 | - | 90 | 30 |

(continued)

| Ex. | Ligand | Amount of ligand (mmol) | Form of nickel | Amount at nickel (mmol) | Toluene (mL) | Ethylene (MPa) | Type of comonomer | Amount of comonomer (mmol) | TNOA (mmol) | Temp. (°C) | Time (min) |
|---|---|---|---|---|---|---|---|---|---|---|---|
| 22 | AL-4 | 0.011 | $Ni(cod)_2$ | 0.11 | 98 | 1.0 | 4-MeSt | 19 | - | 90 | 30 |
| 23 | AL-4 | 0.024 | $Ni(cod)_2$ | 0.24 | 90 | 0.8 | tBNC | 14 | 0.01 | 90 | 30 |
| 24 | AL-4 | 0.014 | $Ni(cod)_2$ | 0.14 | 94 | 1.0 | 4-OAcSt | 19 | - | 90 | 60 |
| 25 | AL-5 | 0.015 | $Ni(cod)_2$ | 0.15 | 1025 | 2.5 | - | - | - | 90 | 60 |
| 26 | AL-6 | 0.005 | $Ni(cod)_2$ | 0.05 | 1015 | 2.5 | - | - | - | 90 | 60 |
| 27 | AL-7 | 0.025 | $Ni(cod)_2$ | 0.25 | 1035 | 2.5 | - | - | - | 90 | 60 |
| 28 | AL-8 | 0.015 | $Ni(cod)_2$ | 0.15 | 1025 | 2.5 | - | - | - | 90 | 60 |
| 29 | AL-11 | 0.005 | $Ni(cod)_2$ | 0.05 | 1015 | 2.5 | - | - | - | 90 | 16 |
| 30 | AL-11 | 0.050 | $Ni(cod)_2$ | 0.50 | 1010 | 2.5 | tBA | 20 | 0.1 | 90 | 60 |
| 31 | AL-14 | 0.002 | $Ni(cod)_2$ | 0.02 | 1022 | 2.5 | - | - | - | 90 | 60 |
| 32 | AL-16 | 0.020 | $Ni(cod)_2$ | 0.20 | 980 | 2.5 | tBA | 20 | 0.1 | 90 | 60 |
| 33 | AL-16 | 0.012 | $Ni(cod)_2$ | 0.12 | 88 | 1.0 | MMA | 113 | 0.01 | 90 | 30 |
| 34 | AL-19 | 0.003 | $Ni(cod)_2$ | 0.03 | 106 | 2.5 | tBA | 2.1 | 0.01 | 90 | 60 |
| 35 | AL-19 | 0.004 | $Ni(cod)_2$ | 0.04 | 99 | 0.8 | Norbomene | 13.1 | - | 90 | 30 |
| as | AL-27 | 0.005 | $Ni(cod)_2$ | 0.05 | 1015 | 2.5 | - | - | - | 90 | 60 |
| 37 | AL-16 | 0.008 | $Ni(cod)_2$ | 0.08 | 102 | 0.8 | Norbomene | 6.6 | - | 90 | 30 |
| 38 | AL-16 | 0.012 | (AL-16) NiMePy | 0.012 | 1003 | 2.5 | tBA | 20 | 0.10 | 90 | 60 |
| 39 | AL-16 | 0.005 | $Ni(acac)_2$ | 0.005 | 100 | 2.5 | tBA | 2.1 | 0.025 | 90 | 60 |
| 40 | AL-16 | 0.005 | $Ni(tBuStb)_3$ | 0.05 | 99 | 2.5 | tBA | 2.1 | 0.03 | 90 | 60 |
| 41 | AA-1 | 0.100 | $Ni(cod)_2$ | 1.00 | 1060 | 2.5 | - | - | - | 90 | 60 |

a:20 mmol of 1-hexene was also added.

[Table 2]

| Ex. | Ligand | Yield (g) | Activity (kg/mol/h) | Mw (×$10^3$) | Mw/Mn | Methyl branches (per 1000 carbon atoms) | Content (mol%) | Tm (°C) |
|---|---|---|---|---|---|---|---|---|
| 1 | AL-1 | 6.0 | 60 | 59 | 2.1 | n.m. | - | 134.0 |
| 2 | AL-2 | 9.0 | 140 | 403 | 3.7 | n.m. | - | 135.1, 137.2 |
| 3 | AL-2 | 14.3 | 2900 | 181 | 2.0 | n.m. | - | n.m. |
| 4 | AL-2 | 0.8 | 16 | 7.8 | 2.8 | n.m. | 0.1 | 127.4 |
| 5 | AL-2 | 1.6 | 3200 | 196 | 2.1 | n.m. | 0.16 | n.m. |
| 6 | AL-2 | 1.8 | 180 | 12 | 2.6 | n.m. | 0.3 | 128.1 |
| 7 | AL-2 | 6.6 | 2600 | 92 | 2.9 | n.m. | 0.2 | n.m. |
| 8 | AL-2 | 2.3 | 910 | 49 | 2.2 | n.m. | 0.3 | n.m. |
| 9 | AL-2 | 0.64 | 160 | 68 | 3.2 | 0.4 | 1.4 | n.m. |
| 10 | AL-3 | 7.3 | 180 | 727 | 2.4 | n.m. | - | 135.3, 136.9 |
| 11 | AL-3 | 37.0 | 7400 | 196 | 4.2 | n.m. | - | n. m. |
| 12 | AL-3 | 5.0 | 1000 | 217 | 2.0 | 0.3 | 0.14 | n.m. |
| 13 | AL-3 | 0.7 | 72 | 17 | 2.1 | n.m. | 0.30 | n.m. |
| 14 | AL-4 | 2.2 | 330 | 1656 | 2.1 | n.m. | - | 133.4, 135.0 |
| 15 | AL-4 | 10.0 | 1000 | 220 | 2.1 | n.m. | - | 131.3, 133.7 |
| 16 | AL-4 | 39.5 | 7900 | 250 | 1.9 | n.m. | - | n.m. |
| 17 | AL-4 | 9.6 | 96 | 146 | 2.6 | n.m. | 1.8 , a | 111.0 |
| 18 | AL-4 | 65.4 | 2200 | 162 | 2.2 | 2.4 | 0.2 | 126.7 |
| 19 | AL-4 | 1.5 | 140 | 92 | 1.7 | 1.9 | 4.7 | n.m. |
| 20 | AL-4 | 2.4 | 120 | 83 | 1.7 | 2.5 | 5.2 | 89.0 |
| 21 | AL-4 | 1.9 | 220 | 69 | 2.0 | n.m. | 1.4 | n.m. |
| 22 | AL-4 | 0.5 | 90 | 140 | 2.3 | n.m. | 0.4 | 124.2 |
| 23 | AL-4 | 1.9 | 160 | 62 | 2.0 | 1.5 | 4.6 | n.m. |
| 24 | AL-4 | 2.5 | 180 | 31 | 2.7 | 1.0 | 2.2 | n.m. |
| 25 | AL-5 | 0.8 | 53 | 374 | 17.4 | n.m. | - | n.m. |
| 26 | AL-6 | 0.6 | 120 | 68 | 16.2 | n.m. | - | n.m. |
| 27 | AL-7 | 1.5 | 62 | 89 | 13.4 | n.m. | - | n.m. |
| 28 | AL-8 | 3.2 | 210 | 16 | 4.9 | n.m. | - | n.m. |
| 29 | AL-11 | 49.8 | 37300 | 3.3 | 1.7 | n.m. | - | n.m. |
| 30 | AL-11 | 18.4 | 370 | 3.8 | 1.8 | n.m. | 0.35 | n.m. |
| 31 | AL-14 | 7.5 | 3800 | 54 | 2.1 | n.m. | - | n.m. |
| 32 | AL-16 | 13.0 | 650 | 139 | 2.0 | 0.8 | 0.8 | n.m. |
| 33 | AL-16 | 0.54 | 90 | 27 | 2.2 | 1.5 | 0.1 | n.m. |
| 34 | AL-19 | 5.3 | 1800 | 251 | 2.3 | 0.2 | 0.1 | n.m. |

(continued)

| Ex. | Ligand | Yield (g) | Activity (kg/mol/h) | Mw ($\times 10^3$) | Mw/Mn | Methyl branches (per 1000 carbon atoms) | Content (mol%) | Tm (°C) |
|---|---|---|---|---|---|---|---|---|
| 35 | AL-19 | 1.9 | 1000 | 259 | 5.2 | 0.3 | 0.5 | n.m. |
| 36 | AL-27 | 34.5 | 6900 | 571 | 2.8 | 0.5 | - | n.m. |
| 37 | AL-16 | 2.3 | 580 | 76 | 2.0 | 1.8 | 2.8 | n.m. |
| 38 | AL-16 | 6.4 | 530 | 144 | 1.9 | 0.8 | 1.2 | n.m. |
| 39 | AL-16 | 3.6 | 720 | 133 | 1.9 | 0.8 | 0.9 | n.m. |
| 40 | AL-16 | 3.8 | 760 | 129 | 2.1 | 0.8 | 1.0 | n. m. |
| 41 | AA-1 | 7.2 | 72 | 137 | 6.7 | n.m. | - | n.m. |
| a: The content of 1-hexene was 0 mol%. | | | | | | | | |

[Example 42]

165 mg (0.6 mmol) of $Ni(cod)_2$ was weighed into a flask and was dissolved into 30 mL of toluene. Furthermore, 167 mg (0.5 mmol) of AL-2 was weighed into another flask. 25 mL of the $Ni(cod)_2$ in toluene solution was added to the flask containing AL-2. The resultant solution was warmed in a 40°C water bath and was stirred for 15 minutes to give a catalyst solution (20 mM/AL-2).

A 2.4 L autoclave was charged with 500 g of propylene. The temperature was raised to 50°C. 10 mL of the catalyst solution was added to the catalyst cylinder, and the catalyst was added to the autoclave with high-pressure nitrogen. This addition was taken as the reaction start time. The catalyst cylinder was washed with 10 mL of toluene. 60 Minutes after the start of the reaction, 10 mL of a toluene solution (0.2 M) of 1,2-butanediol was added to stop the reaction. Propylene pressure was released. The autoclave was brought back to room temperature. The oily polypropylene thus obtained was purified by silica gel column chromatography using 100% dichloromethane as an eluent. The resultant oily substance was dried under reduced pressure to give 70.6 g of polypropylene.

[Example 43]

33.0 mg (0.12 mmol) of $Ni(cod)_2$ was weighed into a flask and was dissolved into 12 mL of toluene. Furthermore, 33.4 mg (0.10 mmol) of AL-2 was weighed into another flask. 10 mL of the $Ni(cod)_2$ in toluene solution was added to the flask containing AL-2. The resultant solution was warmed in a 40°C water bath and was stirred for 15 minutes to give a catalyst solution (10 mM/AL-2).

A 0.2 L autoclave was charged with 50 mL of toluene and 25 g of propylene. The temperature was raised to 50°C. 1 mL of the catalyst solution was added to the catalyst cylinder, and the catalyst was added to the autoclave with high-pressure nitrogen. This addition was taken as the reaction start time. Through the catalyst cylinder, 2 mL of the catalyst solution was added 5 minutes after the start of the reaction, and 3 mL of the catalyst solution was added 10 minutes after the start of the reaction. The catalyst cylinder was washed with 3 mL of toluene 20 minutes after the start of the reaction, and the washing was added to the autoclave. 60 Minutes after the start of the reaction, 3 mL of a toluene solution (0.2 M) of 1,2-butanediol was added to stop the reaction. Propylene pressure was released. The autoclave was brought back to room temperature, and toluene was distilled off. An oily polypropylene was thus obtained. The polypropylene obtained was purified by silica gel column chromatography using 100% hexane as an eluent. The resultant oily substance was dried under reduced pressure to give 15.5 g of polypropylene.

[Example 44]

12 mL of a catalyst solution (20 mM/AL-2) was prepared in the same manner as in Example 34, except that the amount of $Ni(cod)_2$ was changed to 82.2 mg (0.30 mmol), $Ni(cod)_2$ was dissolved into 30 mL of toluene, 80.2 mg (0.24 mmol) of AL-2 was used, and 12 mL of the $Ni(cod)_2$ in toluene solution was added to AL-2.

A 0.2 L autoclave was charged with 48 mL of toluene, 1.8 mL (14 mmol) of 4-methylstyrene, and 25 g of propylene. The temperature was raised to 50°C. 2.5 mL of the catalyst solution was added to the catalyst cylinder, and the catalyst was added to the autoclave with high-pressure nitrogen. This addition was taken as the reaction start time. 5 Minutes after the start of the reaction, 2.5 mL of the catalyst solution was added through the catalyst cylinder. The catalyst cylinder was washed with 3 mL of toluene 3 minutes and 8 minutes after the start of the reaction, and the

washings were added to the autoclave. 30 Minutes after the start of the reaction, 3 mL of a toluene solution (0.2 M) of 1,2-butanediol was added to stop the reaction. Propylene pressure was released. The autoclave was brought back to room temperature, and toluene was distilled off. An oily polypropylene was thus obtained. The polypropylene obtained was purified by silica gel column chromatography using 100% hexane as an eluent. The resultant oily substance was dried under reduced pressure to give 1.1 g of polypropylene.

[Example 45]

8.5 mL of a catalyst solution (20 mM/AL-2) was prepared in the same manner as in Example 34, except that the amount of $Ni(cod)_2$ was changed to 54.8 mg (0.20 mmol), $Ni(cod)_2$ was dissolved into 20 mL of toluene, 56.4 mg (0.17 mmol) of AL-2 was used, and 8.5 mL of the $Ni(cod)_2$ in toluene solution was added to AL-2.

A 0.2 L autoclave was charged with 50 mL of toluene, 3.92 g (13.2 mmol) of a toluene solution of norbomene (0.318 g/g), and 25 g of propylene. The temperature was raised to 50°C. 2.5 mL of the catalyst solution was added to the catalyst cylinder, and the catalyst was added to the autoclave with high-pressure nitrogen. This addition was taken as the reaction start time. Through the catalyst cylinder, 2.5 mL of the catalyst solution was added 7 minutes and 13 minutes after the start of the reaction. The catalyst cylinder was washed with 3 mL of toluene 3 minutes, 10 minutes, and 15 minutes after the start of the reaction, and the washings were added to the autoclave. 30 Minutes after the start of the reaction, 3 mL of a toluene solution (0.2 M) of 1,2-butanediol was added to stop the reaction. Propylene pressure was released. The autoclave was brought back to room temperature, and toluene was distilled off. An oily polypropylene was thus obtained. The polypropylene obtained was purified by silica gel column chromatography using 100% hexane as an eluent. The resultant oily substance was dried under reduced pressure to give 1.6 g of polypropylene.

[Example 46]

12.5 mL of a catalyst solution (20 mM/AL-3) was prepared in the same manner as in Example 34, except that the amount $Ni(cod)_2$ was changed to 82.5 mg (0.30 mmol), $Ni(cod)_2$ was dissolved into 30 mL of toluene, 122.6 mg (0.25 mmol) of AL-3 was used, and 12.5 mL of the $Ni(cod)_2$ in toluene solution was added to AL-3.

Polymerization was performed in the same manner as in Example 34, except that 2 mL of the above catalyst solution was used at the start of the reaction. The oily polypropylene thus obtained was purified by silica gel column chromatography using 100% hexane as an eluent. The resultant oily substance was dried under reduced pressure to give 2.3 g of polypropylene.

[Example 47]

8 mL of a catalyst solution (20 mM/AL-3) was prepared in the same manner as in Example 34, except that the amount of $Ni(cod)_2$ was changed to 55.0 mg (0.20 mmol), $Ni(cod)_2$ was dissolved into 20 mL of toluene, 78.5 mg (0.16 mmol) of AL-3 was used, and 8 mL of the $Ni(cod)_2$ in toluene solution was added to Al-3.

Polymerization was performed in the same manner as in Example 35, except that 3 mL of the above catalyst solution was used at the start of the reaction, 2 mL of the catalyst solution was added 2 minutes and 4 minutes after the start of the reaction, the catalyst cylinder was washed with 3 mL of toluene 8 minutes after the start of the reaction, and the reaction time was changed to 30 minutes. The resultant oily substance was dried under reduced pressure to give 12.3 g of polypropylene.

[Example 48]

25 mL of a catalyst solution (20 mM/AL-4) was prepared in the same manner as in Example 34, except that the flask was charged with 165.3 mg (0.6 mmol) of $Ni(cod)_2$, $Ni(cod)_2$ was dissolved into 60 mL of toluene, 247.6 mg (0.50 mmol) of AL-4 was used, and 25 mL of the $Ni(cod)_2$ in toluene solution was added to AL-4.

Polymerization was performed in the same manner as in Example 34, except that 10 mL of the above catalyst solution was added at the start of the reaction, and the catalyst cylinder was washed with 10 mL of toluene 11 minutes after the start of the reaction. The oily polypropylene thus obtained was purified by silica gel column chromatography using 100% hexane as an eluent. The resultant oily substance was dried under reduced pressure to give 6.2 g of polypropylene.

Table 3 describes the polymerization conditions in Examples 42 to 67. Table 4 describes the results obtained and the results of analysis of the polymers.

[Example 49]

19.2 mg (0.070 mmol) of $Ni(cod)_2$ was weighed into a 50 mL flask and was dissolved into 7 mL of toluene. Furthermore, 21.7 mg (0.050 mmol) of AL-17 was weighed into another flask. 5 mL of the $Ni(cod)_2$ in toluene solution was weighed out and was added to the flask containing AL-17. The resultant solution was warmed in a 40°C water bath and was stirred for 15 minutes to give a catalyst solution.

A 0.2 L autoclave was charged with 50 mL of toluene and 25 g of propylene. The temperature was raised to 50°C. 1 mL of the catalyst solution was added to the catalyst cylinder, and the catalyst was added to the autoclave with high-pressure nitrogen. This addition was taken as the reaction start time. After 6 minutes, the catalyst cylinder was washed with 3 mL of toluene, and the washing was added. 3 mL of the catalyst solution was added through the catalyst cylinder 12 minutes after the start of the reaction. The catalyst cylinder was washed with 3 mL of toluene 16 minutes after the start of the reaction, and the washing was added to the autoclave. 60 Minutes after the start of the reaction, 3 mL of a toluene solution (0.2 M) of 1,2-butanediol was added to stop the reaction. Propylene pressure was released. The autoclave was brought back to room temperature, and toluene was distilled off. An oily polypropylene was thus obtained. The polypropylene obtained was purified by silica gel column chromatography using 100% hexane as an eluent. The resultant oily substance was dried under reduced pressure to give 1.5 g of polypropylene.

[Example 50]

42.2 mg (0.15 mmol) of $Ni(cod)_2$ was weighed into a 50 mL flask and was dissolved into 15 mL of toluene. Furthermore, 42.9 mg (0.106 mmol) of AL-24 was weighed into another flask and was dissolved into 10.6 mL of toluene. 4 mL each of the $Ni(cod)_2$ in toluene solution and the AL-24 in toluene solution were weighed into another flask. The resultant solution was warmed in a water bath at 40°C and was stirred for 15 minutes to give a catalyst solution.

A 0.2 L autoclave was charged with 50 mL of toluene and 25 g of propylene. The temperature was raised to 50°C. 1 mL of the catalyst solution was added to the catalyst cylinder, and the catalyst was added to the autoclave with high-pressure nitrogen. This addition was taken as the reaction start time. After 3 minutes, the catalyst cylinder was washed with 3 mL of toluene, and the washing was added. 3 mL of the catalyst solution was added through the catalyst cylinder 7 minutes and 12 minutes after the start of the reaction. The catalyst cylinder was washed with 3 mL of toluene 17 minutes after the start of the reaction, and the washing was added to the autoclave. 60 Minutes after the start of the reaction, 3 mL of a toluene solution (0.2 M) of 1,2-butanediol was added to stop the reaction. Propylene pressure was released. The autoclave was brought back to room temperature, and toluene was distilled off. An oily polypropylene was thus obtained. The polypropylene obtained was purified by silica gel column chromatography using 100% hexane as an eluent. The resultant oily substance was dried under reduced pressure to give 0.6 g of polypropylene.

[Example 51]

42.2 mg (0.15 mmol) of $Ni(cod)_2$ was weighed into a 50 mL flask and was dissolved into 15 mL of toluene. Furthermore, 16.9 mg (0.051 mmol) of AL-2 was weighed into another flask. 5 mL of the $Ni(cod)_2$ in toluene solution was weighed out and was added to the flask containing AL-2. The resultant solution was warmed in a 40°C water bath and was stirred for 15 minutes to give a catalyst solution.

A 0.2 L autoclave was charged with 50 mL of toluene and 25 g of propylene. The temperature was raised to 70°C. 1 mL of the catalyst solution was added to the catalyst cylinder, and the catalyst was added to the autoclave with high-pressure nitrogen. This addition was taken as the reaction start time. After 3 minutes, the catalyst cylinder was washed with 3 mL of toluene, and the washing was added. 1 mL of the catalyst solution was added through the catalyst cylinder 6 minutes after the start of the reaction. The catalyst cylinder was washed with 3 mL of toluene 9 minutes after the start of the reaction, and the washing was added to the autoclave. 60 Minutes after the start of the reaction, 3 mL of a toluene solution (0.2 M) of 1,2-butanediol was added to stop the reaction. Propylene pressure was released. The autoclave was brought back to room temperature, and toluene was distilled off. An oily polypropylene was thus obtained. The polypropylene obtained was purified by silica gel column chromatography using 100% hexane as an eluent. The resultant oily substance was dried under reduced pressure to give 1.3 g of polypropylene.

[Example 52]

16.2 mg (0.059 mmol) of $Ni(cod)_2$ was weighed into a 50 mL flask. Furthermore, 26.5 mg (0.063 mmol) of AL-26 was weighed into another flask and was dissolved into 6 mL of toluene. 6 mL of the AL-26 in toluene solution was weighed out and was added to the flask containing $Ni(cod)_2$. The resultant solution was warmed in a 40°C water bath and was stirred for 15 minutes to give a catalyst solution.

A 0.2 L autoclave was charged with 40 mL of toluene and 25 g of propylene. The temperature was raised to

50°C. 1 mL of the catalyst solution was added to the catalyst cylinder, and the catalyst was added to the autoclave with high-pressure nitrogen. This addition was taken as the reaction start time. After 2 minutes, the catalyst cylinder was washed with 3 mL of toluene, and the washing was added. 2 mL of the catalyst solution was added through the catalyst cylinder 5 minutes and 8 minutes after the start of the reaction. The catalyst cylinder was washed with 3 mL of toluene 9 minutes after the start of the reaction, and the washing was added to the autoclave. 60 Minutes after the start of the reaction, 3 mL of a toluene solution (0.2 M) of 1,2-butanediol was added to stop the reaction. Propylene pressure was released. The autoclave was brought back to room temperature, and toluene was distilled off. An oily polypropylene was thus obtained. The polypropylene obtained was purified by silica gel column chromatography using 100% hexane as an eluent. The resultant oily substance was dried under reduced pressure to give 1.0 g of polypropylene.

[Example 53]

27.1 mg (0.099 mmol) of Ni(cod)$_2$ was weighed into a 50 mL flask and was dissolved into 10 mL of toluene. Furthermore, 29.8 mg (0.053 mmol) of AL-30 was weighed into another flask. 5.3 mL of the Ni(cod)$_2$ in toluene solution was weighed out and was added to the flask containing AL-30. The resultant solution was warmed in a 40°C water bath and was stirred for 15 minutes to give a catalyst solution.
A 0.2 L autoclave was charged with 40 mL of toluene and 25 g of propylene. The temperature was raised to 50°C. 1 mL of the catalyst solution was added to the catalyst cylinder, and the catalyst was added to the autoclave with high-pressure nitrogen. This addition was taken as the reaction start time. The catalyst cylinder was washed with 3 mL of toluene, and the washing was added. Through the catalyst cylinder, 3 mL of the catalyst solution was added 7 minutes after the start of the reaction, and 1 mL of the catalyst solution was added 10 minutes after the start of the reaction. 14 Minutes after the start of the reaction, the catalyst cylinder was washed with 3 mL of toluene, and the washing was added to the autoclave. 60 Minutes after the start of the reaction, 3 mL of a toluene solution (0.2 M) of 1,2-butanediol was added to stop the reaction. Propylene pressure was released. The autoclave was brought back to room temperature, and toluene was distilled off. An oily polypropylene was thus obtained. The polypropylene obtained was purified by silica gel column chromatography using 100% hexane as an eluent. The resultant oily substance was dried under reduced pressure to give 0.19 g of polypropylene.

[Example 54]

93.5 mg (0.34 mmol) of Ni(cod)$_2$ was weighed into a 50 mL flask and was dissolved into 17 mL of toluene. Furthermore, 100.2 mg (0.30 mmol) of AL-2 was weighed into another flask. 15 mL of the Ni(cod)$_2$ in toluene solution was weighed out and was added to the flask containing AL-2. The resultant solution was warmed in a 40°C water bath and was stirred for 15 minutes to give a catalyst solution.
A 0.2 L autoclave was charged with 45 mL of toluene, 1.1 mL (4.9 mmol) of MU, and 25 g of propylene. The temperature was raised to 50°C. 1 mL of the catalyst solution was added to the catalyst cylinder, and the catalyst was added to the autoclave with high-pressure nitrogen. This addition was taken as the reaction start time. 2 mL of the catalyst solution was added through the catalyst cylinder 5 minutes after the start of the reaction. After 10 minutes, the catalyst cylinder was washed with 3 mL of toluene, and the washing was added to the autoclave. 30 Minutes after the start of the reaction, 3 mL of a toluene solution (0.2 M) of 1,2-butanediol was added to stop the reaction. Propylene pressure was released. The autoclave was brought back to room temperature, and toluene was distilled off. An oily polypropylene was thus obtained. The polypropylene obtained was purified by silica gel column chromatography using 100% hexane as an eluent. The resultant oily substance was dried under reduced pressure to give 3.8 g of polypropylene.

[Example 55]

16.8 mg (0.061 mmol) of Ni(cod)$_2$ was weighed into a 50 mL flask and was dissolved into 6 mL of toluene. Furthermore, 13.2 mg (0.039 mmol) of AL-2 was weighed into another flask. 4 mL of the Ni(cod)$_2$ in toluene solution was weighed out and was added to the flask containing AL-2. The resultant solution was warmed in a 40°C water bath and was stirred for 15 minutes to give a catalyst solution.
A 0.2 L autoclave was charged with 45 mL of toluene, 1.1 mL (4.9 mmol) of MU, 0.2 mL (20 μmol) of a toluene solution (0.1 M) of TNOA, and 25 g of propylene. The temperature was raised to 50°C. 2 mL of the catalyst solution was added to the catalyst cylinder, and the catalyst was added to the autoclave with high-pressure nitrogen. This addition was taken as the reaction start time. After 5 minutes, the catalyst cylinder was washed with 3 mL of toluene, and the washing was added. 60 Minutes after the start of the reaction, 3 mL of a toluene solution (0.2 M) of 1,2-butanediol was added to stop the reaction. Propylene pressure was released. The autoclave was brought back to room temperature, and toluene was distilled off. An oily polypropylene was thus obtained. The polypropylene obtained was purified by silica gel column chromatography using 100% hexane as an eluent. The resultant oily substance was dried under reduced

pressure to give 2.7 g of polypropylene.

[Example 56]

93.8 mg (0.34 mmol) of $Ni(cod)_2$ was weighed into a 50 mL flask and was dissolved into 17 mL of toluene. Furthermore, 100.2 mg (0.30 mmol) of AL-2 was weighed into another flask. 15 mL of the $Ni(cod)_2$ in toluene solution was weighed out and was added to the flask containing AL-2. The resultant solution was warmed in a 40°C water bath and was stirred for 15 minutes to give a catalyst solution.

A 0.2 L autoclave was charged with 25 mL of toluene, 23.3 mL of a toluene solution of N-(tert-butoxycarbonyl)-5-norbomene-2-methylamine (NbocNBMA) (0.133 g/g), and 25 g of propylene. The temperature was raised to 50°C. 3 mL of the catalyst solution was added to the catalyst cylinder, and the catalyst was added to the autoclave with high-pressure nitrogen. This addition was taken as the reaction start time. 3 mL of the catalyst solution was added through the catalyst cylinder 5 minutes and 9 minutes after the start of the reaction. The catalyst cylinder was washed with 3 mL of toluene 11 minutes after the start of the reaction, and the washing was added to the autoclave. 60 Minutes after the start of the reaction, 3 mL of a toluene solution (0.2 M) of 1,2-butanediol was added to stop the reaction. Propylene pressure was released. The autoclave was brought back to room temperature, and toluene was distilled off. An oily polypropylene was thus obtained. The polypropylene obtained was purified by silica gel column chromatography using 100% hexane as an eluent. The resultant oily substance was dried under reduced pressure to give 2.1 g of polypropylene.

[Example 57]

66.4 mg (0.24 mmol) of $Ni(cod)_2$ was weighed into a 50 mL flask and was dissolved into 12 mL of toluene. Furthermore, 67.2 mg (0.20 mmol) of AL-2 was weighed into another flask. 10 mL of the $Ni(cod)_2$ in toluene solution was weighed out and was added to the flask containing AL-2. The resultant solution was warmed in a 40°C water bath and was stirred for 15 minutes to give a catalyst solution.

A 0.2 L autoclave was charged with 25 mL of toluene, 23.3 mL of a NbocNBMA in toluene solution (0.133 g/g), 1.8 mL (0.18 mmol) of a toluene solution (0.1 M) of TNOA, and 25 g of propylene. The temperature was raised to 50°C. 3 mL of the catalyst solution was added to the catalyst cylinder, and the catalyst was added to the autoclave with high-pressure nitrogen. This addition was taken as the reaction start time. 3 mL of the catalyst solution was added through the catalyst cylinder 4 minutes and 8 minutes after the start of the reaction. The catalyst cylinder was washed with 3 mL of toluene 10 minutes after the start of the reaction, and the washing was added to the autoclave. 60 Minutes after the start of the reaction, 3 mL of a toluene solution (0.2 M) of 1,2-butanediol was added to stop the reaction. Propylene pressure was released. The autoclave was brought back to room temperature, and toluene was distilled off. An oily polypropylene was thus obtained. The polypropylene obtained was purified by silica gel column chromatography using 100% hexane as an eluent. The resultant oily substance was dried under reduced pressure to give 0.74 g of polypropylene.

[Example 58]

11.9 mg (0.025 mmol) of AL-18/NiMePy was weighed into a 50 mL flask and was dissolved into 5 mL of toluene to give a catalyst solution.

A 0.2 L autoclave was charged with 45 mL of toluene and 25 g of propylene. The temperature was raised to 50°C. 2 mL of the catalyst solution was added to the catalyst cylinder, and the catalyst was added to the autoclave with high-pressure nitrogen. This addition was taken as the reaction start time. 1 mL of the catalyst solution was added through the catalyst cylinder 7 minutes and 13 minutes after the start of the reaction. The catalyst cylinder was washed with 3 mL of toluene 1 minute, 9 minutes, and 15 minutes after the start of the reaction, and the washings were added to the autoclave. 60 Minutes after the start of the reaction, 3 mL of a toluene solution (0.2 M) of 1,2-butanediol was added to stop the reaction. Propylene pressure was released. The autoclave was brought back to room temperature, and toluene was distilled off. An oily polypropylene was thus obtained. The polypropylene obtained was purified by silica gel column chromatography using 100% hexane as an eluent. The resultant oily substance was dried under reduced pressure to give 2.1 g of polypropylene.

[Example 59]

37.0 mg (0.040 mmol) of $Ni(4\text{-}tBuStb)_3$ was weighed into a 50 mL flask and was dissolved into 4 mL of toluene to form a transition metal compound solution. Furthermore, 13.1 mg (0.039 mmol) of AL-2 was weighed into another flask and was dissolved into 4 mL of toluene to form a ligand solution.

A 0.2 L autoclave was charged with 40 mL of toluene and 25 g of propylene. The temperature was raised to 50°C. 2 mL of the ligand solution was added to the catalyst cylinder, and the catalyst was added to the autoclave with

high-pressure nitrogen. Subsequently, the catalyst cylinder was washed with 3 mL of toluene, and the washing was added. Next, 2 mL of the transition metal compound solution was added to the catalyst cylinder and was added to the autoclave. This addition was taken as the reaction start time. Subsequently, the catalyst cylinder was washed with 3 mL of toluene, and the washing was added. 56 Minutes after the start of the reaction, 3 mL of a toluene solution (0.2 M) of 1,2-butanediol was added to stop the reaction. Propylene pressure was released. The autoclave was brought back to room temperature, and toluene was distilled off. An oily polypropylene was thus obtained. The polypropylene obtained was purified by silica gel column chromatography using 100% hexane as an eluent. The resultant oily substance was dried under reduced pressure to give 1.8 g of polypropylene.

[Example 60]

18.2 mg (0.070 mmol) of $Ni(acac)_2$ was weighed into a 50 mL flask and was dissolved into 7 mL of toluene. Furthermore, 16.7 mg (0.050 mmol) of AL-2 was weighed into another flask. 5 mL of the $Ni(acac)_2$ in toluene solution was weighed out and was added to the flask containing AL-2. The resultant solution was warmed in a 40°C water bath and was stirred for 15 minutes to give a catalyst solution (10 mM).

A 0.2 L autoclave was charged with 40 mL of toluene, 1 mL (0.1 mmol) of a toluene solution (0.1 M) of TNOA, and 25 g of propylene. The temperature was raised to 50°C. 2 mL of the catalyst solution was added to the catalyst cylinder, and the catalyst was added to the autoclave with high-pressure nitrogen. This addition was taken as the reaction start time. Subsequently, the catalyst cylinder was washed with 3 mL of toluene, and the washing was added. 2 mL of the catalyst solution was added through the catalyst cylinder 6 minutes after the start of the reaction. The catalyst cylinder was washed with 3 mL of toluene 8 minutes after the start of the reaction, and the washing was added to the autoclave. 60 Minutes after the start of the reaction, 3 mL of a toluene solution (0.2 M) of 1,2-butanediol was added to stop the reaction. Propylene pressure was released. The autoclave was brought back to room temperature, and toluene was distilled off. An oily polypropylene was thus obtained. The polypropylene obtained was purified by silica gel column chromatography using 100% hexane as an eluent. The resultant oily substance was dried under reduced pressure to give 0.17 g of polypropylene.

[Example 61]

17.7 mg (0.064 mmol) of $Ni(cod)_2$ was weighed into a 50 mL flask and was dissolved into 7 mL of toluene. Furthermore, 16.4 mg (0.049 mmol) of AL-2 was weighed into another flask. 5 mL of the $Ni(cod)_2$ in toluene solution was weighed out and was added to the flask containing AL-2. The resultant solution was warmed in a 40°C water bath and was stirred for 15 minutes to give a catalyst solution.

A 0.2 L autoclave was charged with 45 mL of toluene, 0.4 mL (0.040 mmol) of a toluene solution (0.1 M) of TNOA, 1.1 mL of 9-decenyl acetate (DA) (4.9 mmol), and 25 g of propylene. The temperature was raised to 50°C. 2 mL of the catalyst solution was added to the catalyst cylinder, and the catalyst was added to the autoclave with high-pressure nitrogen. This addition was taken as the reaction start time. After 2 minutes, the catalyst cylinder was washed with 3 mL of toluene, and the washing was added. 2 mL of the catalyst solution was added through the catalyst cylinder 7 minutes after the start of the reaction. The catalyst cylinder was washed with 3 mL of toluene 8 minutes after the start of the reaction, and the washing was added to the autoclave. 25 Minutes after the start of the reaction, 3 mL of a toluene solution (0.2 M) of 1,2-butanediol was added to stop the reaction. Propylene pressure was released. The autoclave was brought back to room temperature, and toluene was distilled off. An oily polypropylene was thus obtained. The polypropylene obtained was purified by silica gel column chromatography using 100% hexane as an eluent. The resultant oily substance was dried under reduced pressure to give 1.8 g of polypropylene.

[Example 62]

66.1 mg (0.24 mmol) of $Ni(cod)_2$ was weighed into a 50 mL flask and was dissolved into 12 mL of toluene. Furthermore, 67.1 mg (0.200 mmol) of AL-2 was weighed into another flask. 10 mL of the $Ni(cod)_2$ in toluene solution was weighed out and was added to the flask containing AL-2. The resultant solution was warmed in a 40°C water bath and was stirred for 14 minutes to give a catalyst solution.

A 0.2 L autoclave was charged with 45 mL of toluene, 0.4 mL (0.040 mmol) of a toluene solution (0.1 M) of TNOA, 0.9 mL of 1,2-epoxy-9-decene (EPD) (5 mmol), and 25 g of propylene. The temperature was raised to 50°C. 1 mL of the catalyst solution was added to the catalyst cylinder, and the catalyst was added to the autoclave with high-pressure nitrogen. This addition was taken as the reaction start time. After 4 minutes, the catalyst cylinder was washed with 3 mL of toluene, and the washing was added. 1 mL of the catalyst solution was added through the catalyst cylinder 10 minutes after the start of the reaction. The catalyst cylinder was washed with 3 mL of toluene 12 minutes after the start of the reaction, and the washing was added to the autoclave. 60 Minutes after the start of the reaction, 3 mL of a

toluene solution (0.2 M) of 1,2-butanediol was added to stop the reaction. Propylene pressure was released. The autoclave was brought back to room temperature, and toluene was distilled off. An oily polypropylene was thus obtained. The polypropylene obtained was purified by silica gel column chromatography using 100% hexane as an eluent. The resultant oily substance was dried under reduced pressure to give 0.57 g of polypropylene.

[Example 63]

18.2 mg (0.07 mmol) of $Ni(cod)_2$ was weighed into a 50 mL flask and was dissolved into 7 mL of toluene. Furthermore, 24.4 mg (0.05 mmol) of AL-37 was weighed into another flask. 5 mL of the $Ni(cod)_2$ in toluene solution was weighed out and was added to the flask containing AL-37. The resultant solution was warmed in a 40°C water bath and was stirred for 15 minutes to give a catalyst solution.
A 0.2 L autoclave was charged with 45 mL of toluene and 25 g of propylene. The temperature was raised to 50°C. 2 mL of the catalyst solution was added to the catalyst cylinder, and the catalyst was added to the autoclave with high-pressure nitrogen. This addition was taken as the reaction start time. After 4 minutes, the catalyst cylinder was washed with 3 mL of toluene, and the washing was added. 2 mL of the catalyst solution was added through the catalyst cylinder 10 minutes after the start of the reaction. The catalyst cylinder was washed with 3 mL of toluene 14 minutes after the start of the reaction, and the washing was added to the autoclave. 60 Minutes after the start of the reaction, 3 mL of a toluene solution (0.2 M) of 1,2-butanediol was added to stop the reaction. Propylene pressure was released. The autoclave was brought back to room temperature, and toluene was distilled off. An oily polypropylene was thus obtained. The polypropylene obtained was purified by silica gel column chromatography using 100% hexane as an eluent. The resultant oily substance was dried under reduced pressure to give 1.1 g of polypropylene.

[Example 64]

17.6 mg (0.064 mmol) of $Ni(cod)_2$ was weighed into a 50 mL flask and was dissolved into 7 mL of toluene. Furthermore, 16.8 mg (0.050 mmol) of AL-2 was weighed into another flask. 5 mL of the $Ni(cod)_2$ in toluene solution was weighed out and was added to the flask containing AL-2. The resultant solution was warmed in a 40°C water bath and was stirred for 15 minutes to give a catalyst solution.
A 0.2 L autoclave was charged with 40 mL of toluene, 4.5 mL (20 mmol) of MU, 0.4 mL (0.04 mmol) of a toluene solution (0.1 M) of TNOA, and 25 g of propylene. The temperature was raised to 50°C. 2 mL of the catalyst solution was added to the catalyst cylinder, and the catalyst was added to the autoclave with high-pressure nitrogen. This addition was taken as the reaction start time. After 3 minutes, the catalyst cylinder was washed with 3 mL of toluene, and the washing was added. 2 mL of the catalyst solution was added through the catalyst cylinder 16 minutes after the start of the reaction. The catalyst cylinder was washed with 3 mL of toluene 19 minutes after the start of the reaction, and the washing was added to the autoclave. 60 Minutes after the start of the reaction, 3 mL of a toluene solution (0.2 M) of 1,2-butanediol was added to stop the reaction. Propylene pressure was released. The autoclave was brought back to room temperature, and toluene was distilled off. An oily polypropylene was thus obtained. The polypropylene obtained was purified by silica gel column chromatography using 100% hexane as an eluent. The resultant oily substance was dried under reduced pressure to give 0.46 g of polypropylene.

[Example 65]

164.8 mg (0.60 mmol) of $Ni(cod)_2$ was weighed into a 50 mL flask and was dissolved into 15 mL of toluene to form a transition metal compound solution. Furthermore, 29.7 mg (0.060 mmol) of AL-38-2 was weighed into another flask and was dissolved into 6 mL of toluene to form a ligand solution.
A 0.2 L autoclave was charged with 35 mL of toluene and 25 g of propylene. The temperature was raised to 50°C. A total of 12.5 mL of the transition metal compound solution was added to the autoclave through the catalyst cylinder using high-pressure nitrogen. Subsequently, the catalyst cylinder was washed with 3 mL of toluene, and the washing was added. Subsequently, 3 mL of the ligand solution was added through the catalyst cylinder. This addition was taken as the reaction start time. The catalyst cylinder was washed with 3 mL of toluene 2 minutes after the start of the reaction, and the washing was added to the autoclave. 2 mL of the ligand solution was added 9 minutes after the start of the reaction. The catalyst cylinder was washed with 3 mL of toluene 10 minutes after the start of the reaction, and the washing was added to the autoclave. 60 Minutes after the start of the reaction, 3 mL of a toluene solution (0.2 M) of 1,2-butanediol was added to stop the reaction. Propylene pressure was released. The autoclave was brought back to room temperature, and toluene was distilled off. An oily polypropylene was thus obtained. The polypropylene obtained was purified by silica gel column chromatography using 100% hexane as an eluent. The resultant oily substance was dried under reduced pressure to give 1.2 g of polypropylene.

[Example 66]

165.7 mg (0.60 mmol) of $Ni(cod)_2$ was weighed into a 50 mL flask and was dissolved into 15 mL of toluene to form a transition metal compound solution. Furthermore, 29.9 mg (0.060 mmol) of AL-38-1 was weighed into another flask and was dissolved into 6 mL of toluene to form a ligand solution.

A 0.2 L autoclave was charged with 35 mL of toluene and 25 g of propylene. The temperature was raised to 50°C. A total of 12.5 mL of the transition metal compound solution was added through the catalyst cylinder using high-pressure nitrogen. Subsequently, the catalyst cylinder was washed with 3 mL of toluene, and the washing was added. Subsequently, 3 mL of the ligand solution was added through the catalyst cylinder. This addition was taken as the reaction start time. The catalyst cylinder was washed with 3 mL of toluene 4 minutes after the start of the reaction, and the washing was added to the autoclave. 60 Minutes after the start of the reaction, 3 mL of a toluene solution (0.2 M) of 1,2-butanediol was added to stop the reaction. Propylene pressure was released. The autoclave was brought back to room temperature, and toluene was distilled off. An oily polypropylene was thus obtained. The polypropylene obtained was purified by silica gel column chromatography using 100% hexane as an eluent. The resultant oily substance was dried under reduced pressure to give 0.73 g of polypropylene.

[Example 67]

44.5 mg (0.16 mmol) of $Ni(cod)_2$ was weighed into a 50 mL flask and was dissolved into 8 mL of toluene. Furthermore, 39.7 mg (0.12 mmol) of AL-2 was weighed into another flask. 6 mL of the $Ni(cod)_2$ in toluene solution was weighed out and was added to the flask containing AL-2. The resultant solution was warmed in a 40°C water bath and was stirred for 15 minutes to give a catalyst solution.

A 0.2 L autoclave was charged with 33 mL of toluene, 1.0 mL (0.1 mmol) of a toluene solution (0.1 M) of TNOA, 4.5 mL (20 mmol) of DA, and 25 g of propylene. The temperature was raised to 50°C. 2.5 mL of the catalyst solution was added to the catalyst cylinder, and the catalyst was added to the autoclave with high-pressure nitrogen. This addition was taken as the reaction start time. After 2 minutes, the catalyst cylinder was washed with 3 mL of toluene, and the washing was added. 60 Minutes after the start of the reaction, 3 mL of a toluene solution (0.2 M) of 1,2-butanediol was added to stop the reaction. Propylene pressure was released. The autoclave was brought back to room temperature, and toluene was distilled off. An oily polypropylene was thus obtained. The polypropylene obtained was purified by silica gel column chromatography using 100% hexane as an eluent. The resultant oily substance was dried under reduced pressure to give 1.6 g of polypropylene.

[Table 3]

| Ex. | Ligand | Amount of ligand (mmol) | Form of nickel | Amount of nickel (mmol) | Toluene (mL) | Propylene (g) | Type of comonomer | Amount of comonomer (mmol) | TNOA (mmol) | Temp. (°C) | Time (min) |
|---|---|---|---|---|---|---|---|---|---|---|---|
| 42 | AL-2 | 0.20 | $Ni(cod)_2$ | 0.2 | 20 | 500 | - | - | - | 50 | 60 |
| 43 | AL-2 | 0.06 | $Ni(cod)_2$ | 0.06 | 59 | 25 | - | - | - | 50 | 60 |
| 44 | AL-2 | 0.10 | $Ni(cod)_2$ | 0.1 | 59 | 25 | 4-MeSt | 14 | - | 50 | 30 |
| 45 | AL-2 | 0.15 | $Ni(cod)_2$ | 0.15 | 70 | 25 | Norbomene | 13.2 | - | 50 | 30 |
| 46 | AL-3 | 0.04 | $Ni(cod)_2$ | 0.04 | 12 | 500 | - | - | - | 50 | 60 |
| 47 | AL-3 | 0.14 | $Ni(cod)_2$ | 0.14 | 60 | 25 | - | - | - | 50 | 30 |
| 48 | AL-4 | 0.20 | $Ni(cod)_2$ | 0.2 | 20 | 500 | - | - | - | 50 | 60 |
| 49 | AL-17 | 0.04 | $Ni(cod)_2$ | 0.04 | 60 | 25 | - | - | - | 50 | 60 |
| 50 | AL-24 | 0.035 | $Ni(cod)_2$ | 0.035 | 63 | 25 | - | - | - | 50 | 60 |
| 51 | AL-2 | 0.02 | $Ni(cod)_2$ | 0.02 | 58 | 25 | - | - | - | 70 | 60 |
| 52 | AL-26 | 0.05 | $Ni(cod)_2$ | 0.05 | 51 | 25 | - | - | - | 50 | 60 |
| 53 | AL-30 | 0.05 | $Ni(cod)_2$ | 0.05 | 51 | 25 | - | - | - | 50 | 60 |
| 54 | AL-2 | 0.06 | $Ni(cod)_2$ | 0.06 | 51 | 25 | MU | 4.9 | - | 50 | 30 |
| 55 | AL-2 | 0.02 | $Ni(cod)_2$ | 0.02 | 50 | 25 | MU | 4.9 | 0.02 | 50 | 60 |
| 56 | AL-2 | 0.18 | $Ni(cod)_2$ | 0.18 | 37 | 25 | NbocNBMA | b | - | 50 | 60 |
| 57 | AL-2 | 0.18 | $Ni(cod)_2$ | 0.18 | 37 | 25 | NbocNBMA | b | 0.18 | 50 | 60 |
| 58 | AL-18 | 0.02 | (AL-18) NiMePy | 0.02 | 58 | 25 | - | - | - | 50 | 60 |
| 59 | AL-2 | 0.02 | $Ni(tBuStb)_3$ | 0.02 | 50 | 25 | - | - | - | 50 | 56 |
| 60 | AL-2 | 0.04 | $Ni(acac)_2$ | 0.04 | 51 | 25 | - | - | 0.10 | 50 | 60 |
| 61 | AL-2 | 0.04 | $Ni(cod)_2$ | 0.04 | 55 | 25 | DA | 4.9 | 0.04 | 50 | 25 |
| 62 | AL-2 | 0.04 | $Ni(cod)_2$ | 0.04 | 53 | 25 | EPD | 5.0 | 0.04 | 50 | 60 |

(continued)

| Ex. | Ligand | Amount of ligand (mmol) | Form of nickel | Amount of nickel (mmol) | Toluene (mL) | Propylene (g) | Type of comonomer | Amount of comonomer (mmol) | TNOA (mmol) | Temp. (°C) | Time (min) |
|---|---|---|---|---|---|---|---|---|---|---|---|
| 63 | AL-37 | 0.04 | $Ni(cod)_2$ | 0.04 | 55 | 25 | - | - | - | 50 | 60 |
| 64 | AL-2 | 0.04 | $Ni(cod)_2$ | 0.04 | 50 | 25 | MU | 20 | 0.04 | 50 | 60 |
| 65 | AL-38-2 | 0.05 | $Ni(cod)_2$ | 0.50 | 62 | 25 | - | - | - | 50 | 60 |
| 66 | AL-38-1 | 0.03 | $Ni(cod)_2$ | 0.50 | 57 | 25 | - | - | - | 50 | 60 |
| 67 | AL-2 | 0.05 | $Ni(cod)_2$ | 0.05 | 40 | 25 | DA | 20 | 0.10 | 50 | 60 |

b:23.3 mL of 0.133 g/g NbocNBMA in toluene solution was added.

[Table 4]

| Ex. | Ligand | Yield (g) | Activity (kg/mol/h) | Mw ($\times 10^3$) | Mw/Mn | Content (mol%) | Regularity | | |
|---|---|---|---|---|---|---|---|---|---|
| | | | | | | | mm | mr | rr |
| 42 | AL-2 | 70.6 | 350 | 30 | 3.5 | - | 28 | 55 | 18 |
| 43 | AL-2 | 15.5 | 260 | 49 | 2.2 | - | 31 | 45 | 24 |
| 44 | AL-2 | 1.1 | 21 | 36 | 2.1 | 0.3 | 32 | 45 | 23 |
| 45 | AL-2 | 1.6 | 22 | 30 | 1.7 | 0.5 | 32 | 45 | 23 |
| 46 | AL-3 | 2.3 | 58 | 63 | 2.2 | - | 36 | 43 | 21 |
| 47 | AL-3 | 12.3 | 180 | 42 | 1.9 | - | 36 | 42 | 22 |
| 48 | AL-4 | 6.2 | 31 | 3.5 | 1.7 | - | 15 | 45 | 40 |
| 49 | AL-17 | 1.5 | 37 | 66 | 2.3 | - | 25 | 45 | 30 |
| 50 | AL-24 | 0.6 | 17 | 22 | 4.3 | - | 34 | 41 | 25 |
| 51 | AL-2 | 1.3 | 65 | 8.1 | 2.2 | - | 29 | 45 | 26 |
| 52 | AL-26 | 1.0 | 20 | 13 | 2.1 | - | 28 | 42 | 30 |
| 53 | AL-30 | 0.19 | 3.8 | 2.4 | 1.7 | - | 26 | 41 | 33 |
| 54 | AL-2 | 3.8 | 130 | 17 | 2.9 | 0.3 | 31 | 45 | 24 |
| 55 | AL-2 | 2.7 | 140 | 50 | 3.6 | 0.4 | 32 | 45 | 23 |
| 56 | AL-2 | 2.1 | 12 | 18 | 2.5 | 0.02 | 31 | 45 | 24 |
| 57 | AL-2 | 0.74 | 4.1 | 21 | 2.3 | 0.02 | 31 | 45 | 24 |
| 58 | AL-18 | 2.1 | 110 | 23 | 2.3 | - | 36 | 44 | 20 |
| 59 | AL-2 | 1.8 | 100 | 49 | 2.7 | - | 32 | 45 | 23 |
| 60 | AL-2 | 0.17 | 4.3 | 3.6 | 2.2 | - | 30 | 44 | 26 |
| 61 | AL-2 | 1.8 | 110 | 29 | 4.5 | 0.2 | 31 | 45 | 24 |
| 62 | AL-2 | 0.57 | 14 | 28 | 3.6 | 0.5 | 32 | 45 | 23 |
| 63 | AL-37 | 1.1 | 27 | 3.7 | 2.2 | - | 40 | 42 | 18 |
| 64 | AL-2 | 0.46 | 12 | 56 | 4.5 | 1.4 | 32 | 45 | 23 |
| 65 | AL-38-2 | 1.2 | 24 | 1.8 | 1.8 | - | 34 | 43 | 23 |
| 66 | AL-38-1 | 0.73 | 24 | 0.9 | 1.5 | - | 26 | 44 | 30 |
| 67 | AL-2 | 1.6 | 32 | 31 | 2.3 | 2.1 | 31 | 47 | 22 |

[Comparative Example 1]

A 2.4 L autoclave was charged with 1000 mL of toluene. The temperature was raised to 50°C. Nitrogen was added so that the internal pressure of the autoclave would be 0.5 MPa. Subsequently, ethylene was added so that the internal pressure of the autoclave would be 3.0 MPa. 155 mg (0.3 mmol) of tris(pentafluorophenyl)borane was weighed into a flask and was dissolved by addition of 12 mL of toluene. 10 mL of the tris(pentafluorophenyl)borane in toluene solution was added to the catalyst cylinder and was added to the autoclave with high-pressure nitrogen. The catalyst cylinder was washed with 10 mL of toluene, and the washing was added to the autoclave with high-pressure nitrogen. Subsequently, 22 mg (0.05 mmol) of AL-2al obtained in Synthesis Example 24 was weighed out and was dissolved by addition of 10 mL of toluene. 10 mL of the AL-2al catalyst solution was added to the catalyst cylinder, and the catalyst was added to the autoclave with high-pressure nitrogen. This addition was taken as the reaction start time. The flask that had contained the catalyst solution and the syringe used to weigh out the catalyst were washed with 10 mL of toluene, and the washings were added to the autoclave through the catalyst cylinder. 60 Minutes after the start of the reaction, 10 mL of ethanol was added to stop the reaction. Ethylene pressure was released. The autoclave was brought

back to room temperature, and EKINEN (registered trademark) F-1 (1000 mL, manufactured by Japan Alcohol Trading CO., LTD.) was added. The solid that was precipitated was recovered by filtration, washed with EKINEN (registered trademark) F-1 (1000 mL × 2), and dried under reduced pressure. A polymer weighing 0.15 g was thus obtained.

[Comparative Example 2]

154 mg (0.3 mmol) of tris(pentafluorophenyl)borane was weighed into a flask and was dissolved by addition of 6 mL of toluene. Subsequently, 22 mg (0.05 mmol) of AL-2al obtained in Synthesis Example 24 was weighed out, and 5 mL of the tris(pentafluorophenyl)borane in toluene solution was added thereto. The solution was stirred at room temperature for 30 minutes to give a catalyst solution.

A 2.4 L autoclave was charged with 1000 mL of toluene. The temperature was raised to 50°C. Nitrogen was added so that the internal pressure of the autoclave would be 0.5 MPa. Subsequently, ethylene was added so that the internal pressure of the autoclave would be 3.0 MPa. 5 mL of the catalyst solution was added to the catalyst cylinder and was added to the autoclave with high-pressure nitrogen. This addition was taken as the reaction start time. Subsequently, the flask that had contained the catalyst solution and the syringe used to weigh out the catalyst were washed with 10 mL of toluene, and the washings were added to the autoclave through the catalyst cylinder. 60 Minutes after the start of the reaction, 10 mL of ethanol was added to stop the reaction. Ethylene pressure was released. The autoclave was brought back to room temperature, and EKINEN (registered trademark) F-1 (1000 mL, manufactured by Japan Alcohol Trading CO., LTD.) was added. The solid that was precipitated was recovered by filtration, washed with EKINEN (registered trademark) F-1 (1000 mL × 2), and dried under reduced pressure. A polymer weighing 0.53 g was thus obtained.

[Comparative Example 3]

92.6 mg (0.18 mmol) of tris(pentafluorophenyl)borane was weighed into a flask and was dissolved by addition of 6 mL of toluene. 13.0 mg (0.03 mmol) of AL-2al was weighed into another flask, and 5 mL of the tris(pentafluorophenyl)borane in toluene solution was added thereto. The resultant solution was stirred at room temperature for 30 minutes to give a catalyst solution (6 mM).

A 0.2 L autoclave was charged with 92 mL of toluene. The temperature was raised to 90°C. Nitrogen was added so that the internal pressure of the autoclave would be 0.5 MPa. Subsequently, ethylene was added so that the internal pressure of the autoclave would be 3.0 MPa. 0.5 mL of the catalyst solution and 2.5 mL of toluene were added to the catalyst cylinder and were added to the autoclave using 3.3 MPa nitrogen. This addition was taken as the reaction start time. 1.0 mL and 2.5 mL of the catalyst solution were added 5 minutes and 12 minutes after the start of the reaction, respectively. The catalyst cylinder was washed with 3 mL of toluene 16 minutes after the start of the reaction, and the washing was added to the autoclave. 60 Minutes after the start of the reaction, a toluene solution (0.2 M) of 1,2-butanediol was added to stop the reaction. Ethylene pressure was released. The autoclave was brought back to room temperature, and acetone (100 mL) was added. The solid that was precipitated was recovered by filtration, washed with acetone (100 mL × 2), and dried under reduced pressure. A polymer weighing 0.57 g was thus obtained.

[Comparative Example 4]

383.5 mg (0.75 mmol) of tris(pentafluorophenyl)borane was weighed into a flask and was dissolved by addition of 15 mL of toluene. 25.9 mg (0.06 mmol) of AL-2al was weighed into another flask, and 6 mL of the tris(pentafluorophenyl)borane in toluene solution was added thereto. The resultant solution was stirred at room temperature for 30 minutes to give a catalyst solution (10 mM).

A 0.2 L autoclave was charged with 91 mL of toluene and 0.3 mL (2 mmol) of tert-butyl acrylate and was further charged with 100 μL of a toluene solution (0.1 M) of TNOA. The temperature was raised to 90°C. Nitrogen was added so that the internal pressure of the autoclave would be 0.5 MPa. Subsequently, ethylene was added so that the internal pressure of the autoclave would be 3.0 MPa. 2.5 mL of the catalyst solution was added to the catalyst cylinder and was added to the autoclave using 3.3 MPa nitrogen. This addition was taken as the reaction start time. 2.5 mL of the catalyst solution was added 3 minutes after the start of the reaction. The catalyst cylinder was washed with 3 mL of toluene 6 minutes after the start of the reaction, and the washing was added to the autoclave. 60 Minutes after the start of the reaction, a toluene solution (0.2 M) of 1,2-butanediol was added to stop the reaction. Ethylene pressure was released. The autoclave was brought back to room temperature, and acetone (100 mL) was added. The solid that was precipitated was recovered by filtration, washed with acetone (100 mL × 2), and dried under reduced pressure. A polymer weighing 0.016 g was thus obtained.

[Comparative Example 5]

384.0 mg (0.75 mmol) of tris(pentafluorophenyl)borane was weighed into a flask and was dissolved by addition of 15 mL of toluene. 26.0 mg (0.06 mmol) of AL-2al was weighed into another flask, and 6 mL of the tris(pentafluorophenyl)borane in toluene solution was added thereto. The resultant solution was stirred at room temperature for 30 minutes to give a catalyst solution (10 mM).

A 0.2 L autoclave was charged with 50 mL of toluene and 25 g of propylene. The temperature was raised to 50°C. 2.5 mL of the catalyst solution was added to the catalyst cylinder, and the catalyst was added to the autoclave with high-pressure nitrogen. This addition was taken as the reaction start time. The catalyst cylinder was washed with 3 mL of toluene 4 minutes after the start of the reaction, and the washing was added to the autoclave. 2.5 mL of the catalyst solution was added through the catalyst cylinder 8 minutes after the start of the reaction. The catalyst cylinder was washed with 3 mL of toluene 10 minutes after the start of the reaction, and the washing was added to the autoclave. 60 Minutes after the start of the reaction, 3 mL of a toluene solution (0.2 M) of 1,2-butanediol was added to stop the reaction. Propylene pressure was released. The autoclave was brought back to room temperature, and toluene was distilled off. An oily polypropylene was thus obtained. The polypropylene obtained was purified by silica gel column chromatography using 100% hexane as an eluent. The resultant oily substance was dried under reduced pressure to give 0.021 g of polypropylene.

[Comparative Example 6]

5 mL of a catalyst solution (20 mM/ B-27DM) was prepared in the same manner as in Example 3, except that the amount of $Ni(cod)_2$ was changed to 41 mg (0.15 mmol), $Ni(cod)_2$ was dissolved into 15 mL of toluene, 56 mg (0.10 mmol) of B-27DM was used instead of AL-2, and 5 mL of the $Ni(cod)_2$ in toluene solution was added to B-27DM.

A 2.4 L autoclave was charged with 1000 mL of toluene. 5.8 mL (40 mmol) of tBA was added to the catalyst cylinder and was added to the autoclave with 0.5 MPa nitrogen. The catalyst cylinder was washed with 10 mL of toluene, and the washing was added to the autoclave. 1.0 mL of a toluene solution (0.1 M) of TNOA was added to the catalyst cylinder and was added to the autoclave with 0.5 MPa nitrogen. The catalyst cylinder was washed with 10 mL of toluene, and the washing was added to the autoclave. The temperature was raised to 90°C. Nitrogen was added so that the internal pressure of the autoclave would be 0.5 MPa. Subsequently, ethylene was added so that the internal pressure of the autoclave would be 3.0 MPa. 2.5 mL of the catalyst solution was added to the catalyst cylinder, and the catalyst was added to the autoclave with 3.5 MPa nitrogen. This addition was taken as the reaction start time. After the start of the reaction, the catalyst cylinder was washed with 10 mL of toluene. 30 Minutes after the start of the reaction, 10 mL of a toluene solution (0.2 M) of 1,2-butanediol was added to stop the reaction. Ethylene pressure was released. The autoclave was brought back to room temperature, and acetone (1000 mL) was added. The solid that was precipitated was recovered by filtration, washed with acetone (1000 mL $\times$ 2), and dried under reduced pressure. A polymer weighing 31.8 g was thus obtained.

Table 5 describes the polymerization conditions in Comparative Examples 1 to 6. Table 6 describes the results obtained and the results of analysis of the polymers.

[Table 5]

| Comp. Ex. | Catalyst | Amount of catalyst | $B(C_6F_5)_3$ | Toluene | Ethylene | Propylene | Comonomer | | Temp. | Time |
|---|---|---|---|---|---|---|---|---|---|---|
| | | (mmol) | (mmol) | (mL) | (MPa) | (g) | Type of comonomer | Amount (mmol) | (°C) | (min) |
| 1 | AL-2a1 | 0.05 | 0.25 | 1040 | 2.5 | - | - | - | 50 | 60 |
| 2 | AL-2a1 | 0.05 | 0.25 | 1015 | 2.5 | - | - | - | 50 | 60 |
| 3 | AL-2a1 | 0.024 | 0.12 | 102 | 2.5 | - | - | - | 90 | 60 |
| 4 | Al.-2a1 | 0.05 | 0.25 | 99 | 2.5 | - | tBA | 2 | 90 | 60 |
| 5 | AL-2a1 | 0.05 | 0.25 | 61 | - | 25 | - | - | 50 | 60 |
| 6 | B-27DM/Ni | 0.05 | - | 1034 | 2.5 | - | tBA | 40 | 90 | 30 |

[Table 6]

| Comp. Ex. | Ligand | Yield | Activity | Mw | Mw/Mn | Comonomer content | Regularity | | |
|---|---|---|---|---|---|---|---|---|---|
| | | (g) | (kg/mol/h) | (× $10^3$) | | (mol%) | mm | mr | rr |
| 1 | AL-2al | 0.15 | 2.9 | 6.7 | 2.9 | - | - | - | - |
| 2 | AL-2al | 0.53 | 11 | 6.4 | 2.3 | - | - | - | - |
| 3 | AL-2al | 0.57 | 24 | 53 | 8.8 | - | - | - | - |
| 4 | AL-2al | 0.016 | 0.3 | n.m. | n.m. | n.m. | - | - | - |
| 5 | AL-2al | 0.021 | 0.4 | n.m. | n.m. | - | n.m. | n.m. | n.m. |
| 6 | B-27DM | 31.8 | 1300 | 77 | 2.0 | 1.1 | - | - | - |
| In the table, n.m. indicates not measured. | | | | | | | | | |

**Claims**

1. An olefin polymerization catalyst composition comprising a compound represented by the general formula (A) below and a transition metal compound represented by the general formula (B) or (C) below,

[Chem. 43]

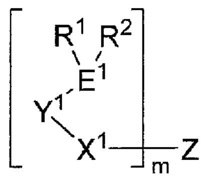

General formula (A)

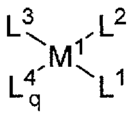

General formula (B)

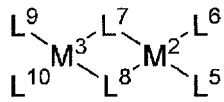

General formula (C)

[in the formula (A),

$X^1$ represents an oxygen atom or a sulfur atom,
$E^1$ represents a nitrogen atom, a phosphorus atom, an arsenic atom, or an antimony atom,
$R^1$ and $R^2$ each independently represent a hydrogen atom or a substituted or unsubstituted C1-C20 hydrocarbon group (except a methyl group) optionally containing at least one heteroatom,
$Y^1$ is a substituted or unsubstituted C1-C5 divalent saturated hydrocarbon group optionally containing at least one heteroatom,
m is an integer greater than or equal to 1 and less than or equal to the valence of Z, and
Z is a hydrogen atom, a leaving group, or a cation having a valence of 1 or more and 4 or less],
[in the formula (B),
$M^1$ represents a nickel atom or a palladium atom,
$L^1$, $L^2$, $L^3$, and $L^4$ each represent a ligand coordinated to $M^1$,
q is 0, 1, or 2, and
$L^1$ and $L^2$, or $L^3$ and $L^4$ are optionally bonded to each other to form a ring including $M^1$, and the minimum number of ring members of the ring is 5 to 10 including $M^1$], and
[in the formula (C),
$M^2$ and $M^3$ each independently represent a nickel atom or a palladium atom,
$L^5$, $L^6$, $L^7$, $L^8$, $L^9$, and $L^{10}$ each represent a ligand coordinated to $M^2$ or $M^3$,
$L^5$ and $L^6$ are optionally bonded to each other to form a ring including $M^2$, the minimum number of ring members of the ring is 5 to 10 including $M^2$, $L^9$ and $L^{10}$ are optionally bonded to each other to form a ring including $M^3$, and the minimum number of ring members of the ring is 5 to 10 including $M^3$].

2. A metal complex represented by the general formula (D) below:

[Chem. 44]

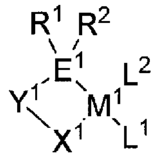

General formula (D)

[in the formula (D),
$R^1$, $R^2$, $X^1$, $Y^1$, $E^1$, $M^1$, $L^1$, and $L^2$ are the same as defined in claim 1].

**3.** The olefin polymerization catalyst composition according to claim 1, wherein the general formula (A) is represented by the general formula (E) below:

[Chem. 45]

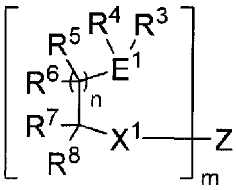

General formula (E)

[in the formula (E),

$R^3$ and $R^4$ each independently represent a hydrogen atom or a substituted or unsubstituted C2-C20 hydrocarbon group optionally containing at least one heteroatom,
$R^5$, $R^6$, $R^7$, and $R^8$ each independently represent an atom or a group selected from the group consisting of (i) to (iv) below:

(i) hydrogen atom,
(ii) halogen atom,
(iii) C1-C30 hydrocarbon group optionally containing at least one heteroatom, and
(iv) $OR^b$, $CO_2R^b$, $CO_2M'$, $C(O)N(R^a)_2$, $C(O)R^b$, $SR^b$, $SO_2R^b$, $SOR^b$, $OSO_2R^b$, $P(O)(OR^b)_{2-y}(R^a)_y$, CN, $NHR^a$, $N(R^b)_2$, $Si(OR^a)_{3-x}(R^a)_x$, $OSi(OR^a)_{3-x}(R^a)_x$, $NO_2$, $SO_3M'$, $PO_3M'_2$, $P(O)(OR^b)_2M'$, and epoxy-containing groups (wherein $R^a$ independently at each occurrence represents hydrogen or a C1-C20 hydrocarbon group, $R^b$ independently at each occurrence represents a C1-C20 hydrocarbon group, M' represents an alkali metal, an alkaline earth metal, ammonium, quaternary ammonium, or phosphonium, x represents an integer of 0 to 3, and y represents an integer of 0 to 2), and adjacent groups of $R^5$, $R^6$, $R^7$, and $R^8$ are optionally bonded to one another to form a 5- to 8-membered alicyclic or aromatic ring, or a 5- to 8-membered heterocyclic ring containing at least one heteroatom selected from oxygen atom, nitrogen atom, and sulfur atom,

n is an integer of 0 to 4, and
$X^1$, $E^1$, m, and Z are the same as defined in claim 1].

**4.** The metal complex according to claim 2, wherein the general formula (D) is represented by the general formula (F) below:

[Chem. 46]

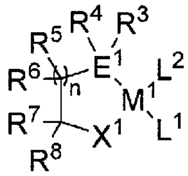

General formula (F)

[in the formula (F),

$R^3$, $R^4$, $R^5$, $R^6$, $R^7$, $R^8$, n, $X^1$, and $E^1$ are the same as defined in claim 3, and
$M^1$, $L^1$, and $L^2$ are the same as defined in claim 1].

**5.** The olefin polymerization catalyst composition according to claim 3, wherein at least one of $R^7$ or $R^8$ is an atom or a group selected from the group consisting of (i), (iii), and (iv).

**6.** The metal complex according to claim 4, wherein at least one of $R^7$ or $R^8$ is an atom or a group selected from the group consisting of (i), (iii), and (iv).

**7.** The olefin polymerization catalyst composition according to claim 3 or 5, wherein $R^7$ is an atom or a group selected from the group consisting of (i) and (iii), and $R^8$ is an atom or a group selected from the group consisting of (i), (iii), $CO_2R^b$, $C(O)N(R^a)_2$, $C(O)R^b$, $SO_2R^b$, and $P(O)(OR^b)_{2-y}(R^a)_y$ (wherein $R^a$, $R^b$, and y are the same as defined in claim 3).

**8.** The metal complex according to claim 4 or 6, wherein $R^7$ is an atom or a group selected from the group consisting of (i) and (iii), and $R^8$ is an atom or a group selected from the group consisting of (i), (iii), $CO_2R^b$, $C(O)N(R^a)_2$, $C(O)R^b$, $SO_2R^b$, and $P(O)(OR^b)_{2-y}(R^a)_y$ (wherein $R^a$, $R^b$, and y are the same as defined in claim 3).

**9.** The olefin polymerization catalyst composition according to any one of claims 3, 5, and 7, wherein at least one of $R^5$ or $R^6$ is an atom or a group selected from the group consisting of (i), (iii), and (iv).

**10.** The metal complex according to any one of claims 4, 6, and 8, wherein at least one of $R^5$ or $R^6$ is an atom or a group selected from the group consisting of (i), (iii), and (iv).

**11.** The olefin polymerization catalyst composition according to any one of claims 3, 5, 7, and 9, wherein at least one of $R^5$ or $R^6$ is a hydrogen atom.

**12.** The metal complex according to any one of claims 4, 6, 8, and 10, wherein at least one of $R^5$ or $R^6$ is a hydrogen atom.

**13.** The olefin polymerization catalyst composition according to any one of claims 1, 3, 5, 7, 9, and 11, wherein $X^1$ is an oxygen atom.

**14.** The metal complex according to any one of claims 2, 4, 6, 8, 10, and 12, wherein $X^1$ is an oxygen atom.

**15.** The olefin polymerization catalyst composition according to any one of claims 1, 3, 5, 7, 9, 11, and 13, wherein $E^1$ is a nitrogen atom or a phosphorus atom.

**16.** The metal complex according to any one of claims 2, 4, 6, 8, 10, 12, and 14, wherein $E^1$ is a nitrogen atom or a phosphorus atom.

**17.** The olefin polymerization catalyst composition according to any one of claims 3, 5, 7, 9, 11, 13, and 15, wherein n is an integer of 0 to 2.

**18.** The metal complex according to any one of claims 4, 6, 8, 10, 12, 14, and 16, wherein n is an integer of 0 to 2.

**19.** The olefin polymerization catalyst composition according to any one of claims 3, 5, 7, 9, 11, 13, 15, and 17, wherein n is 1.

**20.** The metal complex according to any one of claims 4, 6, 8, 10, 12, 14, 16, and 18, wherein n is 1.

**21.** The olefin polymerization catalyst composition according to any one of claims 1, 3, 5, 7, 9, 11, 13, 15, 17, and 19, wherein $M^1$, $M^2$, and $M^3$ are nickel atoms.

**22.** The metal complex according to any one of claims 2, 4, 6, 8, 10, 12, 14, 16, 18, and 20, wherein $M^1$ is a nickel atom.

**23.** An olefin polymerization catalyst comprising the olefin polymerization catalyst composition described in any one of claims 1, 3, 5, 7, 9, 11, 13, 15, 17, 19, and 21.

**24.** An olefin polymerization catalyst comprising the metal complex described in any one of claims 2, 4, 6, 8, 10, 12, 14, 16, 18, 20, and 22.

**25.** A method for producing an olefin polymer comprising polymerizing or copolymerizing an olefin in the presence of the olefin polymerization catalyst described in claim 23 or 24.

**26.** The method for producing an olefin polymer according to claim 25, wherein the olefin is copolymerized with at least one monomer selected from polar group-containing monomers and nonpolar cyclic olefins.

## INTERNATIONAL SEARCH REPORT

International application No.
**PCT/JP2022/016854**

**A. CLASSIFICATION OF SUBJECT MATTER**

***C08F 4/70***(2006.01)i; ***C08F 4/80***(2006.01)i; ***C08F 210/02***(2006.01)i
FI: C08F4/80; C08F4/70; C08F210/02

According to International Patent Classification (IPC) or to both national classification and IPC

**B. FIELDS SEARCHED**

Minimum documentation searched (classification system followed by classification symbols)

C08F4/70; C08F4/80; C08F210/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 2000-239313 A (MITSUI CHEMICALS INC) 05 September 2000 (2000-09-05)<br>entire text | 1, 3, 5, 7, 9, 11, 13, 15, 17, 19, 21, 23-26 |
| A | JP 9-316121 A (TONEN CHEM CORP) 09 December 1997 (1997-12-09)<br>entire text | 1, 3, 5, 7, 9, 11, 13, 15, 17, 19, 21, 23-26 |
| A | WO 2018/021446 A1 (UNIV TOKYO) 01 February 2018 (2018-02-01)<br>entire text | 1, 3, 5, 7, 9, 11, 13, 15, 17, 19, 21, 23-26 |
| A | WO 2007/148136 A2 (THE UNIVERSITY OF NOTTINGHAM) 27 December 2007 (2007-12-27)<br>whole document | 1, 3, 5, 7, 9, 11, 13, 15, 17, 19, 21, 23-26 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 June 2022** | **28 June 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2022/016854**

**Box No. III Observations where unity of invention is lacking (Continuation of item 3 of first sheet)**

This International Searching Authority found multiple inventions in this international application, as follows:

(Invention 1) Claims 1, 3, 5, 7, 9, 11, 13, 15, 17, 19, 21, and 23-26

Claims 1, 3, 5, 7, 9, 11, 13, 15, 17, 19, 21, 23, and 25-26 have the special technical feature of a catalyst composition for olefin polymerization, the catalyst composition containing a compound represented by general formula (A) and a transition metal compound represented by general formula (B) or (C), and are thus classified as invention 1.

Also, claim 24 is not dependent on claim 1, but is inventively related to claim 1, and is thus classified as invention 1.

(Invention 2) Claims 2, 4, 6, 8, 10, 12, 14, 16, 18, 20, and 22

Claims 2, 4, 6, 8, 10, 12, 14, 16, 18, 20, and 22 are not dependent on claim 1. Furthermore, claims 2, 4, 6, 8, 10, 12, 14, 16, 18, 20, and 22 are not substantially identical to or similarly closely related to any of the claims classified as invention 1.

In addition, claims 2, 4, 6, 8, 10, 12, 14, 16, 18, 20, and 22 have the special technical feature of a metal complex represented by general formula (D), and are thus classified as invention 2.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **claims 1, 3, 5, 7, 9, 11, 13, 15, 17, 19, 21, 23-26**

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

**INTERNATIONAL SEARCH REPORT**
**Information on patent family members**

International application No.
**PCT/JP2022/016854**

| Patent document cited in search report | Publication date (day/month/year) | Patent family member(s) | Publication date (day/month/year) |
|---|---|---|---|
| JP 2000-239313 A | 05 September 2000 | (Family: none) | |
| JP 9-316121 A | 09 December 1997 | (Family: none) | |
| WO 2018/021446 A1 | 01 February 2018 | US 2019/0263945 A1<br>whole document<br>EP 3476858 A1<br>CN 109601002 A | |
| WO 2007/148136 A2 | 27 December 2007 | US 2009/0198038 A1<br>EP 2049551 A2 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4698403 A
- JP S6414217 A
- US 20070049712
- WO 2010050256 A
- WO 2001092342 A

### Non-patent literature cited in the description


- **MECKING, S. ; JOHNSON, L. K. ; WANG, L. ; BROOKHART, M. J.** *Am. Chem. Soc.,* 1998, vol. 120, 888-899
- **ITTEL, S. D. ; JOHNSON, L. K. ; BROOKHART, M.** *Chem. Rev.,* 2000, vol. 100, 1169-1203
- **GIBSON, V. C. ; TOMOV, A. ; WHITE, A. J. P. ; WILLIAMS, D. J.** *Chem. Commun.,* 2001, 719-720
- **DRENT, E. ; DIJK, R. ; VAN GINKEL, R. ; VAN OORT, B ; PUGH, R. I.** *Chem. Commun.,* 2002, 744-745
- **KOCHI, T. ; YOSHIMURA, K. ; NOZAKI, K.** *Dalton-Trans.,* 2006, 25-27
- **XIN. B. S. ; SATO, N. ; TANNA, A. ; OISHI, Y. ; KONISHI, Y. ; SHIMIZU, F. J.** *Am. Chem. Soc.,* 2017, vol. 139, 3611-3614
- **MUELLER, U. ; KEIM, W. ; KRUEGER, C. ; BETZ, P.** *Angew. Chem. Int. Ed. Engl.,* 1989, vol. 28, 1011-1013
- **H.-F. KLEIN et al.** *Inorganica Chimica Acta,* 2005, vol. 358, 4394-4402
- *Macromolecules,* 1999, vol. 32, 1620
- *Chem. Commun.,* 2017, vol. 53, 2630